(19) **Europäisches Patentamt / European Patent Office / Office européen des brevets**

(11) **EP 4 654 746 A1**

(12) # EUROPEAN PATENT APPLICATION
published in accordance with Art. 153(4) EPC

(43) Date of publication:
**26.11.2025 Bulletin 2025/48**

(21) Application number: **24755958.6**

(22) Date of filing: **30.01.2024**

(51) International Patent Classification (IPC):
*H04W 92/18* (2009.01)   *H04W 72/12* (2023.01)

(52) Cooperative Patent Classification (CPC):
**H04L 5/00; H04W 72/12; H04W 72/25; H04W 72/40; H04W 92/18**

(86) International application number:
**PCT/CN2024/074599**

(87) International publication number:
**WO 2024/169584 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023  CN 202310153386**
**07.04.2023  CN 202310412871**

(71) Applicant: **Huawei Technologies Co., Ltd.**
**Shenzhen, Guangdong 518129 (CN)**

(72) Inventors:
• **ZHANG, Yi**
**Shenzhen, Guangdong 518129 (CN)**
• **QI, Hong**
**Shenzhen, Guangdong 518129 (CN)**
• **YI, Feng**
**Shenzhen, Guangdong 518129 (CN)**
• **SU, Hongjia**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND RELATED DEVICE**

(57)    This application provides a communication method and a related device, to enable, in a process of transmitting N pieces of sidelink information in N time units, a receiver of the sidelink information to transmit, in a PSFCH by using N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency. In the method, a first communication apparatus sends $i^{th}$ sidelink information in an $i^{th}$ time unit in N time units. The sidelink information includes an S-SSB and/or an SL-CSI-RS, a value of i is 0 to N-1, and N is an integer greater than 1. The first communication apparatus receives first indication information on a $j^{th}$ group of symbols in N groups of symbols. The first indication information indicates $j^{th}$ sidelink information, a value of j is 0 to N-1, the N time units are in one-to-one correspondence with the N groups of symbols, and the N groups of symbols are located in a PSFCH.

First communication apparatus → Second communication apparatus

S701. Send $i^{th}$ sidelink information in an $i^{th}$ time unit in N time units

S702. Send first indication information on a $j^{th}$ group of symbols in N groups of symbols

FIG. 7

## Description

This application claims priorities to Chinese Patent Application No. 202310153386.9, filed with the China National Intellectual Property Administration on February 16, 2023 and entitled "COMMUNICATION METHOD AND RELATED DEVICE", and to Chinese Patent Application No. 202310412871.3, filed with the China National Intellectual Property Administration on April 7, 2023 and entitled "COMMUNICATION METHOD AND RELATED DEVICE", which are incorporated herein by reference in their entireties.

## TECHNICAL FIELD

This application relates to the field of communication technologies, and in particular, to a communication method and a related device.

## BACKGROUND

In a communication system, data communication may be performed between different terminal devices via a network device. In addition, different terminal devices may directly communicate with each other without a network device. Such a communication manner may be referred to as sidelink (sidelink, SL) communication. In an SL communication process, how to perform feedback for a reference signal/synchronization signal and reduce communication complexity is a technical problem that urgently needs to be resolved.

## SUMMARY

This application provides a communication method and a related device, to enable, in a process of transmitting N pieces of sidelink information in N time units, a receiver of the sidelink information to transmit, in a PSFCH by using N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

A first aspect of this application provides a communication method. The method is applied to a first communication apparatus. The first communication apparatus is a terminal device, or the first communication apparatus is a part of components (for example, a processor, a chip, or a chip system) in the terminal device, or the first communication apparatus may be a logical module or software that can implement all or a part of functions of the terminal device. In the method, the first communication apparatus sends $i^{th}$ sidelink information in an $i^{th}$ time unit in N time units. The sidelink information includes a sidelink synchronization signal block (sidelink synchronization signal block, S-SSB or SL-SSB) and/or a sidelink channel state information reference signal (sidelink channel state information reference signal, SL-CSI-RS), a value of i is 0 to N-1, and N is an integer greater than 1. The first communication apparatus receives first indication information on a $j^{th}$ group of symbols in N groups of symbols. The first indication information indicates $j^{th}$ sidelink information, a value of j is 0 to N-1, the N time units are in one-to-one correspondence with the N groups of symbols, and the N groups of symbols are located in a physical sidelink feedback channel (physical sidelink feedback channel, PSFCH).

Based on the foregoing technical solution, after the first communication apparatus sends the $i^{th}$ sidelink information in the $i^{th}$ time unit in the N time units, the first communication apparatus receives, on the $j^{th}$ group of symbols in the N groups of symbols, the first indication information indicating the $j^{th}$ sidelink information. The N time units are in one-to-one correspondence with the N groups of symbols, and the N groups of symbols are located in the PSFCH. In other words, after a receiver of the sidelink information receives one or more pieces of sidelink information, the receiver may send, in the PSFCH, indication information indicating one of the pieces of sidelink information, and a correspondence exists between a symbol used to carry the indication information and a time unit used to carry the one of the pieces of sidelink information. Therefore, in a process of transmitting N pieces of sidelink information in the N time units, the receiver of the sidelink information may transmit, in the PSFCH by using the N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

In this application, the sidelink synchronization signal block may be replaced with a sidelink synchronization signal/physical broadcast channel block (sidelink synchronization signal/physical broadcast channel block, SL-SS/PBCH block) (or denoted as an SL-SS/PBCH, an S-SSB, an SL-SSB, or the like).

It may be understood that, that the N time units are in one-to-one correspondence with the N groups of symbols includes that the $i^{th}$ time unit in the N time units corresponds to an $i^{th}$ group of symbols in the N groups of symbols, and a $j^{th}$ time unit in the N time units corresponds to the $j^{th}$ group of symbols in the N groups of symbols. Optionally, a $k^{th}$ group of symbols in the N groups of symbols may appear below. Correspondingly, that the N time units are in one-to-one correspondence with the N groups of symbols further includes that a $k^{th}$ time unit in the N time units corresponds to the $k^{th}$ group of symbols in the N groups of symbols.

Optionally, when the $i^{th}$ sidelink information is the S-SSB, each of the N time units may be a slot, that is, different S-SSBs are carried in different slots.

Optionally, when the $i^{th}$ sidelink information is the SL-CSI-RS, each of the N time units may be one symbol, that is, different SL-CSI-RSs are carried on different symbols.

Optionally, when the $i^{th}$ sidelink information is the SL-CSI-RS, each of the N time units may be two or more symbols, that is, different SL-CSI-RSs are carried on different symbols, and each time unit has a symbol used to carry an SL-CSI-RS, and another symbol used to carry at least one of automatic gain control (automatic gain control, AGC), a gap (GAP), or the like.

It should be noted that each of the N groups of symbols includes one or more PSFCH symbols, and the one or more PSFCH symbols are used to carry indication information (for example, the first indication information) indicating sidelink information. Optionally, each of the N groups of symbols further includes another symbol, and the another symbol is used to carry at least one of AGC, a GAP, or the like.

In a possible implementation of the first aspect, in time domain, the N groups of symbols are located after the last time unit in the N time units.

Optionally, the sidelink information (including the S-SSB and/or the SL-CSI-RS) is a periodic signal, that is, the first communication apparatus may send the $i^{th}$ sidelink information for a plurality of times in different N time units. The N symbols are located after the last time unit in N time units in a current period, and the N symbols are located before the first time unit in N time units in a next period.

Based on the foregoing technical solution, in time domain, the N groups of symbols are located after the last time unit in the N time units, so that the first communication apparatus receives/detects, on the N groups of symbols after sidelink information is sent in the N time units, indication information corresponding to the sidelink information. In this way, the sidelink information and the indication information are transmitted on a sidelink in a time division manner.

In a possible implementation of the first aspect, at least two of the N groups of symbols are located in a same slot.

Based on the foregoing technical solution, in the N groups of symbols that are in one-to-one correspondence with the N time units, at least two groups of symbols are located in a same slot, that is, at least two groups of symbols are configured in one slot to carry indication information, so that at least two pieces of sidelink information are indicated in a single slot including a PSFCH, thereby improving an information bearer capability of the single slot including a PSFCH, and improving communication efficiency.

In a possible implementation of the first aspect, the method further includes: The first communication apparatus sends or receives direct communication request (direct communication request, DCR) information on a $j^{th}$ time domain resource in N time domain resources. The N time domain resources are in one-to-one correspondence with the N time units, or the N time domain resources are in one-to-one correspondence with the N groups of symbols.

It may be understood that, in time domain, the N time domain resources are located after the last group of symbols of the N groups of symbols.

Based on the foregoing technical solution, after the first communication apparatus receives the $j^{th}$ sidelink information, the first communication apparatus sends or receives the DCR information on the $j^{th}$ time domain resource in the N time domain resources. The N time domain resources are in one-to-one correspondence with the N time units, or the N time domain resources are in one-to-one correspondence with the N groups of symbols, so that the DCR information can be transmitted on a corresponding resource, to reduce communication complexity and improve communication efficiency.

In a possible implementation of the first aspect, at least two of a beam direction used in the $j^{th}$ time unit, a beam direction used on the $j^{th}$ time domain resource, and a beam direction used on the $j^{th}$ group of symbols are the same.

Optionally, the first communication apparatus is used as a transmitter of the $i^{th}$ sidelink information and a receiver of the first indication information corresponding to the $i^{th}$ sidelink information, and at least two of a beam direction used by the first communication apparatus in the $j^{th}$ time unit, a beam direction used by the first communication apparatus on the $j^{th}$ time domain resource, and a beam direction used by the first communication apparatus on the $j^{th}$ group of symbols are the same. In addition, for example, a receiver of the $i^{th}$ sidelink information and a transmitter of the first indication information is a second communication apparatus. A transmit beam direction of the first communication apparatus in the $j^{th}$ time unit is opposite (or matches) a receive beam direction of the second communication apparatus in the $j^{th}$ time unit; and/or a receive beam direction of the first communication apparatus on the $j^{th}$ group of symbols is opposite (or matches) a transmit beam direction of the second communication apparatus on the $j^{th}$ group of symbols, and/or a transmit beam direction of the first communication apparatus on the $j^{th}$ time domain resource is opposite (or matches) a receive beam direction of the second communication apparatus on the $j^{th}$ time domain resource; and/or a receive beam direction of the first communication apparatus on the $j^{th}$ time domain resource is opposite (or matches) a transmit beam direction of the second communication apparatus on the $j^{th}$ time domain resource.

Based on the foregoing technical solution, at least two of the N time units, the N groups of symbols, and the N time domain resources are in one-to-one correspondence. Correspondingly, at least two of the beam direction used in the $j^{th}$ time unit, the beam direction used on the $j^{th}$ time domain resource, and the beam direction used on the $j^{th}$ group of symbols are the same. Therefore, in a sidelink communication process, at least two of sidelink information including an S-SSB and/or a CSI-RS, indication information corresponding to the sidelink information, and DCR information can be transmitted based on a same beam direction, so that the foregoing technical solution can be applied to a beam-based communication system, and beam management can be implemented by using the one-to-one correspondence between the foregoing at least two.

Optionally, the beam-based communication system may be a communication system whose communication band includes a high frequency, for example, a communication system whose communication band includes a frequency range 2 (frequency range 2, FR2), that is, the frequency range is 24250 megahertz (MHz) to 52600 MHz, or in other words, the frequency range is in a millimeter-wave band.

Optionally, in different time units in the N time units (or different groups of symbols in the N groups of symbols, or different time domain resources in the N time domain resources), a communication apparatus (for example, the first communication apparatus, and the second communication apparatus that may appear below) uses different beam directions.

In a possible implementation of the first aspect, the method further includes: The first communication apparatus sends or receives resource indication information associated with the DCR information. The resource indication information indicates a resource that carries response information of the DCR information.

Optionally, the resource indication information indicates that the resource that carries the response information of the DCR information includes at least one of the following: a time-domain resource position, a frequency-domain resource position, a time domain resource window, or a frequency domain resource window.

Optionally, the response information of the DCR information may include a direct communication accept (direct communication accept, DCA) message, a security establishment message/information, or the like.

Based on the foregoing technical solution, the first communication apparatus may further send or receive the resource indication information associated with the DCR information. The resource indication information indicates the resource that carries the response information of the DCR information, so that the first communication apparatus and another communication apparatus (for example, the second communication apparatus) can determine, based on the resource indication information, the resource that carries the response information of the DCR.

In a possible implementation of the first aspect, the resource indication information is carried in sidelink control information (sidelink control information, SCI) and/or a medium access control control element (medium access control control element, MAC CE).

Optionally, the SCI may include $1^{st}$-stage SCI and/or $2^{nd}$-stage SCI.

Based on the foregoing technical solution, the resource indication information indicating the resource that carries the response information of the DCR information may be carried in the SCI and/or the MAC CE, to improve flexibility of implementing the solution.

In a possible implementation of the first aspect, the method further includes: The first communication apparatus receives second indication information on a $k^{th}$ group of symbols in the N groups of symbols. The second indication information indicates $k^{th}$ sidelink information, a value of k is 0 to N-1, and k is different from j.

Based on the foregoing technical solution, the first communication apparatus may further receive the second indication information on the $k^{th}$ group of symbols that is in the N groups of symbols and that is different from the $j^{th}$ group of symbols, and the second indication information indicates the $k^{th}$ sidelink information. Therefore, as a transmitter of the N pieces of sidelink information, the first communication apparatus can receive at least two pieces of indication information respectively corresponding to at least two pieces of sidelink information, to improve communication flexibility.

Optionally, the first indication information and the second indication information are from a same communication apparatus (for example, the second communication apparatus). Correspondingly, when the foregoing solution is applied to a beam-based communication system, in this implementation, a same communication apparatus can indicate at least two beam directions respectively corresponding to at least two pieces of sidelink information. The same communication apparatus is supported in indicating a plurality of available beam directions, so that the plurality of available beam directions are used in subsequent beam maintenance, beam failure recovery, or the like.

Optionally, the first indication information and the second indication information are from different communication apparatuses, so that the first communication apparatus implements sidelink communication processes with the different communication apparatuses based on the sidelink information sent in the N time units.

In a possible implementation of the first aspect, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

It should be noted that the signal quality in this application may include at least one of a received signal strength indicator (received signal strength indicator, RSSI), reference signal received power (reference signal received power, RSRP), reference signal received quality (reference signal received quality, RSRQ), or the like.

Based on the foregoing technical solution, when the first indication information and the second indication information are from a same communication apparatus, the first indication information or the second indication information may further include the foregoing field, so that after receiving the first indication information and the second indication information, the first communication apparatus can determine sidelink information with superior signal quality in the pieces of sidelink information based on the foregoing field.

In addition, when the foregoing solution is applied to a beam-based communication system, in this implementation, the first communication apparatus can determine a beam direction of sidelink information with good signal quality.

In a possible implementation of the first aspect, the first indication information is from the second communication apparatus, and the first indication information includes at least one of the following: an identifier of the first communication apparatus, an identifier of the second communication apparatus, or an index of the $j^{th}$ sidelink information.

Based on the foregoing technical solution, when the first indication information is from the second communication apparatus, the second communication apparatus may place at least one of the foregoing pieces of information into the first indication information indicating the $j^{th}$ sidelink information, so that the first communication apparatus performs subsequent communication based on the at least one piece of information.

For example, when the first indication information includes the identifier of the first communication apparatus, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus in the plurality of communication apparatuses.

For another example, when the first indication information includes the identifier of the second communication apparatus, in the foregoing solution, when a plurality of communication apparatuses (including the second communication apparatus) send indication information on the same N groups of symbols, the first communication apparatus can determine, based on the identifier of the second communication apparatus, that a transmitter of the first indication information is the second communication apparatus in the plurality of communication apparatuses, so that the first communication apparatus determines indication information respectively corresponding to the plurality of communication apparatuses.

For another example, when the first indication information includes the index of the $j^{th}$ sidelink information, the first communication apparatus can determine, based on the index of the $j^{th}$ sidelink information, which one of the N pieces of sidelink information corresponds to the first indication information.

In a possible implementation of the first aspect, the $i^{th}$ sidelink information is the S-SSB, and the $i^{th}$ sidelink information indicates the identifier of the first communication apparatus.

A value of the identifier of the first communication apparatus is the same as a value of a sidelink synchronization signal identifier (sidelink synchronization signal identifier, SL-SSID) corresponding to the S-SSB; or

the identifier of the first communication apparatus is located in a physical sidelink broadcast channel (physical sidelink broadcast channel, PSBCH) that carries the S-SSB; or
the identifier of the first communication apparatus is determined based on a frequency-domain position and/or a time-domain position occupied by the S-SSB.

Optionally, when the $i^{th}$ sidelink information is the SL-CSI-RS, the $i^{th}$ information may also indicate the identifier of the first communication apparatus. The identifier of the first communication apparatus is located in a channel carrying the SL-CSI-RS, or the identifier of the first communication apparatus is determined based on a frequency-domain position and/or a time-domain position occupied by the SL-CSI-RS.

Based on the foregoing technical solution, when the $i^{th}$ sidelink information is the S-SSB, the $i^{th}$ sidelink information may include the identifier of the first communication apparatus. Therefore, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus. In addition, the identifier of the first communication apparatus may be determined in the plurality of manners, to improve flexibility of implementing the solution.

In a possible implementation of the first aspect, the $i^{th}$ sidelink information is the S-SSB, and the $i^{th}$ sidelink information indicates the identifier of the first communication apparatus; and a value of the identifier of the first communication apparatus meets any one of the following:

the value of the identifier of the first communication apparatus is the same as a value of a sidelink synchronization signal identifier SL-SSID corresponding to the S-SSB; or
the value of the identifier of the first communication apparatus is determined based on a frequency-domain position and/or a time-domain position occupied by the S-SSB; or

the value of the identifier of the first communication apparatus is the same as a source identifier of the first communication apparatus; or

the value of the identifier of the first communication apparatus is the same as a destination identifier of the first communication apparatus; or

the value of the identifier of the first communication apparatus is the same as a combination of the source identifier and the destination identifier of the first communication apparatus.

Based on the foregoing technical solution, the identifier of the first communication apparatus may be determined in the plurality of manners, to improve flexibility of implementing the solution.

In a possible implementation of the first aspect, the $i^{th}$ sidelink information is the S-SSB, and the $i^{th}$ sidelink information indicates the identifier of the first communication apparatus; and the identifier of the first communication apparatus is carried in any one or more of the following:

a physical sidelink broadcast channel PSBCH included in the S-SSB; or

a physical sidelink broadcast channel PSBCH DMRS included in the S-SSB; or

a sidelink secondary synchronization signal S-SSS sequence included in the S-SSB; or

a sidelink primary synchronization signal P-SSS sequence included in the S-SSB.

Based on the foregoing technical solution, the identifier of the first communication apparatus may be carried in the plurality of manners, to improve flexibility of implementing the solution.

In a possible implementation of the first aspect, the $i^{th}$ sidelink information is used for beam failure recovery (beam failure recovery, BFR) or candidate beam identification. The N time units are configured or pre-configured, or the $i^{th}$ sidelink information includes third indication information, and the third indication information indicates that the $i^{th}$ sidelink information is used for beam failure recovery or candidate beam identification.

Based on the foregoing technical solution, the $i^{th}$ sidelink information sent by the first communication apparatus may be used for beam failure recovery (beam failure recovery, BFR) or candidate beam identification, so that the second communication apparatus can perform a BFR procedure after receiving the $i^{th}$ sidelink information.

In a possible implementation of the first aspect, the $j^{th}$ group of symbols is used for a beam failure recovery request. The N groups of symbols are configured or pre-configured, or the $j^{th}$ group of symbols carries fourth indication information, and the fourth indication information indicates that the $j^{th}$ group of symbols is used for the beam failure recovery request.

Optionally, the method further includes: The first communication apparatus sends a beam failure recovery response on the $j^{th}$ time domain resource in the N time domain resources. The N time domain resources are in one-to-one correspondence with the N time units, or the N time domain resources are in one-to-one correspondence with the N groups of symbols. The N time domain resources are configured or pre-configured, or the $j^{th}$ time domain resource carries fifth indication information, and the fifth indication information indicates that the $j^{th}$ time domain resource is used for the beam failure recovery response.

Based on the foregoing technical solution, the first indication information sent by the second communication apparatus on the $j^{th}$ group of symbols is used for the beam failure recovery request, so that the first communication apparatus can determine a candidate beam identification result of the second communication apparatus based on the first indication information, and subsequently, the first communication apparatus can send a response (that is, the beam failure recovery response) to the second communication apparatus for the identification result.

In a possible implementation of the first aspect, the method further includes: The first communication apparatus sends the $i^{th}$ sidelink information on an $i^{th}$ time resource in P time resources. The $i^{th}$ sidelink information is used for beam failure detection (beam failure detection, BFD). The P time resources are configured or pre-configured, or the $i^{th}$ sidelink information includes sixth indication information, and the sixth indication information indicates that the $i^{th}$ sidelink information carried on the $i^{th}$ time resource is used for beam failure detection.

Based on the foregoing technical solution, the $i^{th}$ sidelink information sent by the first communication apparatus on the $i^{th}$ time resource in the P time resources is used for beam failure detection (beam failure detection, BFD), so that the second communication apparatus can perform a BFD procedure after receiving the $i^{th}$ sidelink information on the $i^{th}$ time resource.

In a possible implementation of the first aspect, the $i^{th}$ sidelink information is the S-SSB, and the third indication information, the fourth indication information, the fifth indication information, or the sixth indication information is carried in one or more of a PSBCH, a PSBCH DMRS, an S-SSS, or a P-SSS; or the $i^{th}$ sidelink information is the SL-CSI-RS, and the third indication information, the fourth indication information, the fifth indication information, or the sixth indication information is determined based on a time domain resource and/or a frequency domain resource carrying the SL-CSI-RS.

Based on the foregoing technical solution, the first communication apparatus may indicate, in a plurality of manners, that the $i^{th}$ sidelink information may be used for BFD, BFR, or candidate beam identification. For example, the $i^{th}$ sidelink information is carried on a pre-configured (or configured) time domain resource, so that a receiver of the $i^{th}$ sidelink information can determine, based on a time-domain position at which the $i^{th}$ sidelink information is carried, that the $i^{th}$ sidelink information may be used for BFD, BFR, or candidate beam identification. For another example, the $i^{th}$ sidelink information may explicitly carry indication information, so that after the receiver of the $i^{th}$ sidelink information obtains the indication information by parsing the $i^{th}$ sidelink information, the receiver can determine, based on the indication information, that the $i^{th}$ sidelink information may be used for BFD, BFR, or candidate beam identification.

In a possible implementation of the first aspect, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

Based on the foregoing technical solution, the frequency-domain position (and/or the code-domain position) occupied by the first indication information on the $j^{th}$ group of symbols is determined based on the identifier of the first communication apparatus. In this way, in the foregoing solution, when a plurality of communication apparatuses (including the first communication apparatus) send sidelink information in the same N time units, the frequency-domain position (and/or the code-domain position) occupied by the indication information implicitly indicates that a transmitter of the sidelink information is the first communication apparatus, to reduce overheads.

Optionally, an index number of the frequency-domain position occupied by the first indication information on the $j^{th}$ group of symbols and an index number of the code-domain position occupied by the first indication information on the $j^{th}$ group of symbols are determined based on the identifier of the first terminal device.

In a possible implementation of the first aspect, the first indication information is from the second communication apparatus, and the frequency-domain position occupied by the first indication information on the $j^{th}$ group of symbols is determined based on the identifier of the second communication apparatus; and/or the code-domain position occupied by the first indication information on the $j^{th}$ group of symbols is determined based on the identifier of the second communication apparatus.

Based on the foregoing technical solution, the frequency-domain position (and/or the code-domain position) occupied by the first indication information on the $j^{th}$ group of symbols is determined based on the identifier of the second communication apparatus. In this way, in the foregoing solution, when a plurality of communication apparatuses (including the second communication apparatus) send indication information on the same N groups of symbols, the frequency-domain position (and/or the code-domain position) occupied by the indication information implicitly indicates that a transmitter of the first indication information is the second communication apparatus, to reduce overheads.

A second aspect of this application provides a communication method. The method is applied to a second communication apparatus. The second communication apparatus is a terminal device, or the second communication apparatus is a part of components (for example, a processor, a chip, or a chip system) in the terminal device, or the second communication apparatus may be a logical module or software that can implement all or a part of functions of the terminal device. In the method, the second communication apparatus receives $i^{th}$ sidelink information in an $i^{th}$ time unit in N time units. The sidelink information includes an S-SSB and/or an SL-CSI-RS, a value of i is 0 to N-1, and N is an integer greater than 1. The second communication apparatus sends first indication information on a $j^{th}$ group of symbols. The first indication information indicates $j^{th}$ sidelink information, a value of j is 0 to N-1, the N time units are in one-to-one correspondence with N groups of symbols, and the N groups of symbols are located in a PSFCH.

Based on the foregoing technical solution, after the second communication apparatus receives the $i^{th}$ sidelink information in the $i^{th}$ time unit in the N time units, the second communication apparatus sends, on the $j^{th}$ group of symbols in the N groups of symbols, the first indication information indicating the $j^{th}$ sidelink information. The N time units are in one-to-one correspondence with the N groups of symbols, and the N groups of symbols are located in the PSFCH. In other words, after the second communication apparatus receives one or more pieces of sidelink information, the second communication apparatus may send, in the PSFCH, indication information indicating one of the pieces of sidelink information, and a correspondence exists between a symbol used to carry the indication information and a time unit used to carry the one of the pieces of sidelink information. Therefore, in a process of transmitting N pieces of sidelink information in the N time units, the second communication apparatus may transmit, in the PSFCH by using the N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

In this application, the sidelink synchronization signal block may be replaced with a sidelink synchronization signal/physical broadcast channel block (sidelink synchronization signal/physical broadcast channel block, SL-SS/PBCH block) (or denoted as an SL-SS/PBCH, an S-SSB, or the like).

It may be understood that, that the N time units are in one-to-one correspondence with the N groups of symbols includes that the $i^{th}$ time unit in the N time units corresponds to an $i^{th}$ group of symbols in the N groups of symbols, and a $j^{th}$

time unit in the N time units corresponds to the $j^{th}$ group of symbols in the N groups of symbols. Optionally, a $k^{th}$ group of symbols in the N groups of symbols may appear below. Correspondingly, that the N time units are in one-to-one correspondence with the N groups of symbols further includes that a $k^{th}$ time unit in the N time units corresponds to the $k^{th}$ group of symbols in the N groups of symbols.

Optionally, when the $i^{th}$ sidelink information is the S-SSB, each of the N time units may be a slot, that is, different S-SSBs are carried in different slots.

Optionally, when the $i^{th}$ sidelink information is the SL-CSI-RS, each of the N time units may be one symbol, that is, different SL-CSI-RSs are carried on different symbols.

Optionally, when the $i^{th}$ sidelink information is the SL-CSI-RS, each of the N time units may be two or more symbols, that is, different SL-CSI-RSs are carried on different symbols, and each time unit has a symbol used to carry an SL-CSI-RS, and another symbol used to carry at least one of automatic gain control (automatic gain control, AGC), a gap (GAP), or the like.

It should be noted that each of the N groups of symbols includes one or more PSFCH symbols, and the one or more PSFCH symbols are used to carry indication information (for example, the first indication information) indicating sidelink information. Optionally, each of the N groups of symbols further includes another symbol, and the another symbol is used to carry at least one of AGC, a GAP, or the like.

It should be noted that the second communication apparatus may receive at least two pieces of sidelink information in the N time units. Correspondingly, the $j^{th}$ sidelink information indicated by the first indication information sent by the second communication apparatus may be sidelink information whose signal quality is higher than a threshold (or optimal) in the at least two pieces of sidelink information.

Optionally, that the first indication information indicates the $j^{th}$ sidelink information may be expressed as that the first indication information indicates sidelink information whose signal quality is higher than the threshold in the at least two pieces of sidelink information received by the second communication apparatus, and the first indication information indicates that the second communication apparatus expects to perform communication in a beam direction of the $j^{th}$ sidelink information.

In a possible implementation of the second aspect, in time domain, the N groups of symbols are located after the last time unit in the N time units.

Optionally, the sidelink information (including the S-SSB and/or the SL-CSI-RS) is a periodic signal, that is, a first communication apparatus may send the $i^{th}$ sidelink information for a plurality of times in different N time units. The N symbols are located after the last time unit in N time units in a current period, and the N symbols are located before the first time unit in N time units in a next period.

Based on the foregoing technical solution, in time domain, the N groups of symbols are located after the last time unit in the N time units, so that the first communication apparatus receives/detects, on the N groups of symbols after sidelink information is sent in the N time units, indication information corresponding to the sidelink information. In this way, the sidelink information and the indication information are transmitted on a sidelink in a time division manner.

In a possible implementation of the second aspect, at least two of the N groups of symbols are located in a same slot.

Based on the foregoing technical solution, in the N groups of symbols that are in one-to-one correspondence with the N time units, at least two groups of symbols are located in a same slot, that is, at least two groups of symbols are configured in one slot to carry indication information, so that at least two pieces of sidelink information are indicated in a single slot including a PSFCH, thereby improving an information bearer capability of the single slot including a PSFCH, and improving communication efficiency.

In a possible implementation of the second aspect, the method further includes: The second communication apparatus sends or receives direct communication request DCR information on a $j^{th}$ time domain resource in N time domain resources. The N time domain resources are in one-to-one correspondence with the N time units, or the N time domain resources are in one-to-one correspondence with the N groups of symbols.

It may be understood that, in time domain, the N time domain resources are located after the last group of symbols of the N groups of symbols.

Based on the foregoing technical solution, after the second communication apparatus sends the $j^{th}$ sidelink information, the second communication apparatus sends or receives the DCR information on the $j^{th}$ time domain resource in the N time domain resources. The N time domain resources are in one-to-one correspondence with the N time units, or the N time domain resources are in one-to-one correspondence with the N groups of symbols, so that the DCR information can be transmitted on a corresponding resource, to reduce communication complexity and improve communication efficiency.

In a possible implementation of the second aspect, at least two of a beam direction used in the $j^{th}$ time unit, a beam direction used on the $j^{th}$ time domain resource, and a beam direction used on the $j^{th}$ group of symbols are the same.

Optionally, the second communication apparatus is used as a receiver of the $i^{th}$ sidelink information and a transmitter of the first indication information corresponding to the $i^{th}$ sidelink information, and at least two of a beam direction used by the second communication apparatus in the $j^{th}$ time unit, a beam direction used by the second communication apparatus on the $j^{th}$ time domain resource, and a beam direction used by the second communication apparatus on the $j^{th}$ group of symbols are the same. In addition, a transmit beam direction of the first communication apparatus in the $j^{th}$ time unit is opposite (or matches) a receive beam direction of the second communication apparatus in the $j^{th}$ time unit; and/or a receive beam direction of the first communication apparatus on the $j^{th}$ group of symbols is opposite (or matches) a transmit beam direction of the second communication apparatus on the $j^{th}$ group of symbols, and/or a transmit beam direction of the first communication apparatus on the $j^{th}$ time domain resource is opposite (or matches) a receive beam direction of the second communication apparatus on the $j^{th}$ time domain resource; and/or a receive beam direction of the first communication apparatus on the $j^{th}$ time domain resource is opposite (or matches) a transmit beam direction of the second communication apparatus on the $j^{th}$ time domain resource.

Based on the foregoing technical solution, at least two of the N time units, the N groups of symbols, and the N time domain resources are in one-to-one correspondence. Correspondingly, at least two of the beam direction used in the $j^{th}$ time unit, the beam direction used on the $j^{th}$ time domain resource, and the beam direction used on the $j^{th}$ group of symbols are the same. Therefore, in a sidelink communication process, at least two of sidelink information including an S-SSB and/or a CSI-RS, indication information corresponding to the sidelink information, and DCR information can be transmitted based on a same beam direction, so that the foregoing technical solution can be applied to a beam-based communication system, and beam management can be implemented by using the one-to-one correspondence between the foregoing at least two.

Optionally, the beam-based communication system may be a communication system whose communication band includes a high frequency, for example, a communication system whose communication band includes a frequency range 2 (frequency range 2, FR2), that is, the frequency range is 24250 megahertz (MHz) to 52600 MHz, or in other words, the frequency range is in a millimeter-wave band.

Optionally, in different time units in the N time units (or different groups of symbols in the N groups of symbols, or different time domain resources in the N time domain resources), a communication apparatus (for example, the first communication apparatus, and the second communication apparatus that may appear below) uses different beam directions.

In a possible implementation of the second aspect, the method further includes: The second communication apparatus sends or receives resource indication information associated with the DCR information. The resource indication information indicates a resource that carries response information of the DCR information.

Optionally, the resource indication information indicates that the resource that carries the response information of the DCR information includes at least one of the following: a time-domain resource position, a frequency-domain resource position, a time domain resource window, or a frequency domain resource window.

Optionally, the response information of the DCR information may include a direct communication accept (direct communication accept, DCA) message, a security establishment message/information, or the like.

Based on the foregoing technical solution, the second communication apparatus may further send or receive the resource indication information associated with the DCR information. The resource indication information indicates the resource that carries the response information of the DCR information, so that the first communication apparatus and another communication apparatus (for example, the second communication apparatus) can determine, based on the resource indication information, the resource that carries the response information of the DCR.

In a possible implementation of the second aspect, the resource indication information is carried in SCI and/or a MAC CE.

Optionally, the SCI may include $1^{st}$-stage SCI and/or $2^{nd}$-stage SCI.

Based on the foregoing technical solution, the resource indication information indicating the resource that carries the response information of the DCR information may be carried in the SCI and/or the MAC CE, to improve flexibility of implementing the solution.

In a possible implementation of the second aspect, the method further includes: The second communication apparatus sends second indication information on a $k^{th}$ group of symbols in the N groups of symbols. The second indication information indicates $k^{th}$ sidelink information, a value of k is 0 to N-1, and k is different from j.

Based on the foregoing technical solution, the second communication apparatus may further send the second indication information on the $k^{th}$ group of symbols that is in the N groups of symbols and that is different from the $j^{th}$ group of symbols, and the second indication information indicates the $k^{th}$ sidelink information. Therefore, as a transmitter of the N pieces of sidelink information, the first communication apparatus can receive at least two pieces of indication information respectively corresponding to at least two pieces of sidelink information, to improve communication flexibility.

Optionally, when the foregoing solution is applied to a beam-based communication system, in this implementation, a same communication apparatus (that is, the second communication apparatus) can indicate at least two beam directions respectively corresponding to at least two pieces of sidelink information. The same communication apparatus is supported in indicating a plurality of available beam directions, so that the plurality of available beam directions are used in subsequent beam maintenance, beam failure recovery, or the like.

In a possible implementation of the second aspect, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

Based on the foregoing technical solution, the first indication information or the second indication information may further include the foregoing field, so that after receiving the first indication information and the second indication information, the first communication apparatus can determine sidelink information with superior signal quality in the pieces of sidelink information based on the foregoing field.

In addition, when the foregoing solution is applied to a beam-based communication system, in this implementation, the first communication apparatus can determine a beam direction of sidelink information with good signal quality.

In a possible implementation of the second aspect, the $i^{th}$ sidelink information is from the first communication apparatus, and the first indication information includes at least one of the following: an identifier of the first communication apparatus, an identifier of the second communication apparatus, or an index of the $j^{th}$ sidelink information.

Based on the foregoing technical solution, when the first indication information is from the second communication apparatus, the second communication apparatus may place at least one of the foregoing pieces of information into the first indication information indicating the $j^{th}$ sidelink information, so that the first communication apparatus performs subsequent communication based on the at least one piece of information.

For example, when the first indication information includes the identifier of the first communication apparatus, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus in the plurality of communication apparatuses.

For another example, when the first indication information includes the identifier of the second communication apparatus, in the foregoing solution, when a plurality of communication apparatuses (including the second communication apparatus) send indication information on the same N groups of symbols, the first communication apparatus can determine, based on the identifier of the second communication apparatus, that a transmitter of the first indication information is the second communication apparatus in the plurality of communication apparatuses, so that the first communication apparatus determines indication information respectively corresponding to the plurality of communication apparatuses.

For another example, when the first indication information includes the index of the $j^{th}$ sidelink information, the first communication apparatus can determine, based on the index of the $j^{th}$ sidelink information, which one of the N pieces of sidelink information corresponds to the first indication information.

In a possible implementation of the second aspect, the $i^{th}$ sidelink information is the S-SSB, and the $i^{th}$ sidelink information indicates the identifier of the first communication apparatus.

A value of the identifier of the first communication apparatus is the same as a value of an SL-SSID corresponding to the S-SSB; or

the identifier of the first communication apparatus is located in a physical sidelink broadcast channel PSBCH that carries the S-SSB; or

the identifier of the first communication apparatus is determined based on a frequency-domain position and/or a time-domain position occupied by the S-SSB.

Optionally, when the $i^{th}$ sidelink information is the SL-CSI-RS, the $i^{th}$ information may also indicate the identifier of the first communication apparatus. The identifier of the first communication apparatus is located in a channel carrying the SL-CSI-RS, or the identifier of the first communication apparatus is determined based on a frequency-domain position and/or a time-domain position occupied by the SL-CSI-RS.

Based on the foregoing technical solution, when the $i^{th}$ sidelink information is the S-SSB, the $i^{th}$ sidelink information may include the identifier of the first communication apparatus. Therefore, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus. In addition, the identifier of the first communication apparatus may be determined in the plurality of manners, to improve flexibility of implementing the solution.

In a possible implementation of the second aspect, the $i^{th}$ sidelink information is the S-SSB, and the $i^{th}$ sidelink information indicates the identifier of the first communication apparatus; and a value of the identifier of the first communication apparatus meets any one of the following:

the value of the identifier of the first communication apparatus is the same as a value of a sidelink synchronization signal identifier SL-SSID corresponding to the S-SSB; or

the value of the identifier of the first communication apparatus is determined based on a frequency-domain position and/or a time-domain position occupied by the S-SSB; or

the value of the identifier of the first communication apparatus is the same as a source identifier of the first communication apparatus; or

the value of the identifier of the first communication apparatus is the same as a destination identifier of the first communication apparatus; or

the value of the identifier of the first communication apparatus is the same as a combination of the source identifier and the destination identifier of the first communication apparatus.

Based on the foregoing technical solution, the identifier of the first communication apparatus may be determined in the plurality of manners, to improve flexibility of implementing the solution.

In a possible implementation of the second aspect, the $i^{th}$ sidelink information is the S-SSB, and the $i^{th}$ sidelink information indicates the identifier of the first communication apparatus; and the identifier of the first communication apparatus is carried in any one or more of the following:

a physical sidelink broadcast channel PSBCH included in the S-SSB; or

a physical sidelink broadcast channel PSBCH DMRS included in the S-SSB; or

a sidelink secondary synchronization signal S-SSS sequence included in the S-SSB; or

a sidelink primary synchronization signal P-SSS sequence included in the S-SSB.

Based on the foregoing technical solution, the identifier of the first communication apparatus may be carried in the plurality of manners, to improve flexibility of implementing the solution.

In a possible implementation of the second aspect, the $i^{th}$ sidelink information is used for beam failure recovery (beam failure recovery, BFR) or candidate beam identification. The N time units are configured or pre-configured, or the $i^{th}$ sidelink information includes third indication information, and the third indication information indicates that the $i^{th}$ sidelink information is used for beam failure recovery or candidate beam identification.

Based on the foregoing technical solution, the $i^{th}$ sidelink information sent by the first communication apparatus may be used for beam failure recovery (beam failure recovery, BFR) or candidate beam identification, so that the second communication apparatus can perform a BFR procedure after receiving the $i^{th}$ sidelink information.

In a possible implementation of the second aspect, the $j^{th}$ group of symbols is used for a beam failure recovery request. The N groups of symbols are configured or pre-configured, or the $j^{th}$ group of symbols carries fourth indication information, and the fourth indication information indicates that the $j^{th}$ group of symbols is used for the beam failure recovery request.

Optionally, the method further includes: The second communication apparatus receives a beam failure recovery response on the $j^{th}$ time domain resource in the N time domain resources. The N time domain resources are in one-to-one correspondence with the N time units, or the N time domain resources are in one-to-one correspondence with the N groups of symbols. The N time domain resources are configured or pre-configured, or the $j^{th}$ time domain resource carries fifth indication information, and the fifth indication information indicates that the $j^{th}$ time domain resource is used for the beam failure recovery response.

Based on the foregoing technical solution, the first indication information sent by the second communication apparatus on the $j^{th}$ group of symbols is used for the beam failure recovery request, so that the first communication apparatus can determine a candidate beam identification result of the second communication apparatus based on the first indication information, and subsequently, the first communication apparatus can send a response (that is, the beam failure recovery response) to the second communication apparatus for the identification result.

In a possible implementation of the second aspect, the method further includes: The second communication apparatus receives the $i^{th}$ sidelink information on an $i^{th}$ time resource in P time resources. The $i^{th}$ sidelink information is used for beam failure detection (beam failure detection, BFD). The P time resources are configured or pre-configured, or the $i^{th}$ sidelink information includes sixth indication information, and the sixth indication information indicates that the $i^{th}$ sidelink information carried on the $i^{th}$ time resource is used for beam failure detection.

Based on the foregoing technical solution, the $i^{th}$ sidelink information sent by the first communication apparatus on the $i^{th}$ time resource in the P time resources is used for beam failure detection (beam failure detection, BFD), so that the second communication apparatus can perform a BFD procedure after receiving the $i^{th}$ sidelink information on the $i^{th}$ time resource.

In a possible implementation of the second aspect, the $i^{th}$ sidelink information is the S-SSB, and the third indication information, the fourth indication information, the fifth indication information, or the sixth indication information is carried in one or more of a PSBCH, a PSBCH DMRS, an S-SSS, or a P-SSS; or the $i^{th}$ sidelink information is the SL-CSI-RS, and the third indication information, the fourth indication information, the fifth indication information, or the sixth indication information is determined based on a time domain resource and/or a frequency domain resource carrying the SL-CSI-RS.

Based on the foregoing technical solution, the first communication apparatus may indicate, in a plurality of manners, that the $i^{th}$ sidelink information may be used for BFD, BFR, or candidate beam identification. For example, the $i^{th}$ sidelink information is carried on a pre-configured (or configured) time domain resource, so that a receiver of the $i^{th}$ sidelink information can determine, based on a time-domain position at which the $i^{th}$ sidelink information is carried, that the $i^{th}$ sidelink information may be used for BFD, BFR, or candidate beam identification. For another example, the $i^{th}$ sidelink information may explicitly carry indication information, so that after the receiver of the $i^{th}$ sidelink information obtains the indication information by parsing the $i^{th}$ sidelink information, the receiver can determine, based on the indication information, that the $i^{th}$ sidelink information may be used for BFD, BFR, or candidate beam identification.

In a possible implementation of the second aspect, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

Based on the foregoing technical solution, the frequency-domain position (and/or the code-domain position) occupied by the first indication information on the $j^{th}$ group of symbols is determined based on the identifier of the first communication apparatus. In this way, in the foregoing solution, when a plurality of communication apparatuses (including the first communication apparatus) send sidelink information in the same N time units, the frequency-domain position (and/or the code-domain position) occupied by the indication information implicitly indicates that a transmitter of the sidelink information is the first communication apparatus, to reduce overheads.

Optionally, an index number of the frequency-domain position occupied by the first indication information on the $j^{th}$ group of symbols and an index number of the code-domain position occupied by the first indication information on the $j^{th}$ group of symbols are determined based on the identifier of the first terminal device.

In a possible implementation of the second aspect, the first indication information is from the second communication apparatus, and the frequency-domain position occupied by the first indication information on the $j^{th}$ group of symbols is determined based on the identifier of the second communication apparatus; and/or the code-domain position occupied by the first indication information on the $j^{th}$ group of symbols is determined based on the identifier of the second communication apparatus.

Based on the foregoing technical solution, the frequency-domain position (and/or the code-domain position) occupied by the first indication information on the $j^{th}$ group of symbols is determined based on the identifier of the second communication apparatus. In this way, in the foregoing solution, when a plurality of communication apparatuses (including the second communication apparatus) send indication information on the same N groups of symbols, the frequency-domain position (and/or the code-domain position) occupied by the indication information implicitly indicates that a transmitter of the first indication information is the second communication apparatus, to reduce overheads.

A third aspect of this application provides a communication apparatus. The apparatus may implement the method in any one of the first aspect or the possible implementations of the first aspect. The apparatus includes a corresponding unit or module configured to perform the method. The unit or module included in the apparatus can be implemented by using software and/or hardware. For example, the apparatus may be a terminal device, or the apparatus may be a component (for example, a processor, a chip, or a chip system) in the terminal device, or the apparatus may be a logic module or software that can implement all or a part of functions of the terminal device.

The apparatus includes a processing unit and a transceiver unit.

The processing unit is configured to determine $i^{th}$ sidelink information. The transceiver unit is configured to send the $i^{th}$ sidelink information in an $i^{th}$ time unit in N time units. The sidelink information includes a sidelink synchronization signal block S-SSB and/or a sidelink channel state information reference signal SL-CSI-RS, a value of i is 0 to N-1, and N is an integer greater than 1.

The transceiver unit is further configured to receive first indication information on a $j^{th}$ group of symbols in N groups of symbols. The first indication information indicates $j^{th}$ sidelink information, a value of j is 0 to N-1, the N time units are in one-to-one correspondence with the N groups of symbols, and the N groups of symbols are located in a physical sidelink feedback channel PSFCH.

In a possible implementation of the third aspect, in time domain, the N groups of symbols are located after the last time unit in the N time units.

In a possible implementation of the third aspect, at least two of the N groups of symbols are located in a same slot.

In a possible implementation of the third aspect, the transceiver unit is further configured to send or receive direct communication request DCR information on a $j^{th}$ time domain resource in N time domain resources. The N time domain resources are in one-to-one correspondence with the N time units, or the N time domain resources are in one-to-one correspondence with the N groups of symbols.

In a possible implementation of the third aspect, the transceiver unit is further configured to send or receive resource indication information associated with the DCR information. The resource indication information indicates a resource that carries response information of the DCR information.

In a possible implementation of the third aspect, the transceiver unit is further configured to receive second indication information on a $k^{th}$ group of symbols in the N groups of symbols. The second indication information indicates $k^{th}$ sidelink information, a value of k is 0 to N-1, and k is different from j.

In a possible implementation of the third aspect, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

In a possible implementation of the third aspect, the first indication information is from a second communication apparatus, and the first indication information includes at least one of the following: an identifier of the first communication apparatus, an identifier of the second communication apparatus, or an index of the $j^{th}$ sidelink information.

In a possible implementation of the third aspect, the $i^{th}$ sidelink information is the S-SSB, and the $i^{th}$ sidelink information indicates the identifier of the first communication apparatus.

A value of the identifier of the first communication apparatus is the same as a value of an SL-SSID corresponding to the S-SSB; or

the identifier of the first communication apparatus is located in a physical sidelink broadcast channel PSBCH that carries the S-SSB; or
the identifier of the first communication apparatus is determined based on a frequency-domain position and/or a time-domain position occupied by the S-SSB.

Optionally, when the $i^{th}$ sidelink information is the SL-CSI-RS, the $i^{th}$ information may also indicate the identifier of the first communication apparatus. The identifier of the first communication apparatus is located in a channel carrying the SL-CSI-RS, or the identifier of the first communication apparatus is determined based on a frequency-domain position and/or a time-domain position occupied by the SL-CSI-RS.

In a possible implementation of the third aspect, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

In the third aspect of embodiments of this application, the modules included in the communication apparatus may be further configured to perform steps performed in the possible implementations of the first aspect, and implement corresponding technical effects. For details, refer to the first aspect. The details are not described herein again.

A fourth aspect of this application provides a communication apparatus. The apparatus may implement the method in any one of the second aspect or the possible implementations of the second aspect. The apparatus includes a corresponding unit or module configured to perform the method. The unit or module included in the apparatus can be implemented by using software and/or hardware. For example, the apparatus may be a terminal device, or the apparatus may be a component (for example, a processor, a chip, or a chip system) in the terminal device, or the apparatus may be a logic module or software that can implement all or a part of functions of the terminal device.

The apparatus includes a processing unit and a transceiver unit.

The transceiver unit is configured to receive $i^{th}$ sidelink information in an $i^{th}$ time unit in N time units. The sidelink information includes an S-SSB and/or an SL-CSI-RS, a value of i is 0 to N-1, and N is an integer greater than 1.

The processing unit is configured to determine first indication information.

The transceiver unit is further configured to send the first indication information on a $j^{th}$ group of symbols. The first indication information indicates $j^{th}$ sidelink information, a value of j is 0 to N-1, the N time units are in one-to-one correspondence with N groups of symbols, and the N groups of symbols are located in a PSFCH.

In a possible implementation of the fourth aspect, in time domain, the N groups of symbols are located after the last time unit in the N time units.

In a possible implementation of the fourth aspect, at least two of the N groups of symbols are located in a same slot.

In a possible implementation of the fourth aspect, the transceiver unit is further configured to send or receive direct communication request DCR information on a $j^{th}$ time domain resource in N time domain resources. The N time domain resources are in one-to-one correspondence with the N time units, or the N time domain resources are in one-to-one correspondence with the N groups of symbols.

In a possible implementation of the fourth aspect, the transceiver unit is further configured to send or receive resource indication information associated with the DCR information. The resource indication information indicates a resource that carries response information of the DCR information.

In a possible implementation of the fourth aspect, the transceiver unit is further configured to send second indication information on a $k^{th}$ group of symbols in the N groups of symbols. The second indication information indicates $k^{th}$

sidelink information, a value of k is 0 to N-1, and k is different from j.

In a possible implementation of the fourth aspect, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

In a possible implementation of the fourth aspect, the $i^{th}$ sidelink information is from a first communication apparatus, and the first indication information includes at least one of the following: an identifier of the first communication apparatus, an identifier of the second communication apparatus, or an index of the $j^{th}$ sidelink information.

In a possible implementation of the fourth aspect, the $i^{th}$ sidelink information is the S-SSB, and the $i^{th}$ sidelink information indicates the identifier of the first communication apparatus.

A value of the identifier of the first communication apparatus is the same as a value of an SL-SSID corresponding to the S-SSB; or

> the identifier of the first communication apparatus is located in a physical sidelink broadcast channel PSBCH that carries the S-SSB; or
> the identifier of the first communication apparatus is determined based on a frequency-domain position and/or a time-domain position occupied by the S-SSB.

Optionally, when the $i^{th}$ sidelink information is the SL-CSI-RS, the $i^{th}$ information may also indicate the identifier of the first communication apparatus. The identifier of the first communication apparatus is located in a channel carrying the SL-CSI-RS, or the identifier of the first communication apparatus is determined based on a frequency-domain position and/or a time-domain position occupied by the SL-CSI-RS.

In a possible implementation of the fourth aspect, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

In the fourth aspect of embodiments of this application, the modules included in the communication apparatus may be further configured to perform steps performed in the possible implementations of the second aspect, and implement corresponding technical effects. For details, refer to the second aspect. The details are not described herein again.

A fifth aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method in any one of the first aspect or the possible implementations of the first aspect.

A sixth aspect of embodiments of this application provides a communication apparatus, including at least one processor. The at least one processor is coupled to a memory, the memory is configured to store a program or instructions, and the at least one processor is configured to execute the program or the instructions, to enable the apparatus to implement the method in any one of the second aspect or the possible implementations of the second aspect.

A seventh aspect of embodiments of this application provides a communication apparatus, including at least one logic circuit and an input/output interface. The logic circuit is configured to perform the method in any one of the first aspect or the possible implementations of the first aspect, or the logic circuit is configured to perform the method in any one of the second aspect or the possible implementations of the second aspect.

An eighth aspect of embodiments of this application provides a computer-readable storage medium that stores one or more computer-executable instructions. When the computer-executable instructions are executed by a processor, the processor performs the method in any one of the first aspect or the possible implementations of the first aspect, or the processor performs the method in any one of the second aspect or the possible implementations of the second aspect.

A ninth aspect of embodiments of this application provides a computer program product (or referred to as a computer program) that stores one or more computers. When the computer program product is executed by a processor, the processor performs the method in any one of the first aspect or the possible implementations of the first aspect, or the processor performs the method in any one of the second aspect or the possible implementations of the second aspect.

A tenth aspect of embodiments of this application provides a chip system. The chip system includes at least one processor, configured to support a communication apparatus in implementing a function in any one of the first aspect or the possible implementations of the first aspect, or support the communication apparatus in implementing a function in any one of the second aspect or the possible implementations of the second aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

An eleventh aspect of embodiments of this application provides a communication system. The communication system includes the communication apparatus in the third aspect and the communication apparatus in the fourth aspect, and/or the communication system includes the communication apparatus in the fifth aspect and the communication apparatus in the sixth aspect, and/or the communication system includes the communication apparatus in the seventh aspect.

For technical effects brought by any design manner in the third aspect to the eleventh aspect, refer to technical effects brought by different design manners in the first aspect to the second aspect. Details are not described herein again.

It can be learned from the foregoing technical solutions that embodiments of this application have the following advantages: After the first communication apparatus sends the i$^{th}$ sidelink information in the i$^{th}$ time unit in the N time units, the first communication apparatus receives, on the j$^{th}$ group of symbols in the N groups of symbols, the first indication information indicating the j$^{th}$ sidelink information. The N time units are in one-to-one correspondence with the N groups of symbols, and the N groups of symbols are located in the PSFCH. In other words, after a receiver of the sidelink information receives one or more pieces of sidelink information, the receiver may send, in the PSFCH, indication information indicating one of the pieces of sidelink information, and a correspondence exists between a symbol used to carry the indication information and a time unit used to carry the one of the pieces of sidelink information. Therefore, in a process of transmitting N pieces of sidelink information in the N time units, the receiver of the sidelink information may transmit, in the PSFCH by using the N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

## BRIEF DESCRIPTION OF DRAWINGS

FIG. 1a is a diagram of a communication system according to an embodiment of this application;
FIG. 1b is a diagram of a communication system according to an embodiment of this application;
FIG. 1c is a diagram of a communication system according to an embodiment of this application;
FIG. 2a is a diagram of a communication protocol stack according to an embodiment of this application;
FIG. 2b is another diagram of a communication protocol stack according to an embodiment of this application;
FIG. 3a is a diagram of a communication system according to an embodiment of this application;
FIG. 3b is a diagram of a communication method according to an embodiment of this application;
FIG. 4a is a diagram of a communication resource of a sidelink according to an embodiment of this application;
FIG. 4b is a diagram of a communication resource of a sidelink according to an embodiment of this application;
FIG. 5a is a diagram of a communication resource of a sidelink according to an embodiment of this application;
FIG. 5b is a diagram of a communication resource of a sidelink according to an embodiment of this application;
FIG. 5c is a diagram of a communication method according to an embodiment of this application;
FIG. 6a is a diagram of a communication resource of a sidelink according to an embodiment of this application;
FIG. 6b is a diagram of a communication resource of a sidelink according to an embodiment of this application;
FIG. 7 is a diagram of a communication method according to an embodiment of this application;
FIG. 8a is a diagram of a communication resource of a sidelink according to an embodiment of this application;
FIG. 8b is a diagram of a communication resource of a sidelink according to an embodiment of this application;
FIG. 8c is a diagram of a communication resource of a sidelink according to an embodiment of this application;
FIG. 8d is a diagram of a communication resource of a sidelink according to an embodiment of this application;
FIG. 9 is a diagram of a communication resource of a sidelink according to an embodiment of this application;
FIG. 10 is a diagram of a communication resource of a sidelink according to an embodiment of this application;
FIG. 11 is a diagram of a communication resource of a sidelink according to an embodiment of this application;
FIG. 12 is a diagram of a communication apparatus according to an embodiment of this application;
FIG. 13 is another diagram of a communication apparatus according to an embodiment of this application; and
FIG. 14 is another diagram of a communication apparatus according to an embodiment of this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

First, a part of terms in embodiments of this application are explained to facilitate understanding of a person skilled in the art.

1. A terminal device in this application includes a device that provides voice for a user, a device that provides data connectivity for a user, and a device that provides voice and data connectivity for a user, for example, may include a handheld device with a wireless connection function, or a processing device connected to a wireless modem. The terminal device may also be referred to as a terminal for short. The terminal may communicate with a core network via a radio access network (radio access network, RAN), and exchange voice or data with the RAN, or exchange voice and data with the RAN. The terminal may include a user equipment (user equipment, UE), a wireless terminal, a mobile terminal, a device-to-device (device-to-device, D2D) communication terminal, a vehicle-to-everything (vehicle-to-everything, V2X) terminal, a road side unit (road side unit, RSU), a machine-to-machine/machine-type communication (machine-to-machine/machine-type communication, M2M/MTC) terminal, an internet-of-things (internet-of-things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. The terminal may include a mobile phone (or referred to as a "cellular" phone), a computer having a mobile terminal, a portable, pocket-sized, handheld, or computer built-in mobile apparatus, or the like. The terminal may include a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal further includes a limited device, for example, a device with low power consumption, a device with a limited storage capability, or a device with a limited computing capability. The terminal may include an information sensing device such as a barcode, radio frequency identification (radio frequency identification, RFID), a sensor, a global positioning system (global positioning system, GPS), or a laser scanner.

For example but not for limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated onto clothes or an accessory of a user. The wearable device is not only a hardware device, but also implements a powerful function through software support, data exchange, and cloud interaction. In a broad sense, the wearable intelligent device includes a full-featured and large-sized device that can implement all or a part of functions without depending on a smartphone, for example, a smart watch or smart glasses, and includes a device that is dedicated to a specific type of application function and that needs to collaboratively work with another device such as a smartphone, for example, various smart bands, smart helmets, or smart jewelry for monitoring physical signs.

If the terminals described above are located in a vehicle, for example, placed in the vehicle or installed in the vehicle, the terminals may be all considered as in-vehicle terminals. For example, the in-vehicle terminal is also referred to as an on-board unit (on-board unit, OBU).

In embodiments of this application, an apparatus configured to implement a function of a terminal may be the terminal, or may be a circuit that can support the terminal in implementing the function, for example, a circuit that can be used in a chip system. The chip system may be installed in the terminal. In embodiments of this application, the chip system may include a chip, or may include a chip and another discrete component. In the technical solutions provided in embodiments of this application, an example in which the apparatus configured to implement the function of the terminal is the terminal is used to describe the technical solutions provided in embodiments of this application.

2. A network device in this application may include a radio access network (radio access network, RAN) device, for example, a base station (for example, an access point). The network device may be a device that communicates with a terminal device through an air interface in an access network, or the network device in a vehicle-to-everything (vehicle-to-everything, V2X) technology is a road side unit (road side unit, RSU). The base station may be configured to mutually convert a received over-the-air frame and an IP packet, and serve as a router between the terminal and a remaining part of the access network. The remaining part of the access network may include an IP network. The RSU may be a fixed infrastructure entity supporting V2X application, and exchanges a message with another entity supporting the V2X application. The network device may further coordinate attribute management of the air interface. For example, the network device may include an evolved NodeB (evolved NodeB, NodeB, eNB, or e-NodeB) in a long term evolution (long term evolution, LTE) system or a long term evolution-advanced (long term evolution-advanced, LTE-A) system, or may include a next generation NodeB (next generation NodeB, gNB) in an evolved packet core (evolved packet core, EPC) network, a 5th generation (5th generation, 5G) communication technology, or a new radio (new radio, NR) system (also referred to as an NR system for short), or may include a central unit (central unit, CU) and a distributed unit (distributed unit, DU) in a cloud access network (cloud radio access network, Cloud RAN) system. This is not limited in embodiments of this application. The network device may further include a core network device, and the core network device includes, for example, an access and mobility management function (access and mobility management function, AMF). It should be noted that the RSU may be a network RSU, or may be a terminal device RSU. When the RSU is used as a network RSU, the RSU performs a function of a network device. When the RSU is used as a terminal device RSU, the RSU performs a function of a terminal device.

The network device can send configuration information (for example, carried in a scheduling message and/or an indication message) to the terminal device. The terminal device further performs network configuration based on the configuration information, so that network configuration of the network device and the terminal device is aligned. Alternatively, through network configuration preset in the network device and network configuration preset in the terminal device, the network configuration of the network device and the terminal device is aligned. Specifically, the "aligned" means that when there is an interaction message between the network device and the terminal device, the two have a consistent understanding on a carrier frequency for sending and receiving the interaction message, determining of a type of the interaction message, a meaning of field information carried in the interaction message, or other configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

The network device may further include a core network device. The core network device includes, for example, an AMF, a user plane function (user plane function, UPF), or a session management function (session management function, SMF).

In embodiments of this application, an apparatus configured to implement a function of a network device may be the network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used to describe the technical solutions provided in embodiments of this application.

3. Sidelink (sidelink, SL)

Sidelink communication may be performed between terminal devices. To be specific, direct communication may be performed between the terminal devices without forwarding by a network device. In this case, a link over which the terminal devices are directly connected to each other is referred to as a sidelink.

Generally, in a sidelink technology, terminal devices may perform direct information connection through a PC5 interface between the terminal devices. In this application, the sidelink may be represented by using an English "sidelink", or may be represented by using a "side link". The "sidelink" and "side link" have a same meaning, and both are English expressions of the sidelink in this application. This technology can provide information exchange not only in a service coverage area of a network device, but also in a place without network device coverage. A terminal device that is authorized to perform special communication may use a sidelink communication manner. Certainly, sidelink communication may be used to transmit service data of intelligent transportation, and may be used to transmit a mobile internet service. This is not limited in this application.

4. Resource pool (resource pool)

In V2X, a network device may configure a resource pool for SL communication of a V2X terminal device, and one resource pool is a set of time-frequency resources. Two resource allocation modes are defined in V2X.

In a mode 1 (mode 1), the network device schedules or configures a sidelink resource for the terminal device to perform sidelink transmission.

In a mode 2 (mode 2), the terminal device autonomously selects a resource.

Optionally, in an implementation of the mode 2 (mode 2), the terminal device senses, in the (pre)configured resource pool, resources that are not used by other terminal devices, and selects an appropriate quantity of such resources for transmission of the terminal device. V2X supports a resource sensing (sensing) process and a resource selection or reselection process in the mode 2. In the sensing process, SCI information of another terminal device or another sidelink measurement result may be further demodulated, and the demodulated SCI information reflects resource usage on the sidelink. In the resource selection or reselection process, a resource used for sidelink transmission may be determined based on a result of the sensing process.

5. The technical solutions in embodiments of this application may be applied to various communication systems, for example, an LTE system, a worldwide interoperability for microwave access (worldwide interoperability for microwave access, WiMAX) communication system, a 5th generation (5th generation, 5G) system such as NR, and a future communication system such as a 6G system.

6. Configuration and pre-configuration

In this application, both configuration and pre-configuration are used. The configuration means that a network device or a server sends configuration information of some parameters or values of the parameters to a terminal by using a message or signaling, so that the terminal determines, based on the values or the information, a communication parameter or a resource for transmission. The pre-configuration is similar to the configuration. The pre-configuration may be a manner in which the network device or the server sends parameter information or a value to the terminal through a carrier or a link other than the sidelink, or may be a manner in which a corresponding parameter or parameter value is defined, or a related parameter or value is written into the terminal device in advance. This is not limited in this application. Further, these values and parameters may be changed or updated.

7. The terms "system" and "network" may be used interchangeably in embodiments of this application; "at least one" means one or more, and "a plurality of" means two or more; and "and/or" describes an association relationship between associated objects, and indicates that three relationships may exist. For example, A and/or B may indicate the following cases: only A exists, both A and B exist, and only B exists, where A and B may be singular or plural. The character "/" generally indicates an "or" relationship between the associated objects. The expression "at least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

8. Beam

Concepts of a beam (beam) and a beam pair (beam pair link, BPL) are introduced into a communication system. The beam is a communication resource. Beams may be classified into a transmit beam and a receive beam. A technology for forming the beam may be a beamforming technology or another technical means. Beamforming includes transmit beamforming and receive beamforming.

The transmit beam is a beam that has spatial directivity and that is formed by a signal sent by a transmit-end device by using a specific beamforming weight. In an uplink direction, the transmit-end device may be a terminal. In a downlink direction, the transmit-end device may be a network device.

The receive beam is a beam that has spatial directivity and that is formed by a signal received by a receive-end device by using a specific beamforming weight. In the uplink direction, the receive-end device may be a network device. In the downlink direction, the receive-end device may be a terminal.

Transmit beamforming means that when a transmit-end device with an antenna array sends a signal, a specific amplitude and phase are set on each antenna element of the antenna array, so that the sent signal has specific spatial directivity, that is, the signal has high signal power in some directions, and has low signal power in some other directions. A direction with the highest signal power is a direction of a transmit beam. The antenna array includes a plurality of antenna elements. The additional specific amplitude and phase are a beamforming weight.

Receive beamforming means that when a receive-end device with an antenna array receives a signal, a specific amplitude and phase are set on each antenna element of the antenna array, so that a power gain of the received signal is directional, that is, the power gain is high when the signal is received in some directions, and the power gain is low when the signal is received in some other directions. A direction with the highest power gain when the signal is received is a direction of a receive beam. The antenna array includes a plurality of antenna elements. The additional specific amplitude and phase are a beamforming weight.

Sending a signal by using a transmit beam means sending the signal by using a beamforming weight.

Receiving a signal by using a receive beam means receiving the signal by using a beamforming weight.

Different beams may be considered as different resources. Same information or different information may be sent by using (or through) different beams. The beam pair is established based on the concept of the beam. One beam pair usually includes one transmit beam of a transmit-end device and one receive beam of a receive-end device. It should be noted that, unless otherwise stated, in the following descriptions, a transmit beam is a transmit beam of a network device, and a receive beam is a receive beam of a terminal.

9. Beam failure detection (beam failure detection, BFD) and beam failure recovery (beam failure recovery, BFR)

For example, the terminal device is a UE and the network device is a gNB. BFR is a process in which after the UE detects, according to a BFD criterion configured by the gNB, that a serving beam (serving beam) fails, the UE attempts to replace the serving beam with an available candidate beam (candidate beam), so that a transmit-receive beam pair becomes available again. For an NR Uu interface, the serving beam is a beam that transmits a wanted signal between the gNB and the UE. The wanted signal includes a data signal, and further includes a reference signal used to perform BFD. The candidate beam is a beam that does not transmit a wanted signal but transmits a reference signal between the gNB and the UE to measure quality.

① For BFD, a current condition of BFD is that all serving beams of the gNB are considered to fail for N consecutive times. N is indicated by a maximum beam failure instance count *beamfailureinstancemaxcount* field in radio resource control (radio resource control, RRC) signaling. A criterion for considering a serving beam to fail is that a hypothetical (hypothetical) physical downlink control channel (physical downlink control channel, PDCCH) block error rate (block error rate, BLER) corresponding to reference signal received power (reference signal received power, RSRP) of a reference signal that is transmitted in the serving beam and that is used to detect a beam failure is greater than a given threshold. The given threshold is a default BLER threshold used for declaration of being out-of-synchronization (out-of-sync) in radio link monitoring (radio link monitoring, RLM).

② Identification of a new candidate beam means that the gNB sends a reference signal in a series of candidate beams, to help the UE to select a candidate beam from the candidate beams as a new serving beam, to recover a transmit-receive beam pair of a connection. The reference signal sent by the gNB in the candidate beams is, for example, a channel state information reference signal (channel state information reference signal, CSI-RS) or a synchronization signal block (synchronization signal block, SSB). A specific reference signal is indicated by a candidate beam reference signal list (candidate beam RS list) field in RRC signaling. When finding that RSRP of the reference signal sent in a candidate beam is greater than a configured threshold, the UE considers that the corresponding candidate beam is available, that is, the candidate beam may be used as a new serving beam. The threshold is explicitly or implicitly indicated by an RSRP-threshold SSB (rsrp-threshold SSB) field in RRC signaling.

Step ① may occur before step ②, step ① may occur after step ②, or step ① and step ② may occur simultaneously.

③ The UE sends a beam failure recovery request to the gNB, and the gNB receives the beam failure recovery request from the UE. The UE mainly sends the beam failure recovery request on a physical random access channel (physical random access channel, PRACH), or may send the beam failure recovery request on a physical uplink control channel (physical uplink control channel, PUCCH) in a sweeping manner. If the UE identifies that there is an available candidate beam, the beam failure recovery request includes information about the available candidate beam. If the UE does not identify an available candidate beam, the UE does not send the beam failure recovery request. If the UE does not send the beam failure recovery request, the UE notifies a higher layer of the UE, to indicate that the UE is in a beam failure state. In addition, if the UE does not send the beam failure recovery request, the gNB cannot receive the beam failure recovery request from the UE, and the gNB also notifies a higher layer of the gNB, to indicate that the gNB is in a beam failure state. The higher layer of the UE and the higher layer of the gNB may perform beam recovery.

④ The UE monitors a response of the gNB to the beam failure recovery request. If the UE sends the beam failure recovery request to the gNB, the UE may start a time window, and monitor, within the time window, the response of the gNB to the beam failure recovery request. If the response from the gNB is received within the time window, the UE determines that BFR succeeds. If the response from the gNB is not received within the time window, the UE may send the beam failure recovery request again. When the beam failure recovery request is repeatedly sent for a specific quantity of times but the response from the gNB is still not received, the UE notifies the higher layer of the UE, to indicate that the UE is in the beam failure state. The higher layer of the UE and the higher layer of the gNB may perform beam recovery.

In a communication system such as a 5G new radio (new radio, NR) system, both the network device and the terminal may generate one or more transmit beams and one or more receive beams. Before data is transmitted, beam alignment needs to be performed.

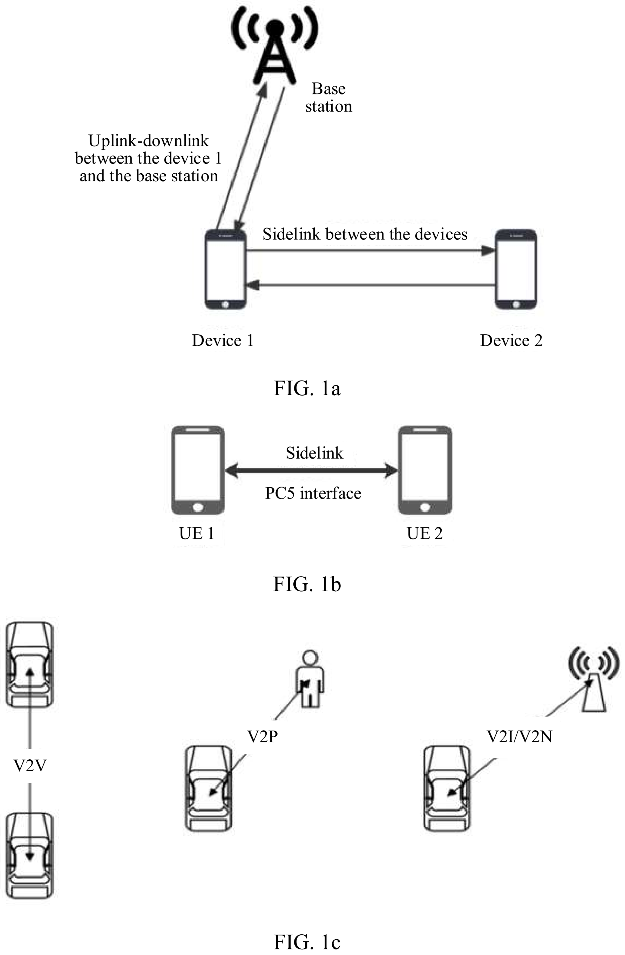

FIG. 1a is a diagram of a communication system according to an embodiment of this application. In FIG. 1a, an example in which a network device is a base station is used for description, and both a device 1 and a device 2 are terminal devices. As shown in FIG. 1a, a communication link between the device 1 and the device 2 may be referred to as a sidelink (sidelink, SL), and a communication link between the device 1 (or the device 2) and the base station may be referred to as an uplink-downlink, including an uplink (uplink) and a downlink (downlink). It can be learned that the sidelink is a communication mechanism in which different terminal devices directly communicate with each other without the network device.

Optionally, on the sidelink (sidelink, SL), generally, a transmit device and a receive device may be terminal devices or network devices of a same type, or may be a road side station (road side unit, RSU) and a terminal device. From a perspective of a physical entity, the RSU is a road side station or a road side unit. From a perspective of a function, the RSU may be a terminal device, or may be a network device. This is not limited in this application. In other words, the transmit device is a terminal device, and the receive device is also a terminal device; or the transmit device is a road side station, and the receive device is a terminal device; or the transmit device is a terminal device, and the receive device is a road side station. In addition, the sidelink may alternatively be a link between base station devices of a same type or different types. In this case, a function of the sidelink is similar to that of a trunk link, but an air interface technology used by the sidelink may be the same as or different from that used by the trunk link.

For example, broadcast, unicast, and multicast are supported on the sidelink.

Broadcast communication is similar to broadcasting system information by the network device. To be specific, the terminal device sends data of a broadcast service to the outside without encryption. Any other terminal device within an effective receiving range may receive the data of the broadcast service if the terminal device is interested in the broadcast service.

Unicast communication is similar to data communication performed after an RRC connection is established between the terminal device and the network device, and a unicast connection needs to be first established between two terminal devices. After the unicast connection is established, the two terminal devices may perform data communication based on a negotiated identifier. The data may or may not be encrypted. Different from broadcast, unicast communication can be performed only between two terminal devices that have established a unicast connection.

Optionally, one unicast communication on the sidelink corresponds to a pair of a source layer-2 identifier (source layer-2 identifier, denoted as a source L2 ID) and a destination layer-2 identifier (destination Layer-2 Identifier, denoted as a destination L2 ID). Optionally, a subheader of a medium access control protocol data unit (medium access control protocol data unit, MAC PDU) on the sidelink includes the source L2 ID and the destination L2 ID, so that data is transmitted to a correct receive end.

Multicast communication is communication between all terminal devices in a communication group, and any terminal device in the group can receive and send data of a multicast service.

As shown in FIG. 1b, when a terminal device (denoted as a UE 1) directly communicates with another terminal device (denoted as a UE 2) without a network device, a communication link between the two terminal devices may be referred to as a sidelink (sidelink). In other words, the two terminal devices communicate with each other through a proximity-based services communication 5 (proximity-based services communication 5, PC5) interface.

As a typical application of the sidelink, a V2X communication technology uses and enhances current cellular network functions and elements, to implement low-latency and high-reliability communication between various nodes in a vehicle network, including vehicle-to-vehicle (Vehicle-to-Vehicle, V2V for short) communication, vehicle-to-pedestrian (Vehicle-to-Pedestrian, V2P for short) communication, vehicle-to-infrastructure (Vehicle-to-Infrastructure, V2I for short) communication, or vehicle-to-network (Vehicle-to-Network, V2N for short) communication, as shown in FIG. 1c. As a cellular system evolves from 4G long term evolution (Long Term Evolution, LTE for short) to 5G, C-V2X evolves from LTE-V2X to NR-V2X (New Radio V2X, NR-V2X for short).

In addition, V2X communication has great potential in reducing vehicle collision accidents, thereby reducing corresponding casualties. Advantages of V2X are not limited to improving safety. A vehicle that can perform V2X communication helps better perform traffic management, to further promote green traffic and lower energy consumption. An intelligent transportation system (Intelligent Transportation System, ITS for short) is an application in combination with V2X. Based on the V2X technology, a vehicle user (Vehicle UE, V-UE for short) can send, to a V-UE nearby, some information about the vehicle user, for example, information such as a position, a speed, and an intention (turning, merging, or reversing), and information triggered by some periodic and aperiodic events, and the V-UE can also receive information from a user nearby in real time. 5G NR V2X can support a lower transmission latency, more reliable communication transmission, a higher throughput, and better user experience, thereby meeting requirements of more extensive application scenarios. Further, a vehicle-to-vehicle communication technology supported by V2X may be further applied to device-to-device (Device-to-Device, D2D for short) communication in any system.

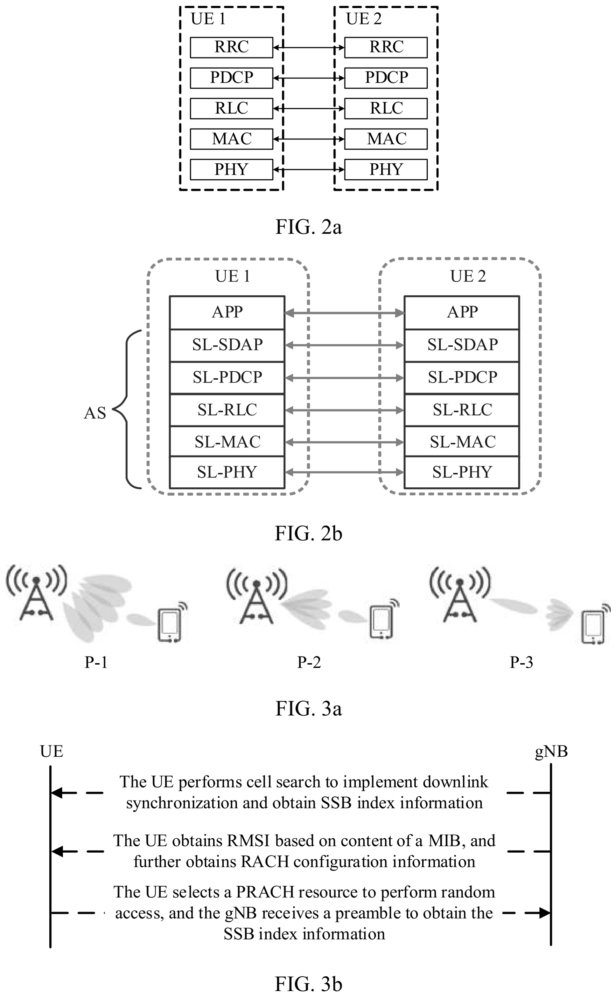

In an implementation example, in a process in which the UE 1 and the UE 2 that are shown in FIG. 1b communicate with each other on the sidelink, a structure of a control plane protocol stack is shown in FIG. 2a. In FIG. 2a, interaction of at least one control plane protocol layer such as a radio resource control (radio resource control, RRC) layer, a packet data convergence protocol (packet data convergence protocol, PDCP) layer, a radio link control (radio link control, RLC) layer, a medium access control (medium access control, MAC) layer, or a physical (physical, PHY) layer is included between the UE 1 and the UE 2.

In an implementation example, in a process in which the UE 1 and the UE 2 that are shown in FIG. 1b communicate with each other on the sidelink, a structure of a user plane protocol stack is shown in FIG. 2b. In FIG. 2b, interaction of at least one user plane protocol layer such as an application (application, APP) layer, a sidelink service data adaptation protocol (sidelink service data adaptation protocol, SL-SDAP) layer, a sidelink packet data convergence protocol (sidelink packet data convergence protocol, SL-PDCP) layer, a sidelink radio link control (sidelink radio link control, SL-RLC) layer, a sidelink medium access control (sidelink medium access control, SL-RLC) layer, or a sidelink physical (sidelink physical, SL-PHY) layer is included between the UE 1 and the UE 2.

Optionally, in FIG. 2b, the SL-SDAP layer, the SL-PDCP layer, the SL-RLC layer, the SL-RLC layer, the SL-PHY layer, or the like may be referred to as an access stratum (access stratum, AS).

For ease of understanding of the technical solutions provided in this application, the following describes, by using the communication scenario with the uplink-downlink and the sidelink shown in FIG. 1a, a communication technology that may be used in this application.

The following implementation processes in FIG. 3a to FIG. 3b mainly relate to uplink-downlink beam management.

Beam management is an important technology in NR, is a process in which a network device and a terminal device obtain and maintain a set of beams used for sending and receiving, and is a reference workflow for beamforming in a multiple-input multiple-output (multi-input multi-output, MIMO) system. For example, the network device is a base station (base station, BS) and the terminal device is a UE. In this case, beam management includes the following four technical points:

① beam determination (beam determination): a process in which the BS or the UE selects a transmit or receive beam of the BS or the UE;

② beam measurement (beam measurement): a process in which the BS or the UE measures a received beamforming signal;

③ beam reporting (beam reporting): a process in which the UE reports a beam measurement result to the base station; and

④ beam sweeping (beam sweeping): a process in which the BS or the UE sequentially selects, within a time range in a specified sweeping manner, a beam for sending or receiving, to cover a spatial area.

For example, as shown in FIG. 3a, beam management may be classified into three states based on operating situations, and operations of the states are summarized as follows:

P-1: The UE measures a transmit beam set of the BS, and selects a transmit beam of the BS and a receive beam of the UE.

P-2: Based on P-1, the UE measures a smaller transmit beam set of the BS, to improve the transmit beam of the BS.

P-3: The UE measures the same transmit beam of the BS by using different receive beams, to improve the receive beam of the UE.

It may be understood that, downlink beam management is performed based on the four technical points and the operations of the three states, and a basic procedure of downlink beam management is as follows: The BS configures a maximum of 64 beam directions and a time-frequency resource that needs be used by the UE for beam reporting. Each beam direction corresponds to one synchronization signal/physical broadcast channel block (synchronization signal/-physical broadcast channel block, SS/PBCH block) (or denoted as an SS/PBCH, an SSB, or the like).

Optionally, in addition to an implementation process of the SSB, in an uplink-downlink communication process, a channel state information reference signal (CSI-RS) may also be used for beam management. The following uses the SSB as an example for description.

In a possible implementation, the SSB includes two types of synchronization signals: a primary synchronization signal (primary synchronization signal, PSS) and a secondary synchronization signal (secondary synchronization signal, SSS). Sequences of the two types of synchronization signals are generated based on a synchronization signal identifier (synchronization signal identifier, SSID). For example, the SSID corresponds to a physical-layer cell identity (physical-layer cell ID), and the identifier (denoted as $N_{ID}^{cell}$) is determined in the following manner:

$$N_{ID}^{cell} = 3N_{ID}^{(1)} + N_{ID}^{(2)}.$$

$N_{ID}^{(1)} \in \{0,1, \dots ,335\}$ and $N_{ID}^{(2)} \in \{0,1,2\}$. The sequence of the PSS is generated based on $N_{ID}^{(2)}$, and the sequence of the SSS is generated based on $N_{ID}^{(1)}$ and $N_{ID}^{(2)}$. For the UE, after receiving the SSB, the UE may obtain corresponding $N_{ID}^{(1)}$ and $N_{ID}^{(2)}$ by performing blind detection on the PSS and the SSS, and correspondingly obtain $N_{ID}^{cell}$. Based on $N_{ID}^{cell}$ or the corresponding SSID, the UE is capable of distinguishing between SSBs sent by gNBs.

In addition, the BS sequentially sends the SSB to each direction in a sweeping manner, and the UE performs beam measurement to obtain reference signal received power (reference signal received power, RSRP) of the SSB. The UE needs to map the measured SSB RSRP to a 6-bit SSB sequence number. Therefore, the UE obtains 3 least significant bits from a physical broadcast channel (Physical Broadcast Channel, PBCH) demodulation reference signal (Demodulation Reference Signal, DMRS), obtains 3 most significant bits from PBCH payload (payload) bits, and obtains a sequence number of the received SSB through combination. The PBCH DMRS is generated based on a pseudo-random sequence, and a manner in which the PBCH DMRS carries the 3 least significant bits of the SSB sequence number is to determine an initial value $c_{init}$ of the pseudo-random sequence by using the 3 bits.

For example, a process of generating the PBCH DMRS is as follows:

$$r(n) = \frac{1}{\sqrt{2}}\big(1 - 2 \cdot c(2n)\big) + j\frac{1}{\sqrt{2}}\big(1 - 2 \cdot c(2n + 1)\big).$$

r(n) is a PBCH DMRS sequence, and c(n) is the pseudo-random sequence, and is determined based on the following formula:

$$c(n) = \big(x_1(n + N_C) + x_2(n + N_C)\big)\bmod 2,$$

where

$$x_1(n + 31) = \big(x_1(n + 3) + x_1(n)\big)\bmod 2;$$

and

$$x_2(n + 31) = \big(x_2(n + 3) + x_2(n + 2) + x_2(n + 1) + x_2(n)\big)\bmod 2.$$

$N_C = 1600$, $x_1(n)$ and $x_2(n)$ are two m sequences. 31 initial values of $x_1(n)$ are $x_1(0) = 1$ to $x_1(n) = 0$, where n = 1,2, ... ,30. 31 initial values of $x_2(n)$ are determined based on $c_{init} = \sum_{i=0}^{30} x_2(i) \cdot 2^i$. A manner of setting $c_{init}$ of the PBCH DMRS is as follows:

$$c_{init} = 2^{11}(\bar{I}_{SSB} + 1)\big(\lfloor N_{ID}^{cell}/4 \rfloor + 1\big) + 2^6(\bar{I}_{SSB} + 1) + \big(N_{ID}^{cell} \bmod 4\big).$$

$N_{ID}^{cell}$ is the physical-layer cell identity. When a maximum quantity of SSBs is 4, $\bar{I}_{SSB} = i_{SSB} + 4n_{hf}$. $i_{SSB}$ indicates 2 least significant bits of the SSB sequence number, $n_{hf}$ indicates whether the SSB is located in the first half part or the second half part of a frame in which the SSB is located. If the SSB is located in the first half part, $n_{hf} = 0$. If the SSB is located in the second half part, $n_{hf} = 1$. When the maximum quantity of SSBs is 8 or 64, $\bar{I}_{SSB} = i_{SSB}$ indicates 3 least significant bits of the SSB sequence number. The UE obtains the SSB sequence number by performing blind detection on the PBCH DMRS. Then, the UE selects an SSB set through RSRP comparison, and reports an SSB sequence number in the set and corresponding RSRP to the base station on a given time-frequency resource. The base station performs beam determination by using the reported information. In this way, an initial beam selection process is completed. A similar procedure is performed for uplink beam management, but a different reference signal is used.

In NR, when the UE feeds back an optimal transmit beam of the base station, to enable the base station to receive the feedback, the base station needs to receive feedback information by using a corresponding beam that is used to send the SSB. For example, when the base station sends the SSB on a beam 1, a beam 2, ..., and a beam 8 in a sweeping manner, the UE receives the SSB and determines that a strongest SSB beam is the beam 2. In this case, during optimal beam feedback, the base station needs to perform receiving by using the beam 2 that is used to send the SSB. For example, the base station is a gNB. A feedback procedure of the UE is shown in FIG. 3b, and includes the following steps.

Step 1. The UE performs cell search to implement downlink synchronization and obtain SSB index (SSB index) information.

Step 2. The UE obtains remaining minimum system information (remaining minimum system information, RMSI) based on content of a master information block (master information block, MIB), and further obtains random access channel (random access channel, RACH) configuration information.

Step 3. The UE selects a PRACH resource to perform random access, and the gNB receives a preamble (preamble) to obtain the SSB index information.

In the foregoing implementation process, the SSB index (optimal downlink beam) information is carried to the NR base station by using a mapping relationship between an SSB index and a PRACH resource, that is, a time-domain position at which each SSB is sent corresponds to a PRACH resource feedback time-domain position. Therefore, when the UE performs feedback at a PRACH feedback position, the base station may perform receiving by using a corresponding beam used to send the SSB. In addition, NR PRACH time-domain positions are flexible, and support selection of different periods (for example, 10 ms, 20 ms, 40 ms, 80 ms, and 160 ms), frame numbers, subframe numbers, and start symbols. A plurality of configuration options are defined in a protocol. Optionally, one SSB sending slot corresponds to one PRACH sending slot of the UE.

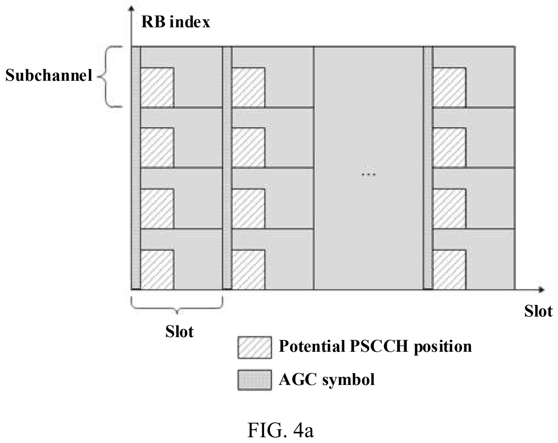

The following implementation processes in FIG. 4a to FIG. 4b mainly relate to sidelink resource selection.

In a network coverage area, the terminal device may obtain SL resource pool (resource pool) configuration information and/or SL bandwidth part (bandwidth part, BWP) configuration information by receiving a system information block (system information block, SIB), cell-specific (cell-specific) radio resource control (radio resource control, RRC) signaling, terminal apparatus user-specific (UE-specific) RRC signaling, or the like from the network device.

In addition, the terminal apparatus may alternatively use pre-configured SL resource pool configuration information or SL BWP configuration information. Resources in the resource pool include resources used by the terminal apparatus to send and receive at least one of the following physical channels:

a physical sidelink control channel (physical sidelink control channel, PSCCH), used to carry SCI;
a PSSCH, used to carry at least one of control information, data, sidelink CSI feedback information, or the like;
a physical sidelink discovery channel (physical sidelink discovery channel, PSDCH), used to carry a discovery message;
a PSFCH, used for sidelink feedback information, where the sidelink feedback information may be used for response feedback information for data information (including a hybrid automatic repeat request (hybrid automatic repeat request, HARQ), for example, an acknowledgment (acknowledgment, ACK) response or a negative acknowledgment (negative acknowledgment, NACK) response, may further include channel state indication (channel state information, CSI) feedback information), and may further indicate at least one of the following information, such as energy saving information, or resource assistance information (including a resource recommended and a resource not recommended, a resource collision, a resource reservation conflict, a half-duplex conflict that has occurred in the past or that is about to occur in the future); or
a PSBCH, used to carry information related to sidelink synchronization, or the like.

Optionally, a type of a service carried on the PSSCH may include a unicast communication type, a multicast communication type, and/or a broadcast communication type.

In time domain, the SL resource pool includes one or more time units. The time unit may be one or more symbols, one or more slots (slot), one or more mini-slots (mini-slot), one or more subframes, one or more frames, or the like. The one or more time units may be consecutive or discrete in time. It should be understood that time domain units in one resource pool are logically consecutive. In this application, for understanding of definitions of the symbol, the mini-slot, the slot, the subframe, and the frame, refer to 3GPP TS 38.211. In this application, unless a meaning of the time unit is specially specified, the slot is used for description, but the time unit is not limited to the slot. Unless a meaning of a frequency domain unit is specially specified, a subchannel is used for description, but the frequency domain unit is not limited to the subchannel.

SCI of an NR SL system is classified into 1st-stage SCI and 2nd-stage SCI. The PSCCH carries the 1st-stage SCI. The 1st-stage SCI is used to schedule the 2nd-stage SCI and the PSSCH. Because the SL is a distributed system, all UEs need to correctly decode the 1st-stage SCI before decoding the 2nd-stage SCI and the PSSCH.

Optionally, to reduce complexity of blind detection (blind decoding) performed by the UE on the PSCCH, a resource position of the PSCCH is fixed, and format information of the carried 1st-stage SCI is unique. Therefore, the UE does not need to blindly detect a time-frequency resource position of the PSCCH or blindly detect SCI in different formats, but only needs to detect, at a fixed PSCCH time-frequency resource position, whether 1st-stage SCI exists.

Optionally, as shown in FIG. 4a, the PSCCH may exist in each subchannel in each slot. To be specific, a time-domain position of the PSCCH starts from the second symbol used for SL transmission in each slot, and has a length of two or three symbols (determined based on the resource pool configuration information), and a frequency-domain position of the PSCCH starts from the smallest PRB index of each subchannel, and has a length of at least 10 PRBs (determined based on the resource pool configuration information) but not exceeding a size of the subchannel.

In a possible implementation, a frequency domain resource assistance (Frequency resource assignment) field and a time domain resource assistance (Time resource assignment) field in the 1st-stage SCI respectively indicate a frequency domain resource and a time domain resource for transmitting the PSSCH, and a resource reservation period (Resource reservation period) field indicates a periodically reserved resource for transmitting the PSSCH. A value of the resource reservation period field is configured by the network device, pre-configured, or predefined, for example, indicated by using first RRC signaling, where the first RRC signaling may be determined based on sl-ResourceReservePeriod1.

In addition, the 2nd-stage SCI is carried in the PSSCH. Generally, the 2nd-stage SCI does not occupy a resource of the PSCCH, a demodulation reference signal (demodulation reference signal, DMRS), or a phase tracking reference signal (phase tracking reference signal, PT-RS). The 2nd-stage SCI is mainly used for NR SL hybrid automatic repeat request (hybrid automatic repeat request, HARQ) feedback, indicating related information such as a HARQ process number (process number), a source identifier (source ID), or a destination identifier (destination ID). For example, in the 2nd-stage SCI, the source identifier has 8 bits (bit), and the destination identifier has 16 bits. Correspondingly, 16 most significant bits of a source layer-2 identifier (source layer-2 ID) and 8 most significant bits of a destination layer-2 identifier (destination layer-2 ID) are carried in a MAC CE. Therefore, a complete source identifier is a combination of a source layer-1 identifier with 8 least significant bits and the source layer-2 identifier with 16 most significant bits, and a complete destination identifier is a combination of a destination layer-1 identifier with 16 least significant bits and the destination layer-2 identifier with 8 most significant bits, that is, the source identifier is jointly carried by the 2nd-stage SCI and the MAC CE, and the destination identifier is also jointly carried by the 2nd-stage SCI and the MAC CE. A format of the 2nd-stage SCI is indicated by a 2nd-stage SCI format (2nd-stage SCI format) field in the 1st-stage SCI. For example, the 2nd-stage SCI format field is shown in Table 1.

Table 1

| Value of the 2nd-stage SCI format field | 2nd-stage SCI format |
|---|---|
| 00 | SCI format 2-A |
| 01 | SCI format 2-B |
| 10 | SCI format 2-C |
| 11 | Reserved |

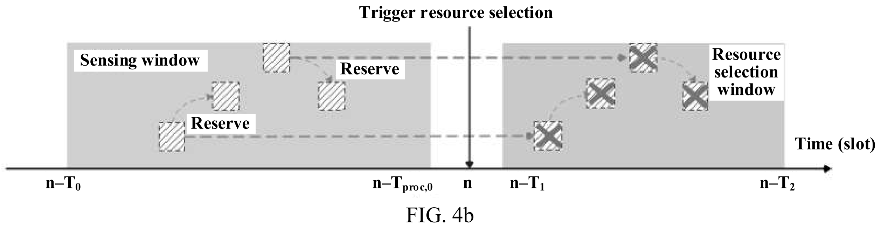

In a possible implementation, a transmission resource of a transmit-end UE in the mode (mode 2) in which a user autonomously selects a resource does not depend on the base station. The transmit-end UE autonomously selects, in a resource selection window based on a result of sensing in a sensing window of the transmit-end UE, a transmission resource for communication. Assuming that the transmit-end UE triggers resource selection in a slot n, a specific resource selection procedure is shown in FIG. 4b.

Step 1. Determine a candidate resource $R_{x,y}$ in units of one slot and $L_{subCH}$ consecutive subchannels and a resource selection window $[n + T_1, n + T_2]$. $0 \leq T_1 \leq T_{proc,1}^{SL}$, $T_{proc,1}^{SL}$ is determined based on Table 2, $\mu_{SL}$ is a configured subcarrier spacing, and $T_1$ is selected based on implementation. If $T_{2min}$ (configured by a higher layer) is less than a remaining PDB (data packet delay), $T_{2min} \leq T_2 \leq$ PDB (data packet delay), and $T_2$ is selected based on implementation; otherwise, $T_2$ is equal to the remaining PDB.

$L_{subCH}$ indicates a quantity of subchannels used to transmit the PSSCH/PSCCH in a slot, and is configured by using a higher-layer parameter.

Table 2

| $\mu_{SL}$ | $T_{proc,1}^{SL}$ [slots] |
|---|---|
| 0 | 3 |
| 1 | 5 |
| 2 | 9 |
| 3 | 17 |

Table 3

| $\mu_{SL}$ | $T_{proc,0}^{SL}$ [slots] |
|---|---|
| 0 | 1 |
| 1 | 1 |
| 2 | 2 |
| 3 | 4 |

Step 2. Determine a sensing window $\left[n - T_0, n - T_{proc,0}^{SL}\right)$. $T_0$ is configured by using a higher-layer parameter, and $T_{proc,0}^{SL}$ is determined based on Table 3.

Step 3. Determine a reference signal received power (reference signal received power, RSRP for short) threshold $Th(p_i,p_j)$. The RSRP threshold and $prio_{TX}$ of to-be-sent data are related to a priority $prio_{RX}$ indicated by received sidelink control information (Sidelink Control Information, SCI for short), and $Th(p_i,p_j)$ is specifically a $(prio_{RX}+(prio_{TX}-1)$ $*8)^{th}$ threshold in an RSRP threshold set configured for a resource pool.

Step 4. Initialize an available resource set $S_A$ to include all time-frequency resources in the resource selection window.

Step 5. Exclude the following time-frequency resources from $S_A$: slots reserved for all periodic resources configured in a resource pool corresponding to a slot (a slot for sending) that is not sensed in the sensing window.

It may be understood that, due to a half-duplex problem, the UE cannot perform receiving during sending, and the slot that is not sensed may be a slot that is in the sensing window and that is used by the UE for sending.

Optionally, if a quantity of the time-frequency resources excluded from $S_A$ is less than X% of a total quantity of resources in the resource selection window, the initialization in step 4 is re-performed.

Step 6. Continue to exclude the following time-frequency resources from $S_A$: resources on which received 1st-stage SCI is successfully decoded, a result of RSRP measurement performed on a PSSCH DMRS on a time-frequency resource reserved by the received 1st-stage SCI is greater than the RSRP threshold determined in step 3, and a time-frequency resource reserved by the received 1st-stage SCI is in the resource selection window, including a retransmission resource and a periodically reserved resource that are indicated by the 1st-stage SCI.

Step 7. If a quantity of remaining resources in $S_A$ is less than X% of the total quantity of resources in the resource selection window, where a value of X% is configured based on the resource pool and is related to $prio_{TX}$, increase the RSRP threshold determined in step 3 (increase by 3 each time), until the quantity of remaining resources in $S_A$ is not less than X% of the total quantity of resources in the resource selection window, and continue to perform step 4.

Then, $S_A$ is reported to a higher layer (MAC layer). In addition, a time-frequency resource $(r_0, r_1, r_2, ...)$ is randomly selected in $S_A$ to send data. Before the sending, resource re-evaluation is performed on $(r_0, r_1, r_2, ...)$, and after the re-evaluation, preemption detection is performed on a resource ($r_0', r_1', r_2', \cdots$) selected from $S_A$. In addition, the user performs resource re-evaluation and preemption detection at a moment of at least a slot m-T3 ($T_3 = T_{proc,1}^{SL}$), and the UE may additionally trigger resource re-evaluation and/or preemption detection before and after the slot m-T3 based on implementation. A manner for determining whether $(r_0, r_1, r_2, ...)$ and ($r_0', r_1', r_2', \cdots$) need to be excluded is the same as that in step 7, and one of the following conditions is met:

(1) An sl-PreemptionEnable parameter is provided and is configured to be enabled, and $prio_{TX}>prio_{RX}$.
(2) The sl-PreemptionEnable parameter is provided and is not configured to be enabled, and $prio_{RX}<prio_{pre}$ and $prio_{TX}>prio_{pre}$ are met, where $prio_{pre}$ is configured by a higher layer. If $r_i$ and/or $r_i'$ in $(r_0, r_1, r_2, ...)$ and ($r_0', r_1', r_2', \cdots$) do/does not belong to $S_A$ (that is, $r_i$ and $r_i'$ are excluded during re-evaluation and/or preemption detection respectively), $r_i$ and/or $r_i'$ are/is reselected. A slot m is a next slot for sending, that is, the slot m belongs to $(r_0, r_1, r_2, ...)$ and ($r_0', r_1', r_2', \cdots$).

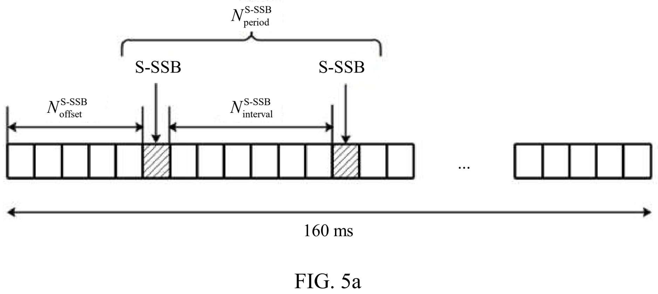

The following implementation processes in FIG. 5a to FIG. 5b mainly relate to an S-SSB transmission process.

In a possible implementation, when a UE determines that an S-SSB needs to be broadcast, the UE determines, based on S-SSB configuration information in radio resource control (radio resource control, RRC) signaling or pre-configuration (pre-configuration) by using a period of 160 ms (that is, 16 radio frames), a time-domain position for transmitting the S-SSB. The RRC signaling is control information sent by a network device (for example, a gNB or an eNB) to the UE, the pre-configuration is control information recorded in hardware and/or software of the UE, and the S-SSB configuration information includes the following three parameters:

① $N_{period}^{S-SSB}$ indicates a quantity of S-SSBs transmitted in the period of 160 ms, as shown in Table 4, where the quantity varies with different SCS configuration:

Table 4

| Frequency range | Subcarrier spacing | Possible value of $N_{period}^{S-SSB}$ |
|---|---|---|
| FR1 | 15 kHz | 1 |
| | 30 kHz | 1, 2 |
| | 60 kHz | 1,2,4 |
| FR2 | 60 kHz | 1, 2, 4, 8, 16, 32 |
| | 120 kHz | 1, 2, 4, 8, 16, 32, 64 |

② $N_{offset}^{S-SSB}$ indicates a slot offset between the first S-SSB transmitted in the period and a start point of the period.

③ $N_{interval}^{S-SSB}$ indicates a slot interval between two adjacent S-SSBs in the period. $N_{period}^{S-SSB}$ needs to be greater than 1.

Based on the foregoing three parameters, a position for transmitting the S-SSB by the UE is determined statically or semi-statically (semi-static). For example, when $N_{period}^{S-SSB} = 2$, $N_{offset}^{S-SSB} = 5$, and $N_{interval}^{S-SSB} = 6$, a time-domain position for transmitting the S-SSB is shown in FIG. 5a. For each 160 ms period, the UE transmits the S-SSB in two slots whose slot indexes are 5 and 12. A value range of the slot index is a natural number starting from 0.

In addition, the S-SSB broadcast by the UE includes 56-bit PSBCH payload (payload), and the PSBCH payload includes the following fields (field):

① sl-TDD-Config field: a 12-bit sequence, indicating uplink-downlink time division duplex (Time Division Duplex, TDD) information;
② inCoverage field: a 1-bit Boolean variable, where when a value is "True", it indicates that the UE transmitting the S-SSB is in network coverage, or the UE uses a GNSS as a synchronization source;
③ directFrameNumber field: a 10-bit sequence, indicating a DFN corresponding to a radio frame used to transmit the S-SSB;
④ slotIndex field: a 7-bit sequence, indicating a slot index corresponding to a slot used to transmit the S-SSB; and
⑤ reservedBits field: a 2-bit sequence, used as reserved bits for subsequent function extension.

The foregoing 32 bits form, with 24 cyclic redundancy check (cyclic redundancy check, CRC) bits added, the 56-bit PSBCH payload transmitted in the S-SSB. After successfully decoding the PSBCH payload, a receive-end UE may align a radio frame and a slot with the transmit-end UE of the S-SSB based on the 10-bit directFrameNumber field and the 7-bit slotIndex field, to complete a basic synchronization process.

In a possible implementation, based on the foregoing specific S-SSB transmission method, when a plurality of UEs determine that the S-SSB needs to be broadcast, the plurality of UEs may transmit the S-SSB in a same slot by using same S-SSB configuration information in RRC signaling or pre-configuration. The S-SSBs transmitted by the plurality of UEs have same PSBCH payload. In this way, another UE may determine transmission positions of the S-SSBs by using the same S-SSB configuration information in RRC signaling or pre-configuration, and then simultaneously receive the S-SSBs from the plurality of UEs at the transmission positions of the S-SSBs, and combine and decode the S-SSBs of the plurality of UEs, to improve S-SSB receiving performance.

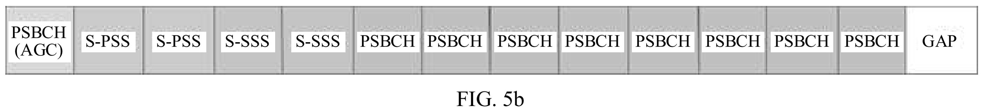

A time domain structure of an S-SSB slot is shown in FIG. 5b. A length of the S-SSB slot is 14 OFDM symbols. The 0th symbol is used for automatic gain control (automatic gain control, AGC), and is a duplication from the 5th PSBCH symbol. The 1st and 2nd symbol positions are used to transmit a sidelink primary synchronization signal (Sidelink Primary Synchronization Signal, S-PSS). The 3rd and 4th symbol positions are used to transmit a sidelink secondary synchronization signal S-SSS (Sidelink Secondary Synchronization Signal, S-SSS). The last symbol is set to null, that is, a GAP symbol, and is used for switching between receiving and sending. Remaining symbol positions are used to transmit PSBCH information.

Similar to the SSB, there are two types of S-PSS sequences in the S-SSB. For a given SLPSS sequence, there are 336 S-SSS sequences. Therefore, 672 SL-SSIDs may be determined in total based on sequence types of the S-PSS and the S-SSS, whose expression is as follows:

$$N_{ID}^{SL} = N_{ID,1}^{SL} + 336 N_{ID,2}^{SL}.$$

$N_{ID,1}^{SL} \in \{0,1,...,335\}$, and $N_{ID,2}^{SL} \in \{0,1\}$. The SSIDs are classified into two sets: an id_net set including $N_{ID}^{SL} = 0,1,...,335$ and an id_oon set including $N_{ID}^{SL} = 336,337,...,671$.

Optionally, the following functions may be implemented by configuring different SL-SSIDs for S-SSBs:

① Identify a type of a synchronization source. The synchronization source includes a global navigation satellite system (global navigation satellite system, GNSS), a gNB, a reference UE, and the like. Different SL-SSIDs are configured for different S-SSBs, so that a receive-end UE is capable of identifying the type of the synchronization source. For example, when the SL-SSID is 0 or 336, it may indicate that the type of the synchronization source is the GNSS.

② Identify whether a synchronization source is in or outside coverage. For example, SL-SSIDs within an integer range of 1 to 335 may be used for a synchronization source in cell coverage, and SL-SSIDs within an integer range of 337 to 671 may be used for a synchronization source outside the cell coverage.

③ Identify whether a transmit-end UE is directly or indirectly connected to the synchronization source. For example, when sending the S-SSB, the transmit-end UE may use an SL-SSID depending on whether the transmit-end UE is directly or indirectly connected to the synchronization source. An SL-SSID used by the transmit-end UE directly connected to the synchronization source reflects a high synchronization priority of the transmit-end UE. An SL-SSID used by the transmit-end UE indirectly connected to the synchronization source reflects a low synchronization priority of the transmit-end UE.

In a possible implementation, priorities of SSB synchronization signals are shown in Table 5. PX represents a priority group X (priority group X), and X = 0,1, ... ,6. inCoverage is a parameter in a sidelink master information block (MasterInformationBlockSidelink), and has a value of true or false.

Table 5

| Priority | GNSS-based synchronization | gNB/eNB-based synchronization |
|---|---|---|
| P0 | GNSS | gNB/eNB |
| P1 | $N_{ID}^{SL} = 0$ | inCoverage = true $N_{ID}^{SL} \in \{1,...,335\}$ inCoverage = true |
| | $N_{ID}^{SL} = 0$ the SSB is sent in a slot indicated by sl-SSB-TimeAllocation3 | |
| P2 | $N_{ID}^{SL} = 0$; ;inCoverage = false;the SSB is not sent in the slot indicatedby sl-SSB-TimeAllocation3 | $N_{ID}^{SL} \in \{1,...,335\}$; inCoverage = false |
| | $N_{ID}^{SL} = 337$ inCoverage = false; | |
| P3 | gNB/eNB | GNSS |
| P4 | $N_{ID}^{SL} \in \{1,...,335\}$ ;inCoverage = true; | $N_{ID}^{SL} = 0$ inCoverage = true |
| | | $N_{ID}^{SL} = 0$; inCoverage = true; the SSB is sent in the slot indicated by sl-SSB-TimeAllocation3 |
| P5 | $N_{ID}^{SL} \in \{1,...,335\}$ ;inCoverage = false | $N_{ID}^{SL} = 0$; inCoverage = false; the SSB is not sent in the slot indicated by sl-SSB-TimeAllocation3 |
| | | $N_{ID}^{SL} = 337$; inCoverage = false |
| P6 | Others | Others |

In addition, an S-SSB sending method in the long term evolution internet of vehicles (LTE V2X, LTE-V) is reused. S-SSB sending may be triggered by the gNB or the UE, but S-SSB sending is triggered for synchronization.

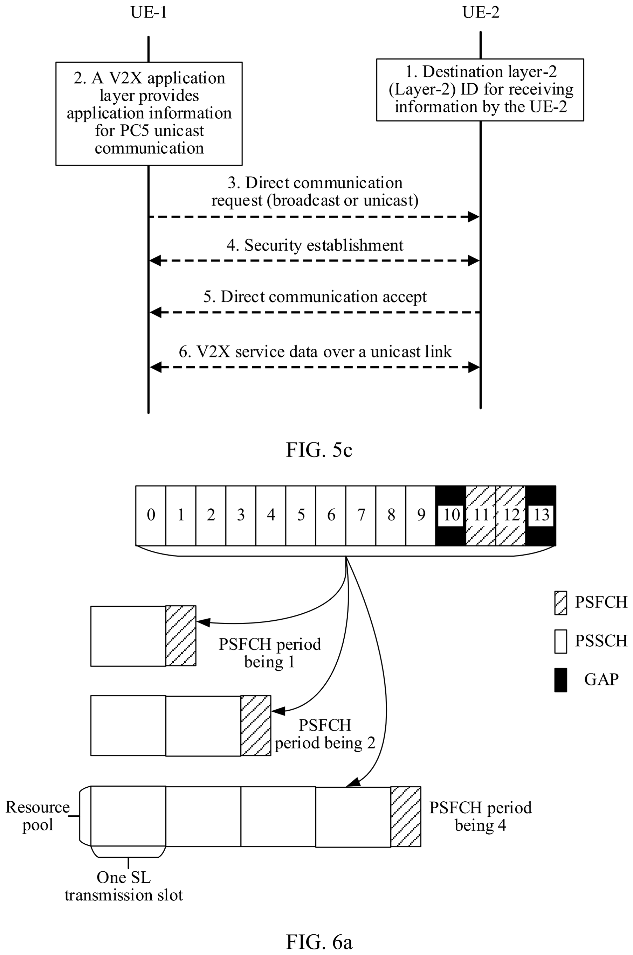

In a possible implementation, in the SL system, after synchronization is completed and before data is transmitted, a link establishment process between UEs further needs to be performed. A V2X unicast layer-2 (layer-2) link establishment procedure at a PC5 reference point is shown in FIG. 5c, and includes the following steps.

Step 1. A UE determines a destination layer-2 ID used to receive PC5 unicast link establishment information, where the used layer-2 ID depends on a communication peer end. A layer-2 ID of the communication peer end is identified by an application layer ID, and may be determined in a PC5 link establishment process, or may be obtained in previous V2X communication. In initial signaling used to establish a PC5 unicast link, a known layer-2 ID of the communication peer or a default destination layer-2 ID associated with a V2X service type configured to establish a PC5 unicast link may be used.

Step 2. A V2X application layer of a UE-1 provides application information for PC5 unicast communication. The application information includes a V2X service type and an application layer ID of an initiating UE. An application layer ID of a target UE may be included in the application information.

Step 3. The UE-1 sends direct communication request (Direct Communication Request, DCR) information to start a unicast layer-2 link establishment procedure. The DCR includes at least one of the following: source user information: the application layer ID (UE-1) of the initiating UE; if the V2X application layer provides the application layer ID of the target UE in S2, the DCR needing to include target user information, that is, the application layer ID (UE-2) of the target UE; V2X service information: V2X service type information for requesting layer-2 link establishment; or security information: information for security establishment.

In step 3, the UE-1 sends the DCR by using a source layer-2 ID and a destination layer-2 ID through PC5 broadcast or unicast.

Step 4. Security establishment: If the DCR information does not include the target user information, the target UE (UE-2) responds by establishing security with the UE-1.

When security protection is enabled, the UE-1 sends at least one of the following to the target UE: QoS information; IP address configuration (if IP communication is performed) including "IPv6 Router" or "IPv6 address allocation not supported"; or a link-local IPv6 address (if IP communication is performed).

S5. The target UE that successfully establishes security with the UE-1 sends a direct communication accept (Direct Communication Accept, DCA) message to the UE-1. If the target user information is included in the DCR message, the target UE (UE-2) responds with the DCA message if the application layer ID of the UE-2 matches the target user information. The DCA includes: the source user information: the application layer ID of the UE that sends the DCA information; QoS information; IP address configuration (if IP communication is performed) including "IPv6 Router" or "IPv6 address allocation not supported"; or a link-local IPv6 address (if IP communication is performed).

Step 6. V2X service data is transmitted over an established unicast link.

The following implementation processes in FIG. 6a to FIG. 6b mainly relate to a PSFCH corresponding to physical sidelink shared channel (physical sidelink shared channel, PSSCH) transmission.

NR-V2X supports physical-layer HARQ-ACK feedback. To be specific, for one PSSCH transmission, if a transmit-end user places HARQ-ACK feedback-enabled information into control information, a receive-end user needs to feed back corresponding ACK/NACK information based on a current PSSCH decoding result. The ACK/NACK information is transmitted through the PSFCH channel.

For example, a PSFCH channel resource is a periodic resource configured in a resource pool, and a period configuration parameter $N_{\mathrm{PSSCH}}^{\mathrm{PSFCH}}$ of the PSFCH channel resource may be 0, 1, 2, or 4. $N_{\mathrm{PSSCH}}^{\mathrm{PSFCH}} = 0$ indicates that there is no PSFCH resource configuration in the resource pool, and PSFCH sending is not enabled in the resource, that is, physical-layer HARQ feedback is not supported. $N_{\mathrm{PSSCH}}^{\mathrm{PSFCH}} = 1,2,4$ indicates that there is one PSFCH feedback slot in every $N_{\mathrm{PSSCH}}^{\mathrm{PSFCH}}$ SL slots in a time window. As shown in FIG. 6a, in a slot in which a physical resource of the PSFCH is located, the PSFCH occupies the last two symbols before a GAP.

In addition, in NR-V2X, a PSFCH feedback resource is configured for each PSSCH subchannel. A specific process of determining the PSFCH resource corresponding to each subchannel is as follows:

A bitmap (bitmap) of a PSFCH frequency domain resource is configured for the resource pool, to indicate whether a specific PRB in a frequency domain resource on which the resource pool is located can be used as a PSFCH resource. To be specific, a length of bit information included in the bitmap is equal to a quantity of PRBs in the resource pool. 1 in the bitmap indicates that a corresponding PRB can be used for PSFCH transmission, and a bit 0 indicates that a corresponding PRB resource cannot be used for PSFCH transmission. Particularly, the PSFCH resource may be used for HARQ-ACK transmission, and a resource for HARQ-ACK transmission is indicated by using an "sl-PSFCH-RB-Set" bitmap. A bit value 1 in the bitmap indicates that a corresponding PRB can be used for HARQ-ACK feedback. In addition, the PSFCH resource may be used for scheme 2 conflict indication, and a resource for scheme 2 conflict indication is indicated by using an "sl-RB-SetPSFCH" bitmap. 1 in the bitmap indicates that a corresponding PRB resource can be used for scheme 2 conflict indication. It should be noted that, a position of the bit value 1 in "sl-PSFCH-RB-Set" does not overlap a position of the bit value 1 in "sl-RB-SetPSFCH".

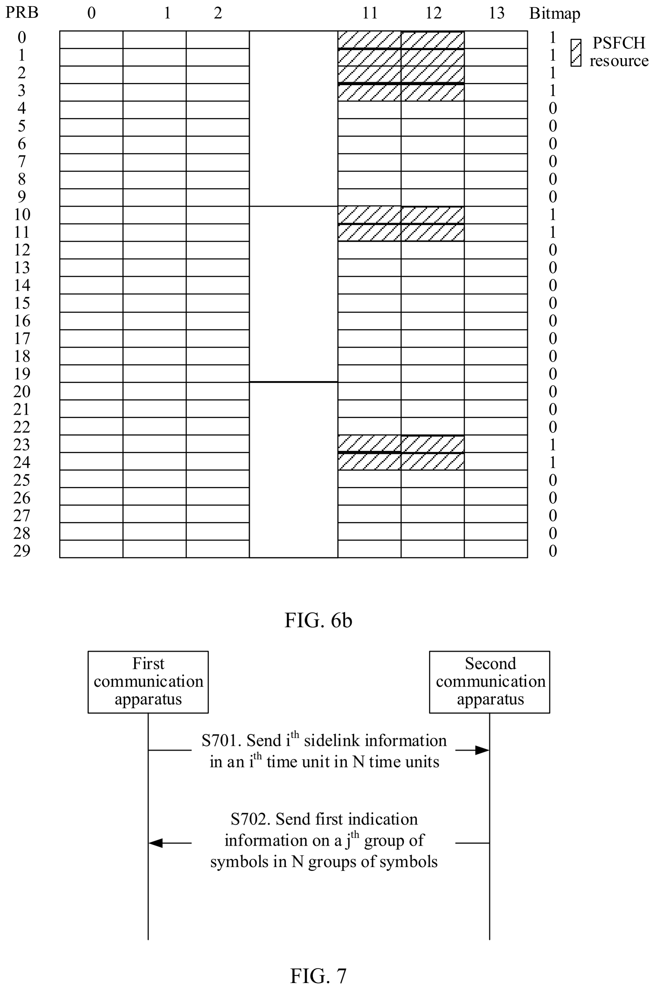

For example, as shown in FIG. 6b, in a slot having a PSFCH transmission resource, assuming that one subchannel includes 10 PRBs, and a resource pool includes three subchannels in total, a bitmap indicating a PSFCH frequency domain resource in the resource pool includes 3*10=30 bits in total, to indicate whether each PRB can be used for PSFCH transmission. As shown in FIG. 6b, the bitmap indicates that the first four PRBs in the resource pool can be used for PSFCH feedback. Based on "sl-PSFCH-RB-Set" and "sl-RB-SetPSFCH" configuration of the bitmap, the four PRB resources may be used for HARQ-ACK feedback transmission, and may be used for inter-user coordinated (Inter-UE coordination, IUC) scheme 2 conflict indication transmission.

In addition, the PSFCH is a ZC sequence based on a low peak-to-average ratio, and supports a plurality of users in generating differentiated PSFCH sequences by using different $\alpha$ (12 values). The PSFCH sequences are code-division multiplexed on one RB for sending. Because a UE needs to feed back ACK and NACK information, at least two sequences are allocated to one user, respectively corresponding to different $\alpha$ values.

For example, the phase rotation value $\alpha$ is determined in the following manner:

$$\alpha_l = \frac{2\pi}{N_{sc}^{RB}} \left( \left( m_0 + m_{cs} + n_{cs}\left(n_{s,f}^{\mu}, l + l'\right) \right) \bmod N_{sc}^{RB} \right).$$

$N_{sc}^{RB}$ indicates a quantity of subcarriers in one RB, whose value is defined to be 12 in NR. $n_{s,f}^{\mu}$ indicates a slot number (slot number) corresponding to a current subcarrier spacing $\mu$ in one radio frame. l indicates a number of an OFDM symbol in a PSFCH transmission slot, and l = 0 indicates the first OFDM symbol of a current PSFCH transmission resource. l' indicates a symbol index of the current PSFCH transmission resource relative to the first OFDM symbol. $m_0$ indicates a phase of an ACK in a PSFCH feedback resource pair. $m_{cs}$ indicates a phase offset of a NACK sequence relative to the ACK sequence in the PSFCH feedback resource pair. NR-V2X supports physical-layer PSFCH feedback in unicast and multicast scenarios. Values of $m_{cs}$ for different service types are determined based on Table 6 and Table 7.

Table 6

| HARQ-ACK value | 0 (NACK) | 1 (ACK) |
|---|---|---|
| Sequence cyclic shift | $m_{CS} = 0$ | $m_{CS} = 6$ |

Table 7

| HARQ-ACK value | 0 (NACK) | 1 (ACK) |
|---|---|---|
| Sequence cyclic shift | $m_{CS} = 0$ | N/A |

The foregoing content describes some communication processes of the sidelink (SL). However, how to reduce communication complexity in an SL communication process is a technical problem that urgently needs to be resolved.

To resolve this problem, this application provides a communication method and a related device, to enable, in a process of transmitting N pieces of sidelink information in N time units, a receiver of the sidelink information to transmit, in a PSFCH by using N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

In addition, in the processes shown in FIG. 3a and FIG. 3b, both the SSB and the CSI-RS may be used for beam management in uplink and downlink communication links. However, in the processes shown in FIG. 5a to FIG. 5b, in the sidelink, the current S-SSB is used only for synchronization, and the terminal device does not perform feedback after receiving the S-SSB. Therefore, in some technical solutions provided below in this application, when a response resource is designed in the PSFCH for sidelink information such as the S-SSB and the CSI-RS, the sidelink information can also be used for beam management by using a corresponding design.

The following describes, in detail with reference to accompanying drawings, the communication method provided in this application.

FIG. 7 is a diagram of an implementation of a communication method according to this application. The method includes the following steps.

S701. A first communication apparatus sends $i^{th}$ sidelink information in an $i^{th}$ time unit in N time units. Correspondingly, a second communication apparatus receives the $i^{th}$ sidelink information in the $i^{th}$ time unit in the N time units. The sidelink information includes a sidelink synchronization signal block (sidelink synchronization signal block,

**EP 4 654 746 A1**

S-SSB) and/or a sidelink channel state information reference signal (sidelink channel state information reference signal, SL-CSI-RS), a value of i is 0 to N-1, and N is an integer greater than 1.

Optionally, in a sidelink communication process, the first communication apparatus may determine a resource pool (resource pool) in a manner of a mode 1 and/or a mode 2. The N time units in step S701 may be located outside the resource pool. Similarly, N groups of symbols, N time domain resources, and/or the like mentioned below may also be located outside the resource pool.

Optionally, the N time units mentioned in step 701 (and the N groups of symbols, the N time domain resources, and/or the like mentioned below) may be predefined, configured, or pre-configured. It may be understood that the "predefined" may be understood as that information is defined in a standard/protocol, does not need to be configured by another device (and cannot be changed by a network device or another terminal device), and is recorded/written in advance in hardware and/or software of the terminal device. The "configured" includes configuration performed by the network device and configuration performed by the terminal device. If the configuration is performed by the network device, the configuration may be performed or changed by using a SIB or RRC signaling. If the configuration is performed by the terminal device, the configuration may be performed or changed based on PC5-RRC signaling. The "pre-configured" may be understood as that information is recorded/written in advance in hardware and/or software of the terminal device (for example, a UE), is determined by a device delivery vendor, and may be changed by using software or hardware.

S702. The second communication apparatus sends first indication information on a $j^{th}$ group of symbols in N groups of symbols. Correspondingly, the first communication apparatus receives the first indication information on the $j^{th}$ group of symbols in the N groups of symbols. The first indication information indicates $j^{th}$ sidelink information, a value of j is 0 to N-1, the N time units are in one-to-one correspondence with the N groups of symbols, and the N groups of symbols are located in a physical sidelink feedback channel (physical sidelink feedback channel, PSFCH).

In this application, the sidelink synchronization signal block may be replaced with a sidelink synchronization signal/physical broadcast channel block (sidelink synchronization signal/physical broadcast channel block, SL-SS/PBCH block) (or denoted as an SL-SS/PBCH, an S-SSB, or the like).

It may be understood that, that the N time units are in one-to-one correspondence with the N groups of symbols includes that the $i^{th}$ time unit in the N time units corresponds to an $i^{th}$ group of symbols in the N groups of symbols, and a $j^{th}$ time unit in the N time units corresponds to the $j^{th}$ group of symbols in the N groups of symbols. Optionally, a $k^{th}$ group of symbols in the N groups of symbols may appear below. Correspondingly, that the N time units are in one-to-one correspondence with the N groups of symbols further includes that a $k^{th}$ time unit in the N time units corresponds to the $k^{th}$ group of symbols in the N groups of symbols.

Optionally, when the $i^{th}$ sidelink information is the S-SSB, each of the N time units may be a slot, that is, different S-SSBs are carried in different slots.

Optionally, when the $i^{th}$ sidelink information is the SL-CSI-RS, each of the N time units may be one symbol, that is, different SL-CSI-RSs are carried on different symbols.

Optionally, when the $i^{th}$ sidelink information is the SL-CSI-RS, each of the N time units may be two or more symbols, that is, different SL-CSI-RSs are carried on different symbols, and each time unit has a symbol used to carry an SL-CSI-RS, and another symbol used to carry at least one of automatic gain control (automatic gain control, AGC), a gap (GAP), or the like.

It should be noted that each of the N groups of symbols includes one or more PSFCH symbols, and the one or more PSFCH symbols are used to carry indication information (for example, the first indication information) indicating sidelink information. Optionally, each of the N groups of symbols further includes another symbol, and the another symbol is used to carry at least one of AGC, a GAP, or the like.

In a possible implementation, the $i^{th}$ sidelink information sent by the first communication apparatus in step S701 may be used for beam failure recovery (beam failure recovery, BFR) or candidate beam identification, so that the second communication apparatus can perform a BFR procedure after receiving the $i^{th}$ sidelink information. Correspondingly, after the second communication apparatus receives one or more of N pieces of sidelink information in step S701, the second communication apparatus may perform candidate beam identification. In addition, in step S702, the first indication information sent by the second communication apparatus on the $j^{th}$ group of symbols is used for a beam failure recovery request, so that the first communication apparatus can determine a candidate beam identification result of the second communication apparatus based on the first indication information, and subsequently, the first communication apparatus can send a response (that is, a beam failure recovery response) to the second communication apparatus for the identification result.

It should be understood that, similar to the implementation process of BFR in NR that is described in step ① to step ④, the beam failure recovery herein may include a plurality of processes such as the network device sending a candidate beam, the terminal device reporting an identification result (that is, a beam failure recovery request) of the candidate beam after the terminal device performs candidate beam identification, and the network device sending a response (that is, a beam failure recovery response) to the identification result. The "candidate beam identification" may be understood as one process in the BFR.

In a possible implementation, in the method shown in FIG. 7, in addition to step S701 and step S702, the method further includes: The first communication apparatus sends the $i^{th}$ sidelink information on an $i^{th}$ time resource in P time resources. The $i^{th}$ sidelink information is used for beam failure detection (beam failure detection, BFD), so that the second communication apparatus can perform a BFD procedure after receiving the $i^{th}$ sidelink information on the $i^{th}$ time resource.

Optionally, the P time resources are configured or pre-configured, or the $i^{th}$ sidelink information carried on the P time resources includes sixth indication information, and the sixth indication information indicates that the $i^{th}$ sidelink information carried on the $i^{th}$ time resource is used for beam failure detection.

Optionally, each of the P time resources may be one or more symbols, one or more slots (slot), one or more mini-slots (mini-slot), one or more subframes, one or more frames, or the like.

Optionally, the first communication apparatus may indicate, in a plurality of manners, that the $i^{th}$ sidelink information may be used for BFD, BFR, or candidate beam identification. For example, the $i^{th}$ sidelink information is carried on a pre-configured (or configured) time domain resource, so that a receiver of the $i^{th}$ sidelink information can determine, based on a time-domain position at which the $i^{th}$ sidelink information is carried, that the $i^{th}$ sidelink information may be used for BFD, BFR, or candidate beam identification. For another example, the $i^{th}$ sidelink information may explicitly carry indication information, so that after the receiver of the $i^{th}$ sidelink information obtains the indication information by parsing the $i^{th}$ sidelink information, the receiver can determine, based on the indication information, that the $i^{th}$ sidelink information may be used for BFD, BFR, or candidate beam identification. The following provides descriptions with reference to some implementation examples.

In an implementation example, if the $i^{th}$ sidelink information is used for beam failure detection, time-domain resource positions of the P time resources need to be additionally determined, that is, the $i^{th}$ sidelink information sent in the $i^{th}$ time unit of the P time resources is used for beam failure detection. The time-domain resource position used for beam failure detection may be predefined, configured, or pre-configured.

Alternatively, the $i^{th}$ sidelink information carries beam failure detection indication information (for example, the sixth indication information), and the beam failure detection indication information indicates that the $i^{th}$ sidelink information is used for beam failure detection. If the $i^{th}$ sidelink information is the S-SSB, the beam failure detection indication information may be carried in a PSBCH, a PSBCH DMRS, an S-SSS, or a P-SSS. If the $i^{th}$ sidelink information is the SL-CSI-RS, the beam failure detection indication information may be determined by using a time domain resource and/or a frequency domain resource of the SL-CSI-RS. For example, when the beam failure detection indication information is determined by using a pattern or a resource set of the SL-CSI-RS, the pattern or the resource set of the SL-CSI-RS indicates that the SL-CSI-RS is used for beam failure detection.

In another implementation example, if the $i^{th}$ sidelink information sent by the first communication apparatus in step S701 is used for candidate beam identification, the $j^{th}$ group of symbols is used by the second communication apparatus to send a beam failure recovery request in step S702, to indicate an available candidate beam. If the $i^{th}$ sidelink information is used for candidate beam identification, time-domain resource positions of the N time units need to be additionally determined, that is, the $i^{th}$ sidelink information sent in the $i^{th}$ time unit of the N time units is used only for candidate beam identification. The time-domain resource position used for candidate beam identification may be predefined, configured, or pre-configured.

Alternatively, the $i^{th}$ sidelink information carries candidate beam identification indication information (for example, third indication information), and the candidate beam identification indication information indicates that the $i^{th}$ sidelink information is used for candidate beam identification. If the $i^{th}$ sidelink information is the S-SSB, the candidate beam identification indication information may be carried in a PSBCH, a PSBCH DMRS, an S-SSS, or a P-SSS. If the $i^{th}$ sidelink information is the SL-CSI-RS, the candidate beam identification indication information may be determined by using a time domain resource and/or a frequency domain resource of the SL-CSI-RS. For example, when the candidate beam identification indication information is determined by using a pattern or a resource set of the SL-CSI-RS, the pattern or the resource set of the SL-CSI-RS indicates that the SL-CSI-RS is used for candidate beam identification.

In another implementation example, if the $i^{th}$ sidelink information is used for beam failure detection and candidate beam identification, the $j^{th}$ group of symbols is used to send a beam failure recovery request, to indicate an available candidate beam. If the $i^{th}$ sidelink information is used for candidate beam identification, time-domain resource positions of the N time units need to be additionally determined, that is, the $i^{th}$ sidelink information sent in the $i^{th}$ time unit of the N time units is used for beam failure detection and candidate beam identification. The time-domain resource position used for beam failure detection and candidate beam identification may be predefined, configured, or pre-configured.

Alternatively, the $i^{th}$ sidelink information carries beam failure detection and candidate beam identification indication information, and the beam failure detection and candidate beam identification indication information indicates that the $i^{th}$ sidelink information is used for beam failure detection and candidate beam identification. If the $i^{th}$ sidelink information is the S-SSB, the beam failure detection and candidate beam identification indication information may be carried in a PSBCH, a PSBCH DMRS, an S-SSS, or a P-SSS. If the $i^{th}$ sidelink information is the SL-CSI-RS, the beam failure detection and candidate beam identification indication information may be determined by using a time domain resource and/or a frequency domain resource of the SL-CSI-RS. For example, when the beam failure detection and candidate beam identification indication information is determined by using a pattern or a resource set of the SL-CSI-RS, the pattern or the resource set of the SL-CSI-RS indicates that the SL-CSI-RS is used for beam failure detection and candidate beam identification.

In a possible implementation, the $j^{th}$ group of symbols sent by the second communication apparatus in step S702 may be used for a beam failure recovery request, so that the first communication apparatus may perform a BFR procedure after receiving the $j^{th}$ group of symbols.

Optionally, the second communication apparatus may indicate, in a plurality of manners, that the $j^{th}$ group of symbols may be used for BFR. For example, the $j^{th}$ group of symbols is carried on a pre-configured (or configured) time domain resource, so that a receiver of the $j^{th}$ group of symbols can determine, based on a time-domain position at which the $j^{th}$ group of symbols is carried, that the $j^{th}$ group of symbols may be used for BFR. For another example, the $j^{th}$ group of symbols may explicitly carry fourth indication information, so that after obtaining the fourth indication information by parsing the $j^{th}$ group of symbols, the receiver of the $j^{th}$ group of symbols can determine, based on the fourth indication information, that the $j^{th}$ group of symbols may be used for the BFR. The following provides descriptions with reference to implementation examples.

In an implementation example, if the $j^{th}$ group of symbols is used for a beam failure recovery request, time-domain resource positions of the N groups of symbols need to be additionally determined, that is, the $j^{th}$ sidelink information sent on the $j^{th}$ group of symbols of the N groups of symbols is used for the beam failure recovery request. The time-domain resource position used for the beam failure recovery request may be predefined, configured, or pre-configured.

Alternatively, the $j^{th}$ sidelink information carries beam failure recovery request information, and the beam failure recovery request information indicates that the $j^{th}$ sidelink information is used for the beam failure recovery request. If the $j^{th}$ sidelink information is the S-SSB, the beam failure recovery request information may be carried in a PSBCH, a PSBCH DMRS, an S-SSS, or a P-SSS. If the $j^{th}$ sidelink information is the SL-CSI-RS, the beam failure recovery request information may be determined by using a time domain resource and/or a frequency domain resource of the SL-CSI-RS. For example, when the beam failure recovery request information is determined by using a pattern or a resource set of the SL-CSI-RS, the pattern or the resource set of the SL-CSI-RS indicates that the SL-CSI-RS is used for the beam failure recovery request.

In another implementation example, if the $j^{th}$ group of symbols sent by the second communication apparatus in step S702 is used for a beam failure recovery request, after the first communication apparatus receives the beam failure recovery request in step S702, the first communication apparatus may further send a beam failure recovery response based on the beam failure recovery request. For example, after the $j^{th}$ group of symbols, the first communication apparatus sends the beam failure recovery response on a $j^{th}$ time domain resource in N time domain resources. The N time domain resources are in one-to-one correspondence with the N time units, or the N time domain resources are in one-to-one correspondence with the N groups of symbols. The N time domain resources are configured or pre-configured, or the $j^{th}$ time domain resource carries fifth indication information, and the fifth indication information indicates that the $j^{th}$ time domain resource is used for the beam failure recovery response. Therefore, the beam failure recovery response can be transmitted on a corresponding resource, to reduce communication complexity and improve communication efficiency.

It may be understood that, in the foregoing example, the N time domain resources may carry an indication of the beam failure recovery response, while in another implementation example of this application, the N time domain resources may carry other information, for example, DCR information.

In a possible implementation, in time domain, the N groups of symbols used to carry indication information are located after the last time unit in the N time units used to carry sidelink information. Specifically, in time domain, the N groups of symbols are located after the last time unit in the N time units, so that the first communication apparatus receives/detects, on the N groups of symbols after sidelink information is sent in the N time units, indication information corresponding to the sidelink information. In this way, the sidelink information and the indication information are transmitted on a sidelink in a time division manner.

Optionally, the sidelink information (including the S-SSB and/or the SL-CSI-RS) is a periodic signal, that is, the first communication apparatus may send the $i^{th}$ sidelink information for a plurality of times in different N time units. The N symbols are located after the last time unit in N time units in a current period, and the N symbols are located before the first time unit in N time units in a next period.

In a possible implementation, at least two of the N groups of symbols are located in a same slot. Specifically, in the N groups of symbols that are in one-to-one correspondence with the N time units, at least two groups of symbols are located in a same slot, that is, at least two groups of symbols are configured in one slot to carry indication information, so that at least two pieces of sidelink information are indicated in a single slot including a PSFCH, thereby improving an information bearer capability of the single slot including a PSFCH, and improving communication efficiency.

In a possible implementation, in step S702, the first indication information sent by the second communication apparatus includes at least one of the following: an identifier of the first communication apparatus (an identifier of a communication apparatus is denoted as a UE-ID below), an identifier of the second communication apparatus, or an index of the $j^{th}$ sidelink information. Specifically, when the first indication information is from the second communication apparatus, the second communication apparatus may place at least one of the foregoing pieces of information into the first indication information indicating the j$^{th}$ sidelink information, so that the first communication apparatus performs subsequent communication based on the at least one piece of information.

For example, when the first indication information includes the identifier of the first communication apparatus, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus in the plurality of communication apparatuses.

For another example, when the first indication information includes the identifier of the second communication apparatus, in the foregoing solution, when a plurality of communication apparatuses (including the second communication apparatus) send indication information on the same N groups of symbols, the first communication apparatus can determine, based on the identifier of the second communication apparatus, that a transmitter of the first indication information is the second communication apparatus in the plurality of communication apparatuses, so that the first communication apparatus determines indication information respectively corresponding to the plurality of communication apparatuses.

For another example, when the first indication information includes the index of the j$^{th}$ sidelink information, the first communication apparatus can determine, based on the index of the j$^{th}$ sidelink information, which one of the N pieces of sidelink information corresponds to the first indication information.

In a possible implementation, the i$^{th}$ sidelink information sent by the first communication apparatus in step S701 is the S-SSB, and the i$^{th}$ sidelink information indicates the identifier (which may be denoted as a UE_ID) of the first communication apparatus. The identifier of the first communication apparatus may be implemented in the following manners:

Manner 1: A value of the first communication apparatus is the same as a value of a sidelink synchronization signal identifier (sidelink synchronization signal identifier, SL-SSID) corresponding to the S-SSB. In Manner 1, the value of the SL-SSID is reused as the identifier of the first communication apparatus, so that overheads can be reduced. In addition, an S-SSB receiver can synchronously determine the identifier of the S-SSB transmitter after determining the value of the SL-SSID, so that implementation complexity can be reduced.

Manner 2: The identifier of the first communication apparatus is located in a physical sidelink broadcast channel (physical sidelink broadcast channel, PSBCH) that carries the S-SSB. In Manner 2, the identifier of the first communication apparatus may be carried by the PSBCH (one or more PSBCHs shown in FIG. 5b), so that an S-SSB receiver can determine the identifier of the S-SSB transmitter when parsing the S-SSB.

Manner 3: The identifier of the first communication apparatus is determined based on a frequency-domain position and/or a time-domain position occupied by the S-SSB. Manner 3 is an implicit indication manner using the frequency-domain position and/or the time-domain position occupied by the S-SSB. An S-SSB receiver can determine the identifier of the S-SSB transmitter when parsing the S-SSB, and no additional indication information needs to be added, so that overheads can be reduced.

Manner 4: The value of the identifier of the first communication apparatus is determined based on a source identifier and/or a destination identifier.

Optionally, in Manner 4, the source identifier and/or the destination identifier may be a source identifier and/or a destination identifier of a service that is historically received/sent by the first communication apparatus, or may be a source identifier and/or a destination identifier of a service that is to be received/sent by the first communication apparatus. This is not limited herein.

Manner 5: The identifier of the first communication apparatus is carried in one or more of a PSBCH, a PSBCH DMRS, an S-SSS, or a P-SSS.

In an implementation example, in Manner 5, if an available resource of an S-SSS and/or P-SSS sequence is equal to 8 bits, the value of the identifier of the first communication apparatus is an 8-least-significant-bit source layer-1 identifier or an 8-least-significant-bit destination layer-1 identifier, or is jointly determined based on the 8-least-significant-bit source layer-1 identifier and the 8-least-significant-bit destination layer-1 identifier. The joint determining manner may be a modulo-2 sum (an exclusive OR operation) of the source layer-1 identifier and the destination layer-1 identifier, or a combination of a part of the source layer-1 identifier and a part of the destination layer-1 identifier (for example, 4 bits of the source layer-1 identifier and 4 bits of the destination layer-1 identifier).

In another implementation example, in Manner 5, if the available resource of the S-SSS and/or P-SSS sequence is less than 8 bits, the value of the identifier of the first communication apparatus is obtained by performing a rem/mod operation on the available resource of the sequence by using an 8-least-significant-bit source layer-1 identifier, or performing a rem/mod operation on the available resource of the sequence by using an 8-least-significant-bit source layer-1 identifier, or performing a rem/mod operation on the available resource of the sequence by using an identifier jointly determined based on the 8-least-significant-bit source layer-1 identifier and the 8-least-significant-bit destination layer-1 identifier.

In another implementation example, in Manner 5, if the available resource of the S-SSS and/or the P-SSS sequence is greater than 8 bits, the value of the identifier of the first communication apparatus is obtained by performing a rem/mod operation on the available resource of the sequence by using a complete source identifier (24 bits), or performing a rem/mod operation on the available resource of the sequence by using a complete destination identifier (24 bits), or performing a rem/mod operation on the available resource of the sequence by using an identifier jointly determined by the complete source identifier and the complete destination identifier.

It may be understood that, in Manner 4, the identifier of the first communication apparatus is associated with the source identifier and/or the destination identifier, so that the first communication apparatus and the S-SSB receiver can identify a beam determined during synchronization in a data transmission process, and no additional indication information needs to be added, so that overheads can be reduced.

It may be understood that, in Manner 5, the identifier of the first communication apparatus is associated with the S-SSS and/or P-SSS sequence, so that the S-SSB receiver can obtain the identifier of the first communication apparatus when parsing the S-SSS and/or P-SSS sequence in the SSB, and no additional indication information needs to be added, so that overheads can be reduced.

Specifically, when the $i^{th}$ sidelink information is the S-SSB, the $i^{th}$ sidelink information may include the identifier of the first communication apparatus. Therefore, in the foregoing solution, when a plurality of communication apparatuses (including the first communication apparatus) send sidelink information in the same N time units, the plurality of communication apparatuses can determine, based on the identifier of the first communication apparatus, that a receiver of the first indication information is the first communication apparatus. In addition, the identifier of the first communication apparatus may be determined in the plurality of manners, to improve flexibility of implementing the solution.

Optionally, when the $i^{th}$ sidelink information is the SL-CSI-RS, the $i^{th}$ information may also indicate the identifier of the first communication apparatus. For an implementation process, refer to the foregoing Manner 2 or Manner 3. For example, the identifier of the first communication apparatus is located in a channel carrying the SL-CSI-RS, or the identifier of the first communication apparatus is determined based on a frequency-domain position and/or a time-domain position occupied by the SL-CSI-RS.

In a possible implementation, a frequency-domain position occupied on the $j^{th}$ group of symbols by the first indication information sent by the second communication apparatus in step S702 is determined based on the identifier of the first communication apparatus; and/or a code-domain position occupied on the $j^{th}$ group of symbols by the first indication information sent by the second communication apparatus in step S702 is determined based on the identifier of the first communication apparatus.

Specifically, the frequency-domain position (and/or the code-domain position) occupied by the first indication information on the $j^{th}$ group of symbols is determined based on the identifier of the first communication apparatus. In this way, in the foregoing solution, when a plurality of communication apparatuses (including the first communication apparatus) send sidelink information in the same N time units, the frequency-domain position (and/or the code-domain position) occupied by the indication information implicitly indicates that a transmitter of the sidelink information is the first communication apparatus, to reduce overheads.

Optionally, an index number of the frequency-domain position occupied by the first indication information on the $j^{th}$ group of symbols and an index number of the code-domain position occupied by the first indication information on the $j^{th}$ group of symbols are determined based on the identifier of the first terminal device.

In a possible implementation, a frequency-domain position occupied on the $j^{th}$ group of symbols by the first indication information sent by the second communication apparatus in step S702 is determined based on the identifier of the second communication apparatus; and/or a code-domain position occupied on the $j^{th}$ group of symbols by the first indication information sent by the second communication apparatus in step S702 is determined based on the identifier of the second communication apparatus. Specifically, the frequency-domain position (and/or the code-domain position) occupied by the first indication information on the $j^{th}$ group of symbols is determined based on the identifier of the second communication apparatus. In this way, in the foregoing solution, when a plurality of communication apparatuses (including the second communication apparatus) send indication information on the same N groups of symbols, the frequency-domain position (and/or the code-domain position) occupied by the indication information implicitly indicates that a transmitter of the first indication information is the second communication apparatus, to reduce overheads.

Based on the technical solution shown in FIG. 7, after the first communication apparatus sends the $i^{th}$ sidelink information in the $i^{th}$ time unit in the N time units in step S701, in step S702, the first communication apparatus receives, on the $j^{th}$ group of symbols in the N groups of symbols, the first indication information indicating the $j^{th}$ sidelink information. The N time units are in one-to-one correspondence with the N groups of symbols, and the N groups of symbols are located in the PSFCH. In other words, after a receiver of the sidelink information receives one or more pieces of sidelink information, the receiver may send, in the PSFCH, indication information indicating one of the pieces of sidelink information, and a correspondence exists between a symbol used to carry the indication information and a time unit used to carry the one of the pieces of sidelink information. Therefore, in a process of transmitting N pieces of sidelink information in the N time units, the receiver of the sidelink information may transmit, in the PSFCH by using the N groups of symbols that are in one-to-one correspondence with the N time units used to carry the N pieces of sidelink information, indication information indicating the sidelink information, so that the indication information corresponding to the sidelink information can be transmitted on a corresponding resource, to reduce communication complexity and improve communication efficiency.

For example, the sidelink information is an S-SSB, and a period of the S-SSB is 160 ms. It can be learned from the content described in FIG. 5a and FIG. 5b that, a specific transmission position of the S-SSB is determined based on a quantity of S-SSBs transmitted in the period, a slot offset between the first S-SSB transmitted in the period and a start point of the period, and a slot interval between two adjacent S-SSBs in the period.

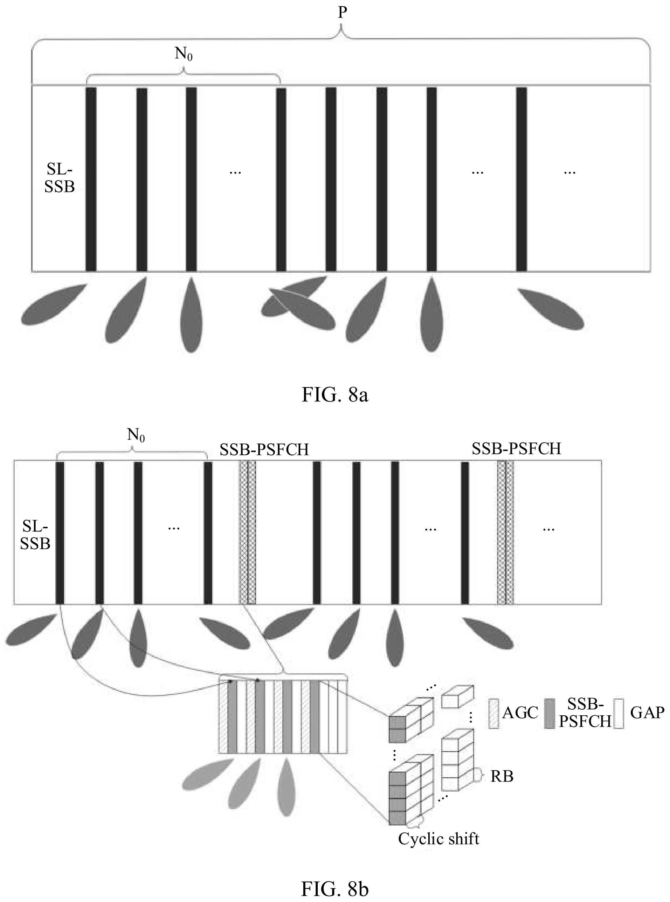

In an implementation example of the S-SSB, a configuration manner for the N time units may be shown in FIG. 8a (in FIG. 8a, the "S-SSB" is denoted as an "SL-SSB"). In one S-SSB transmission period P shown in FIG. 8a, there are M S-SSB transmission positions in total. If the first communication apparatus has a signal transmission capability in $N_0$ beam directions, S-SSB transmission positions may be divided into $M/N_0$ groups, and each S-SSB in each group corresponds to a different beam direction, to complete one beam sweeping. For example, when a subcarrier spacing is 60 kHz, there are 32 transmission positions in total in one S-SSB transmission period P. Assuming that the first communication apparatus has a signal transmission capability in eight beam directions, the S-SSB period may be divided into four groups, and each group may be used to complete one complete beam sweeping.

It can be learned from the example shown in FIG. 8a that, an S-SSB transmitter may send the S-SSB at a configured resource position to perform beam sweeping, different beam directions correspond to different sending positions, and a UE may complete beam sweeping for a plurality of times in one S-SSB period.

Optionally, the S-SSB transmitter uses an SL-SSID to represent a UE-ID.

Optionally, the S-SSB transmitter uses a part or all of information in a source identifier and/or a destination identifier to represent the UE-ID.

Optionally, the S-SSB transmitter places SSB index information into a PSBCH DMRS to distinguish between different beams.

In a possible implementation, based on FIG. 8a, the correspondence between the N time units and the N groups of symbols may be shown in FIG. 8b (in FIG. 8b, the "S-SSB" is denoted as an "SL-SSB"). For example, $N_0 = 8$. A time unit in which each S-SSB is located needs to be mapped to a group of symbols. In the example shown in FIG. 8b, there are four groups of symbols (each group of symbols includes one AGC, one SSB-PSFCH, and one GAP) in one SSB-PSFCH slot, and may correspond to four different S-SSB directions. Therefore, when $N_0 = 8$, two SSB-PSFCH slots are needed to meet a requirement. As shown in FIG. 8b, for example, one slot includes 14 symbols. The first 12 symbols may correspond to four groups of symbols, and the last two symbols are used as a GAP between the slot and a next slot. In the example shown in FIG. 8b, the N time units occupied by the S-SSB are time-domain positions occupied by the $N_0$ S-SSBs in the figure, and the indication information corresponding to the sidelink information may be carried by using a PSFCH resource (denoted as an SSB-PSFCH in the figure), that is, the N groups of symbols are time-domain positions occupied by the "SSB-PSFCH" in the figure.

It may be understood that, in the example shown in FIG. 8b, an S-SSB receiver may perform feedback based on a receive beam measurement result. In a possible manner, the S-SSB receiver feeds back a beam with the highest RSRP, and the RSRP is greater than a threshold. The S-SSB receiver needs to perform feedback on a corresponding SSB-PSFCH resource. A symbol position of the SSB-PSFCH is determined based on a position at which the S-SSB is received, and a frequency-domain position and a code-domain position of the SSB-PSFCH may be determined based on the UE-ID that sends the S-SSB. As shown in FIG. 8b, in a possible manner, the UE-ID is mapped to an SSB-PSFCH resource in an order of frequency domain first and then code domain, and a quantity of PRBs is 32. When receiving feedback information on the SSB-PSFCH, the S-SSB transmitter may determine a corresponding UE-ID based on a frequency-domain resource position and a code-domain resource position of the resource feedback, to determine whether the information is information fed back to the S-SSB transmitter.

Optionally, the frequency-domain position and the code-domain position of the SSB-PSFCH may be determined based on a UE-ID of the receive UE.

Optionally, the S-SSB receiver performs feedback based on the receive beam measurement result. In a possible manner, the S-SSB receiver stores, based on UE implementation, the UE-ID of the S-SSB transmitter and all corresponding beams whose RSRP is greater than the threshold, and feeds back only a beam whose RSRP is greater than the threshold and whose RSRP is the highest.

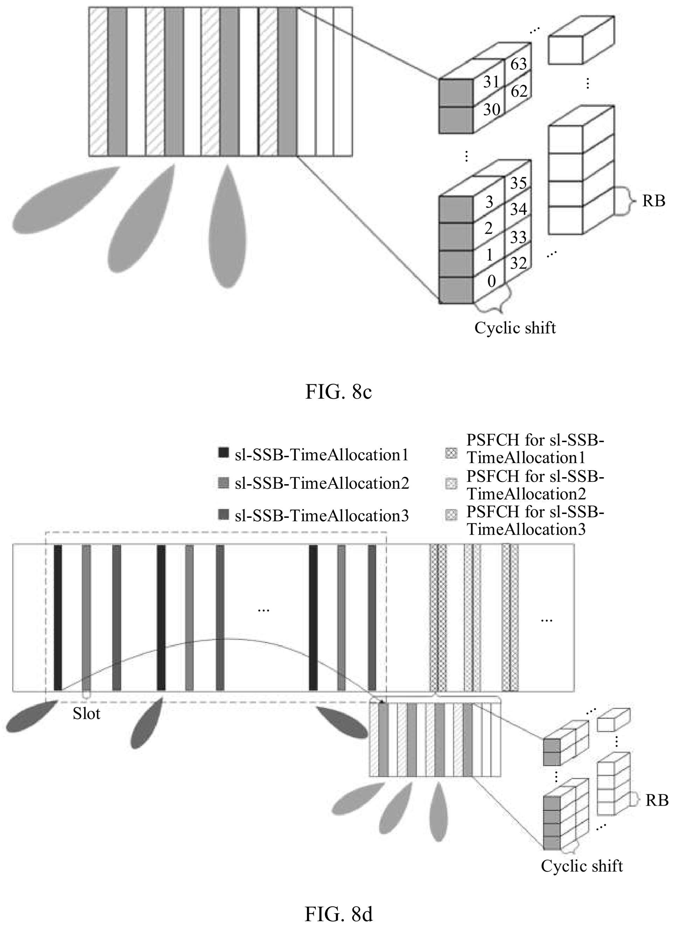

Optionally, in the example shown in FIG. 8b, for each SSB-PSFCH symbol, as shown in FIG. 8c, it is assumed that a frequency domain resource included in each SSB-PSFCH symbol is 32 physical resource blocks (physical resource block, PRB), and a code domain resource included in each PRB is 12 cyclic shift sequences (cyclic shift). In this case, 32*12=384 different communication apparatus identifiers may be supported in total. In other words, in the foregoing technical solution, 384 different first communication apparatuses can be supported in sending S-SSBs at a same S-SSB time-domain position, and an S-SSB receiver can distinguish between S-SSB transmitters based on different communication apparatus identifiers.

It should be noted that, when the frequency-domain position and the code-domain position of the SSB-PSFCH may be determined based on the UE-ID of the receive UE, in the SSB-PSFCH symbol, the UE-ID may be implemented in a plurality of manners.

For example, for values of UE-IDs in ascending order, mapping is first performed in ascending order of frequency-domain positions at the first code-domain position in the SSB-PSFCH symbol, and then mapping is sequentially performed in ascending order of frequency-domain positions at the second code-domain position and another possible code-domain position. In this implementation process, as shown in FIG. 8c, UE_IDs sequentially mapped in ascending order of frequency-domain positions in a cyclic shift (cyclic shift) in a code domain resource are 0 to 31, UE_IDs sequentially mapped in ascending order of frequency-domain positions in a next cyclic shift are 32 to 63, and so on.

For another example, for values of UE-IDs in ascending order, mapping is first performed in descending order of frequency-domain positions at the first code-domain position in the SSB-PSFCH symbol, and then mapping is sequentially performed in descending order of frequency-domain positions at the second code-domain position and another possible code-domain position.

For another example, for values of UE-IDs in ascending order, mapping is first performed in ascending order of code-domain positions at the first frequency-domain position in the SSB-PSFCH symbol, and then mapping is sequentially performed in ascending order of code-domain positions at the second frequency-domain position and another possible frequency-domain position.

For another example, for values of UE-IDs in ascending order, mapping is first performed in descending order of code-domain positions at the first frequency-domain position in the SSB-PSFCH symbol, and then mapping is sequentially performed in descending order of code-domain positions at the second frequency-domain position and another possible frequency-domain position.

In another possible implementation, based on FIG. 8a, the correspondence between the N time units and the N groups of symbols may be shown in FIG. 8d. Compared with the implementation process in FIG. 8b, the implementation process in FIG. 8d further extends PSFCH resource configuration corresponding to the sending position of the S-SSB. When a plurality of candidate resource positions exist in the S-SSB period, corresponding independent feedback resources need to be increased. As shown in FIG. 8d, when three candidate resource positions are configured, the three candidate resource positions may include a candidate resource position 1 (denoted as S-SSB-TimeAllocation1), a candidate resource position 2 (denoted as S-SSB-TimeAllocation2), and a candidate resource position 3 (denoted as S-SSB-TimeAllocation3). There are three different available S-SSB transmission positions in total. In the example shown in FIG. 8d, the N time units occupied by the S-SSB are time-domain positions occupied by the S-SSB in the figure, that is, "S-SSB-TimeAllocation1", "S-SSB-TimeAllocation2", and "S-SSB-TimeAllocation3". In addition, the indication information corresponding to the sidelink information may be carried by using a PSFCH resource, that is, the N groups of symbols include time-domain positions occupied by "PSFCH for S-SSB-TimeAllocation1", "PSFCH for S-SSB-TimeAllocation2", and "PSFCH for S-SSB-TimeAllocation1" in the figure that are in one-to-one correspondence with the time-domain positions occupied by the S-SSB.

Optionally, in the three candidate positions shown in FIG. 8d, as an S-SSB transmitter, the first communication apparatus may select one or two resources to send the S-SSB. In this case, PSFCH resources need to be respectively configured for different S-SSB transmission positions.

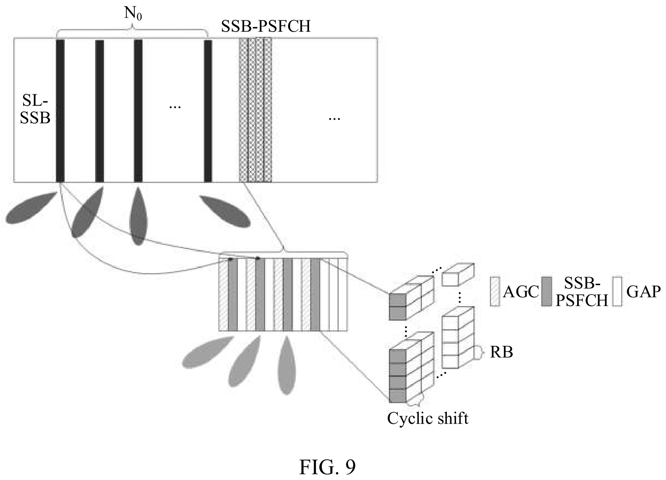

It may be understood that, in the examples shown in FIG. 8b and FIG. 8d, an example in which each of the N groups of symbols includes one PSFCH symbol is used for description. In actual application, an S-SSB receiver may need to place more information into the first indication information. Therefore, each of the N groups of symbols includes two or more PSFCH symbols. The following illustrates, by using an implementation example shown in FIG. 9, an implementation process in which each of the N groups of symbols includes two PSFCH symbols.

As shown in FIG. 9 (the "S-SSB" is denoted as an "SL-SSB" in FIG. 9), each S-SSB transmit opportunity corresponds to two PSFCH symbol resources. Herein, $N_0 = 8$ is still used as an example. A time unit in which each S-SSB is located needs to be mapped to a group of symbols. In the example shown in FIG. 8b, in one SSB-PSFCH slot, there are two groups of symbols (each group of symbols includes one AGC, one SSB-PSFCH, and one GAP, and the other AGC, the other SSB-PSFCH, and the other GAP that are sequentially arranged), which may correspond to two different S-SSB directions. Therefore, when $N_0 = 8$, four SSB-PSFCH slots are needed to meet a requirement.

Optionally, in the implementation example shown in FIG. 9, one PSFCH symbol resource may be used to map an identifier of a transmit end of the S-SSB, and the other PSFCH symbol resource may be used to map an identifier of a receive end that receives the S-SSB. For implementations of the identifier of the transmit end of the S-SSB and the identifier of the receive end of the S-SSB in the PSFCH, refer to the plurality of manners of the UE-ID in FIG. 8c and related implementations.

It may be understood that, in such resource configuration, if RSRP of a plurality of S-SSBs measured by a receive end of the S-SSBs exceeds a threshold, the receive end of the S-SSBs may feed back the RSRP of the plurality of S-SSBs. A transmit end of the S-SSBs may determine, based on transmit and receive identifiers, that the plurality of available S-SSBs are fed back by the same UE. Particularly, the receive end of the S-SSBs indicates, in feedback information, an S-SSB with the highest RSRP. For example, an RB resource is defined on the SSB-PSFCH resource to indicate whether the RSRP is the highest.

In a possible implementation, in the method shown in FIG. 7, after step S702, the method may further include: The first communication apparatus sends or receives direct communication request (direct communication request, DCR) information on the $j^{th}$ time domain resource in the N time domain resources. The N time domain resources are in one-to-one correspondence with the N time units, or the N time domain resources are in one-to-one correspondence with the N groups of symbols.

Specifically, after the first communication apparatus receives the $j^{th}$ sidelink information, the first communication apparatus sends or receives the DCR information on the $j^{th}$ time domain resource in the N time domain resources. The N time domain resources are in one-to-one correspondence with the N time units, or the N time domain resources are in one-to-one correspondence with the N groups of symbols, so that the DCR information can be transmitted on a corresponding resource, to reduce communication complexity and improve communication efficiency.

In a possible implementation, in the method shown in FIG. 7, after step S702, the method may further include: The first communication apparatus sends or receives a beam failure recovery response on the $j^{th}$ time domain resource in the N time domain resources. The N time domain resources are in one-to-one correspondence with the N time units, or the N time domain resources are in one-to-one correspondence with the N groups of symbols. The N time domain resources are configured or pre-configured, or the $j^{th}$ time domain resource includes fifth indication information, and the fifth indication information is indication information indicating that the $j^{th}$ time domain resource is used for beam failure detection and/or beam failure recovery.

Specifically, after the first communication apparatus receives the $j^{th}$ sidelink information, the first communication apparatus sends or receives the beam failure recovery response on the $j^{th}$ time domain resource in the N time domain resources. The N time domain resources are in one-to-one correspondence with the N time units, or the N time domain resources are in one-to-one correspondence with the N groups of symbols, so that the beam failure recovery response can be transmitted on a corresponding resource, to reduce communication complexity and improve communication efficiency.

It may be understood that, in time domain, the N time domain resources are located after the last group of symbols of the N groups of symbols.

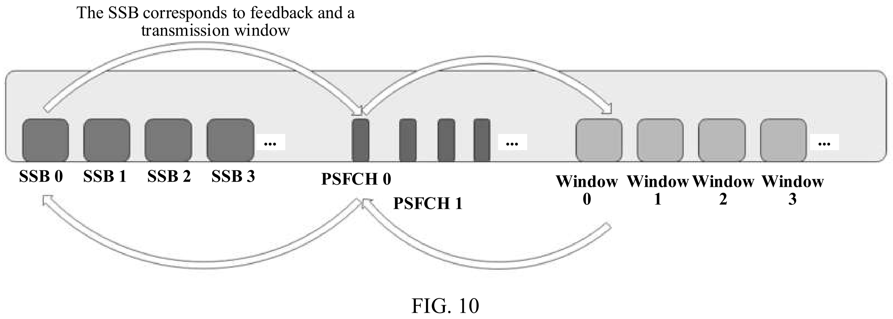

In an implementation example, as shown in FIG. 10 (the "S-SSB" is denoted as an "SSB" in FIG. 8a), the N time units may be used to carry the S-SSB (that is, the S-SSB), including an SSB 0, an SSB 1, an SSB 2, an SSB 3, and the like. The N groups of symbols in one-to-one correspondence with the N time units may be a PSFCH 0 and a PSFCH 1 in the figure (and a PSFCH 2 and a PSFCH 3 that are not drawn in the figure). In addition, the N time domain resources in one-to-one correspondence with the N time units (or the N groups of symbols) may be a time window 0 (window 0), a window 1, a window 2, and a window 3 in the figure.

In a possible implementation, at least two of a beam direction used in the $j^{th}$ time unit, a beam direction used on the $j^{th}$ time domain resource, and a beam direction used on the $j^{th}$ group of symbols are the same.

Optionally, the first communication apparatus is used as a transmitter of the $i^{th}$ sidelink information and a receiver of the first indication information corresponding to the $i^{th}$ sidelink information, and at least two of a beam direction used by the first communication apparatus in the $j^{th}$ time unit, a beam direction used by the first communication apparatus on the $j^{th}$ time domain resource, and a beam direction used by the first communication apparatus on the $j^{th}$ group of symbols are the same. In addition, a transmit beam direction of the first communication apparatus in the $j^{th}$ time unit is opposite (or matches) a receive beam direction of the second communication apparatus in the $j^{th}$ time unit; and/or a receive beam direction of the first communication apparatus on the $j^{th}$ group of symbols is opposite (or matches) a transmit beam direction of the second communication apparatus on the $j^{th}$ group of symbols, and/or a transmit beam direction of the first communication apparatus on the $j^{th}$ time domain resource is opposite (or matches) a receive beam direction of the second communication apparatus on the $j^{th}$ time domain resource; and/or a receive beam direction of the first communication apparatus on the $j^{th}$ time domain resource is opposite (or matches) a transmit beam direction of the second communication apparatus on the $j^{th}$ time domain resource.

Specifically, at least two of the N time units, the N groups of symbols, and the N time domain resources are in one-to-one correspondence. Correspondingly, at least two of the beam direction used in the $j^{th}$ time unit, the beam direction used on the $j^{th}$ time domain resource, and the beam direction used on the $j^{th}$ group of symbols are the same. Therefore, in a sidelink communication process, at least two of sidelink information including an S-SSB and/or a CSI-RS, indication information corresponding to the sidelink information, and DCR information can be transmitted based on a same beam direction, so that the foregoing technical solution can be applied to a beam-based communication system, and beam management can be implemented by using the one-to-one correspondence between the foregoing at least two.

Optionally, the beam-based communication system may be a communication system whose communication band includes a high frequency, for example, a communication system whose communication band includes a frequency range 2 (frequency range 2, FR2), that is, the frequency range is 24250 megahertz (MHz) to 52600 MHz, or in other words, the frequency range is in a millimeter-wave band.

Optionally, in different time units in the N time units (or different groups of symbols in the N groups of symbols, or different time domain resources in the N time domain resources), a communication apparatus (for example, the first communication apparatus, and the second communication apparatus that may appear below) uses different beam directions.

In a possible implementation, the method further includes: The first communication apparatus sends or receives resource indication information associated with the DCR information. The resource indication information indicates a resource that carries response information of the DCR information. Specifically, the first communication apparatus may further send or receive the resource indication information associated with the DCR information. The resource indication information indicates the resource that carries the response information of the DCR information, so that the first communication apparatus and another communication apparatus (for example, the second communication apparatus) can determine, based on the resource indication information, the resource that carries the response information of the DCR.

Optionally, the response information of the DCR information may include a direct communication accept (direct communication accept, DCA) message, a security establishment message/information, and the like shown in FIG. 5c.

Optionally, the resource indication information indicates that the resource that carries the response information of the DCR information includes at least one of the following: a time-domain resource position, a frequency-domain resource position, a time domain resource window, or a frequency domain resource window.

In a possible implementation, the resource indication information is carried in sidelink control information (sidelink control information, SCI) and/or a medium access control control element (medium access control control element, MAC CE). Specifically, the resource indication information indicating the resource that carries the response information of the DCR information may be carried in the SCI and/or the MAC CE, to improve flexibility of implementing the solution. Optionally, the SCI may include 1st-stage SCI and/or 2nd-stage SCI.

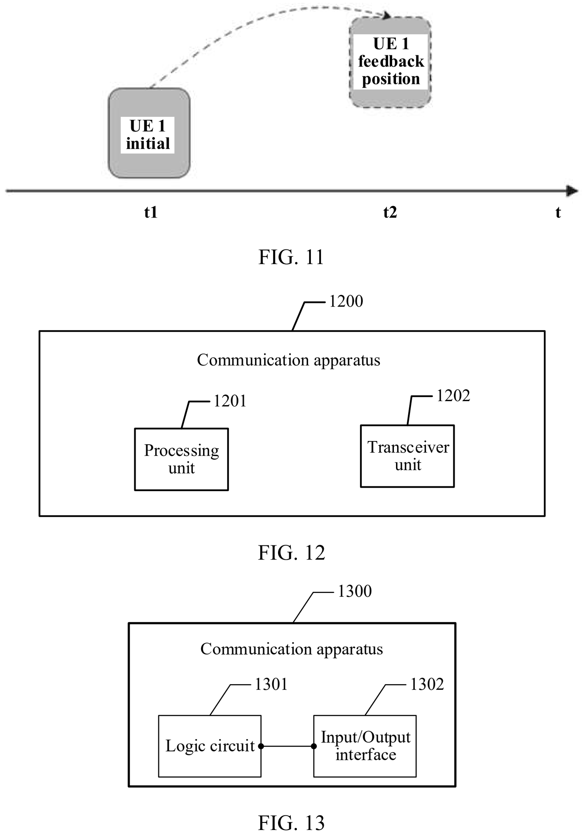

It can be learned from the foregoing implementation process that both the S-SSB transmitter and the S-SSB receiver may send DCR information after responses based on the sidelink information and the indication information. For example, the S-SSB transmitter sends DCR information. The S-SSB transmitter sends the DCR information in a beam direction in which feedback is received. The S-SSB transmitter needs to receive the feedback information on a corresponding SSB-PSFCH resource by using a corresponding beam. If a UE-ID corresponding to the received feedback information is the same as that of the S-SSB transmitter, it is considered that there is a corresponding S-SSB receiver in the corresponding beam direction, and the S-SSB transmitter sends the DCR information in the beam direction. When sending the DCR information, the S-SSB transmitter needs to indicate a time-frequency resource position for the S-SSB receiver to perform feedback for the link establishment information. The S-SSB receiver needs to send feedback information at a corresponding position. In this case, the S-SSB transmitter receives the feedback information by using a corresponding beam. As shown in FIG. 11, an S-SSB transmitter 1 sends DCR information in a slot t1, and indicates a time-frequency resource position at a moment t2 to be used by an S-SSB receiver for feedback. The indication information may be carried in SCI and/or a MAC CE. A UE that receives the DCR information needs to perform feedback for the DCR information at a feedback position at the moment t2. Because the beam is directional, the feedback resource of the S-SSB receiver is indicated to ensure that the S-SSB transmitter learns of a time and a beam for receiving, so that the S-SSB transmitter does not switch to another beam when the S-SSB receiver performs feedback.

Optionally, when sending the DCR information, the S-SSB transmitter may further indicate UE-ID information and SSB index information. The UE-ID information is the same as the UE-ID information carried in the S-SSB, and is carried in SCI and/or a MAC CE.

Optionally, when sending data information, the S-SSB transmitter may further indicate the UE-ID information and/or the S-SSB index information. The UE-ID information is the same as the UE-ID information carried in the S-SSB, and is carried in SCI and/or a MAC CE.

In a possible implementation, in the method shown in FIG. 7, after step S702, the first communication apparatus and the second communication apparatus may communicate with each other by using the UE-ID determined by using the source identifier and/or the destination identifier in the foregoing Manner 4. Then, the method further includes: The S-SSB receiver finds, based on a receive beam measurement result, that a beam of the transmitter is no longer suitable (for example, RSRP is lower than the threshold), and determines another available beam based on the identifier (UE-ID, for example, the value of the UE-ID is determined based on the source identifier and/or the destination identifier in the foregoing Manner 4) of the S-SSB transmitter and an available beam (with a measurement result greater than the RSRP threshold) determined in an S-SSB sending process. The S-SSB receiver may indicate the S-SSB transmitter to switch to the new beam, and the indication information may be carried in SCI and/or a MAC CE. In addition, when the SSB receives SSBs sent from a plurality of SSB transmitters, in the foregoing Manner 4, the SSB receiver can identify the plurality of SSB transmitters based on UE-IDs determined based on source identifiers and/or destination identifiers.

In a possible implementation, in the method shown in FIG. 7, the method further includes: The first communication apparatus receives second indication information on a $k^{th}$ group of symbols in the N groups of symbols. The second indication information indicates $k^{th}$ sidelink information, a value of k is 0 to N-1, and k is different from j. Specifically, the first communication apparatus may further receive the second indication information on the $k^{th}$ group of symbols that is in the N groups of symbols and that is different from the $j^{th}$ group of symbols, and the second indication information indicates the k$^{th}$ sidelink information. Therefore, as a transmitter of the N pieces of sidelink information, the first communication apparatus can receive at least two pieces of indication information respectively corresponding to at least two pieces of sidelink information, to improve communication flexibility.

Optionally, the first indication information and the second indication information are from a same communication apparatus (for example, the second communication apparatus). Correspondingly, when the foregoing solution is applied to a beam-based communication system, in this implementation, a same communication apparatus can indicate at least two beam directions respectively corresponding to at least two pieces of sidelink information. The same communication apparatus is supported in indicating a plurality of available beam directions, so that the plurality of available beam directions are used in subsequent beam maintenance, beam failure recovery, or the like.

Optionally, the first indication information and the second indication information are from different communication apparatuses, so that the first communication apparatus implements sidelink communication processes with the different communication apparatuses based on the sidelink information sent in the N time units.

In a possible implementation, the first indication information includes a first field, and the first field indicates that signal quality of the j$^{th}$ sidelink information is superior to signal quality of other sidelink information; or the second indication information includes a second field, and the second field indicates that signal quality of the k$^{th}$ sidelink information is superior to signal quality of other sidelink information. Specifically, when the first indication information and the second indication information are from a same communication apparatus, the first indication information or the second indication information may further include the foregoing field, so that after receiving the first indication information and the second indication information, the first communication apparatus can determine sidelink information with superior signal quality in pieces of sidelink information based on the foregoing field.

Optionally, in step S702, that the first indication information sent by the second communication apparatus indicates the j$^{th}$ sidelink information (or the k$^{th}$ sidelink information) may be expressed as that the first indication information indicates sidelink information whose signal quality is higher than a threshold in at least two pieces of sidelink information received by the second communication apparatus, and the first indication information indicates that the second communication apparatus expects to perform communication in a beam direction of the j$^{th}$ sidelink information (or the k$^{th}$ sidelink information).

It should be noted that the signal quality in this application may include at least one of a received signal strength indicator (received signal strength indicator, RSSI), reference signal received power (reference signal received power, RSRP), reference signal received quality (reference signal received quality, RSRQ), or the like.

In addition, when the foregoing solution is applied to a beam-based communication system, in this implementation, the first communication apparatus can determine a beam direction of sidelink information with good signal quality.

In an implementation example, it is assumed that a value of the UE-ID of the S-SSB transmitter is 13, a value of the UE-ID of the S-SSB receiver is 16, and RSRP of beams of SSB index=1, SSB index=3, and SSB index=4 measured by the S-SSB receiver is higher than a threshold (RSRP of the beam of SSB index=3 is the highest). In this case, the S-SSB receiver respectively performs feedback on resources of UE-ID=13 and UE-ID=16 on SSB-PSFCH resources of SSB index=1, SSB index=3 and SSB index=4, and indicates, in feedback of SSB index=3, that the RSRP is the highest. After receiving corresponding feedback information, the S-SSB transmitter learns of the plurality of available S-SSB beams indicated by the UE with UE-ID=16, and sends DCR information by using the beam of SSB index=3. Other candidate beams may be used in subsequent beam maintenance or beam failure recovery.

The foregoing describes embodiments of this application from a perspective of the method. The following further describes a communication apparatus provided in this application.

FIG. 12 is a diagram of a communication apparatus 1200 according to this application. The communication apparatus 1200 includes a processing unit 1201 and a transceiver unit 1202. The communication apparatus 1200 can implement a function of any communication apparatus (for example, the first communication apparatus or the second communication apparatus) in the foregoing method embodiments, and therefore can also implement beneficial effects of the foregoing method embodiments.

It should be understood that the communication apparatus 1200 may be a terminal device (for example, the first communication apparatus or the second communication apparatus), or may be an integrated circuit, an element, or the like in the terminal device (for example, the first communication apparatus or the second communication apparatus), for example, a chip.

In a possible implementation, when the apparatus 1200 is configured to perform the method performed by the first communication apparatus in the foregoing embodiments, the processing unit 1201 and the transceiver unit 1202 that are included in the apparatus 1200 are configured to implement the following process: The processing unit 1201 is configured to determine i$^{th}$ sidelink information. The transceiver unit 1202 is configured to send the i$^{th}$ sidelink information in an i$^{th}$ time unit in N time units. The sidelink information includes a sidelink synchronization signal block S-SSB and/or a sidelink channel state information reference signal SL-CSI-RS, a value of i is 0 to N-1, and N is an integer greater than 1. The transceiver unit 1202 is further configured to receive first indication information on a j$^{th}$ group of symbols in N groups of symbols. The first indication information indicates j$^{th}$ sidelink information, a value of j is 0 to N-1, the N time units are in one-to-one correspondence with the N groups of symbols, and the N groups of symbols are located in a physical sidelink feedback channel PSFCH.

In a possible implementation, in time domain, the N groups of symbols are located after the last time unit in the N time units.

In a possible implementation, at least two of the N groups of symbols are located in a same slot.

In a possible implementation, the transceiver unit 1202 is further configured to send or receive direct communication request DCR information on a $j^{th}$ time domain resource in N time domain resources. The N time domain resources are in one-to-one correspondence with the N time units, or the N time domain resources are in one-to-one correspondence with the N groups of symbols.

In a possible implementation, the transceiver unit 1202 is further configured to send or receive resource indication information associated with the DCR information. The resource indication information indicates a resource that carries response information of the DCR information.

In a possible implementation, the transceiver unit 1202 is further configured to receive second indication information on a $k^{th}$ group of symbols in the N groups of symbols. The second indication information indicates $k^{th}$ sidelink information, a value of k is 0 to N-1, and k is different from j.

In a possible implementation, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

In a possible implementation, the first indication information is from a second communication apparatus, and the first indication information includes at least one of the following: an identifier of the first communication apparatus, an identifier of the second communication apparatus, or an index of the $j^{th}$ sidelink information.

In a possible implementation, the $i^{th}$ sidelink information is the S-SSB, and the $i^{th}$ sidelink information indicates the identifier of the first communication apparatus.

A value of the identifier of the first communication apparatus is the same as a value of an SL-SSID corresponding to the S-SSB; or

the identifier of the first communication apparatus is located in a physical sidelink broadcast channel PSBCH that carries the S-SSB; or

the identifier of the first communication apparatus is determined based on a frequency-domain position and/or a time-domain position occupied by the S-SSB.

In a possible implementation, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

In a possible implementation, when the apparatus 1200 is configured to perform the method performed by the first communication apparatus in the foregoing embodiments, the processing unit 1201 and the transceiver unit 1202 that are included in the apparatus 1200 are configured to implement the following process: The transceiver unit 1202 is configured to receive $i^{th}$ sidelink information in an $i^{th}$ time unit in N time units. The sidelink information includes an S-SSB and/or an SL-CSI-RS, a value of i is 0 to N-1, and N is an integer greater than 1. The processing unit 1201 is configured to determine first indication information. The transceiver unit 1202 is further configured to send the first indication information on a $j^{th}$ group of symbols. The first indication information indicates $j^{th}$ sidelink information, a value of j is 0 to N-1, the N time units are in one-to-one correspondence with N groups of symbols, and the N groups of symbols are located in a PSFCH.

In a possible implementation, in time domain, the N groups of symbols are located after the last time unit in the N time units.

In a possible implementation, at least two of the N groups of symbols are located in a same slot.

In a possible implementation, the transceiver unit 1202 is further configured to send or receive direct communication request DCR information on a $j^{th}$ time domain resource in N time domain resources. The N time domain resources are in one-to-one correspondence with the N time units, or the N time domain resources are in one-to-one correspondence with the N groups of symbols.

In a possible implementation, the transceiver unit 1202 is further configured to send or receive resource indication information associated with the DCR information. The resource indication information indicates a resource that carries response information of the DCR information.

In a possible implementation, the transceiver unit 1202 is further configured to send second indication information on a $k^{th}$ group of symbols in the N groups of symbols. The second indication information indicates $k^{th}$ sidelink information, a value of k is 0 to N-1, and k is different from j.

In a possible implementation, the first indication information includes a first field, and the first field indicates that signal quality of the $j^{th}$ sidelink information is superior to signal quality of other sidelink information; or the second indication information includes a second field, and the second field indicates that signal quality of the $k^{th}$ sidelink information is superior to signal quality of other sidelink information.

In a possible implementation, the $i^{th}$ sidelink information is from a first communication apparatus, and the first indication information includes at least one of the following: an identifier of the first communication apparatus, an identifier of the second communication apparatus, or an index of the $j^{th}$ sidelink information.

In a possible implementation, the $i^{th}$ sidelink information is the S-SSB, and the $i^{th}$ sidelink information indicates the identifier of the first communication apparatus.

A value of the identifier of the first communication apparatus is the same as a value of an SL-SSID corresponding to the S-SSB; or

the identifier of the first communication apparatus is located in a physical sidelink broadcast channel PSBCH that carries the S-SSB; or
the identifier of the first communication apparatus is determined based on a frequency-domain position and/or a time-domain position occupied by the S-SSB.

In a possible implementation, a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

It should be noted that for details of content such as information execution processes of the units of the communication apparatus 1200, refer to the descriptions in the foregoing method embodiments of this application. The details are not described herein again.

FIG. 13 is another diagram of a structure of a communication apparatus 1300 according to this application. The communication apparatus 1300 includes at least an input/output interface 1302. The communication apparatus 1300 may be a chip or an integrated circuit.

Optionally, the communication apparatus further includes a logic circuit 1301.

The transceiver unit 1202 shown in FIG. 12 may be a communication interface, the communication interface may be the input/output interface 1302 in FIG. 13, and the input/output interface 1302 may include an input interface and an output interface. Alternatively, the communication interface may be a transceiver circuit, and the transceiver circuit may include an input interface circuit and an output interface circuit.

The logic circuit 1301 and the input/output interface 1302 can perform other steps performed by the terminal device in any one of the foregoing embodiments and implement corresponding beneficial effects. Details are not described herein again.

In a possible implementation, the processing unit 1201 shown in FIG. 12 may be the logic circuit 1301 in FIG. 13.

Optionally, the logic circuit 1301 may be a processing apparatus, and a part of or all functions of the processing apparatus may be implemented by using software. A part of or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory by using a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate array, FPGA), application-specific integrated circuits (application-specific integrated circuit, ASIC), systems on chips (system on chip, SoC), central processing units (central processing unit, CPU), network processors (network processor, NP), digital signal processors (digital signal processor, DSP), microcontroller units (microcontroller unit, MCU), programmable logic devices (programmable logic device, PLD), or other integrated chips, or any combination of the foregoing chips or processors.

In a possible implementation, the communication apparatus 1300 may be configured to perform a function related to the first communication apparatus in the foregoing embodiments. The logic circuit 1301 is configured to determine $i^{th}$ sidelink information. The input/output interface 1302 is configured to send the $i^{th}$ sidelink information in an $i^{th}$ time unit in N time units. The sidelink information includes a sidelink synchronization signal block S-SSB and/or a sidelink channel state information reference signal SL-CSI-RS, a value of i is 0 to N-1, and N is an integer greater than 1. The input/output interface 1302 is further configured to receive first indication information on a $j^{th}$ group of symbols in N groups of symbols. The first indication information indicates $j^{th}$ sidelink information, a value of j is 0 to N-1, the N time units are in one-to-one correspondence with the N groups of symbols, and the N groups of symbols are located in a physical sidelink feedback channel PSFCH.

In a possible implementation, the communication apparatus 1300 may be configured to perform a function related to the second communication apparatus in the foregoing embodiments. The input/output interface 1302 is configured to receive $i^{th}$ sidelink information in an $i^{th}$ time unit in N time units. The sidelink information includes an S-SSB and/or an SL-CSI-RS, a value of i is 0 to N-1, and N is an integer greater than 1. The logic circuit 1301 is configured to determine first indication information. The input/output interface 1302 is further configured to send the first indication information on a $j^{th}$ group of symbols. The first indication information indicates $j^{th}$ sidelink information, a value of j is 0 to N-1, the N time units are in one-to-one correspondence with N groups of symbols, and the N groups of symbols are located in a PSFCH.

It should be noted that for details of content such as information execution processes of the units of the communication apparatus 1300, refer to the descriptions in the foregoing method embodiments of this application. The details are not described herein again.

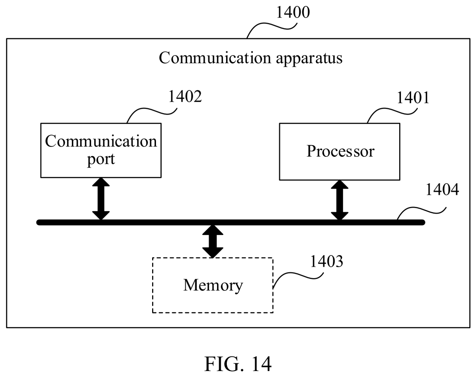

FIG. 14 shows a communication apparatus 1400 related to the foregoing embodiments according to an embodiment of this application.

For example, the communication apparatus 1400 may be specifically a communication apparatus used as a terminal device in the foregoing embodiments.

In a diagram of a possible logical structure of the communication apparatus 1400, the communication apparatus 1400 may include but is not limited to at least one processor 1401 and a communication port 1402.

Further, optionally, the apparatus may further include at least one of a memory 1403 and a bus 1404. In this embodiment of this application, the at least one processor 1401 is configured to perform control processing on an action of the communication apparatus 1400.

In addition, the processor 1401 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination for implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 1400 shown in FIG. 14 may be specifically configured to implement steps implemented by the communication apparatus (for example, the first communication apparatus or the second communication apparatus) in the foregoing method embodiments, and implement technical effects corresponding to the communication apparatus. For a specific implementation of the communication apparatus shown in FIG. 14, refer to the descriptions in the foregoing method embodiments. Details are not described herein again.

An embodiment of this application further provides a computer-readable storage medium that stores one or more computer-executable instructions. When the computer-executable instructions are executed by a processor, the processor performs the method in the possible implementations of the communication apparatus (for example, the first communication apparatus or a second communication apparatus) in the foregoing embodiments.

An embodiment of this application further provides a computer program product (or referred to as a computer program) that stores one or more computers. When the computer program product is executed by a processor, the processor performs the method in the possible implementations of the communication apparatus (for example, the first communication apparatus or the second communication apparatus).

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the first communication apparatus or the second communication apparatus in the foregoing method embodiments.

An embodiment of this application further provides a communication system. An architecture of the network system includes the communication apparatus (for example, the first communication apparatus and/or the second communication apparatus) in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one place, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit. When the integrated unit is implemented in the form of the software functional unit and sold or used as an independent product, the integrated unit may be stored in a computer-readable storage medium. Based on such an understanding, the technical solutions in this application essentially, or a part contributing to a conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the method described in embodiments of this application. The storage medium includes various media that can store program code, such as a USB flash drive, a removable hard disk drive, a read-only memory (ROM, Read-Only Memory), a random access memory (RAM, Random Access Memory), a magnetic disk, or an optical disc.

**Claims**

1. A communication method, comprising:

   sending, by a first communication apparatus, $i^{th}$ sidelink information in an $i^{th}$ time unit in N time units, wherein the sidelink information comprises a sidelink synchronization signal block S-SSB and/or a sidelink channel state information reference signal SL-CSI-RS, a value of i is 0 to N-1, and N is an integer greater than 1; and

   receiving, by the first communication apparatus, first indication information on a $j^{th}$ group of symbols in N groups of symbols, wherein the first indication information indicates $j^{th}$ sidelink information, a value of j is 0 to N-1, the N time units are in one-to-one correspondence with the N groups of symbols, and the N groups of symbols are located in a physical sidelink feedback channel PSFCH.

2. The method according to claim 1, wherein
   in time domain, the N groups of symbols are located after the last time unit in the N time units.

3. The method according to claim 1 or 2, wherein
   at least two of the N groups of symbols are located in a same slot.

4. The method according to any one of claims 1 to 3, wherein the method further comprises:
   sending or receiving, by the first communication apparatus, direct communication request DCR information on a $j^{th}$ time domain resource in N time domain resources, wherein the N time domain resources are in one-to-one correspondence with the N time units, or the N time domain resources are in one-to-one correspondence with the N groups of symbols.

5. The method according to claim 4, wherein the method further comprises:
   sending or receiving, by the first communication apparatus, resource indication information associated with the DCR information, wherein the resource indication information indicates a resource that carries response information of the DCR information.

6. The method according to any one of claims 1 to 5, wherein the method further comprises:
   receiving, by the first communication apparatus, second indication information on a $k^{th}$ group of symbols in the N groups of symbols, wherein the second indication information indicates $k^{th}$ sidelink information, a value of k is 0 to N-1, and k is different from j.

7. The method according to claim 6, wherein

the first indication information comprises a first field, and the first field indicates that signal quality of the $j^{th}$ sidelink information is superior to signal quality of other sidelink information; or

the second indication information comprises a second field, and the second field indicates that signal quality of the $k^{th}$ sidelink information is superior to signal quality of other sidelink information.

8. The method according to any one of claims 1 to 7, wherein the first indication information is from a second communication apparatus, and the first indication information comprises at least one of the following:
an identifier of the first communication apparatus, an identifier of the second communication apparatus, or an index of the $j^{th}$ sidelink information.

9. The method according to any one of claims 1 to 8, wherein the $i^{th}$ sidelink information is the S-SSB, and the $i^{th}$ sidelink information indicates the identifier of the first communication apparatus; and
a value of the identifier of the first communication apparatus meets any one of the following:

the value of the identifier of the first communication apparatus is the same as a value of a sidelink synchronization signal identifier SL-SSID corresponding to the S-SSB; or

the value of the identifier of the first communication apparatus is determined based on a frequency-domain position and/or a time-domain position occupied by the S-SSB; or

the value of the identifier of the first communication apparatus is the same as a source identifier of the first communication apparatus; or

the value of the identifier of the first communication apparatus is the same as a destination identifier of the first communication apparatus; or

the value of the identifier of the first communication apparatus is the same as a combination of the source identifier and the destination identifier of the first communication apparatus.

10. The method according to any one of claims 1 to 9, wherein the $i^{th}$ sidelink information is the S-SSB, and the $i^{th}$ sidelink information indicates the identifier of the first communication apparatus; and
the identifier of the first communication apparatus is carried in any one or more of the following:

a physical sidelink broadcast channel PSBCH comprised in the S-SSB; or
a physical sidelink broadcast channel PSBCH DMRS comprised in the S-SSB; or
a sidelink secondary synchronization signal S-SSS sequence comprised in the S-SSB; or
a sidelink primary synchronization signal P-SSS sequence comprised in the S-SSB.

11. The method according to any one of claims 1 to 10, wherein the $i^{th}$ sidelink information is used for beam failure recovery or candidate beam identification; and
the N time units are configured or pre-configured, or the $i^{th}$ sidelink information comprises third indication information, and the third indication information indicates that the $i^{th}$ sidelink information is used for beam failure recovery or candidate beam identification.

12. The method according to claim 11, wherein the $j^{th}$ group of symbols is used for a beam failure recovery request; and
the N groups of symbols are configured or pre-configured, or the $j^{th}$ group of symbols carries fourth indication information, and the fourth indication information indicates that the $j^{th}$ group of symbols is used for the beam failure recovery request.

13. The method according to claim 12, wherein the method further comprises:

sending, by the first communication apparatus, a beam failure recovery response on the $j^{th}$ time domain resource in the N time domain resources, wherein the N time domain resources are in one-to-one correspondence with the N time units, or the N time domain resources are in one-to-one correspondence with the N groups of symbols; and the N time domain resources are configured or pre-configured, or the $j^{th}$ time domain resource carries fifth indication information, and the fifth indication information indicates that the $j^{th}$ time domain resource is used for the beam failure recovery response.

14. The method according to any one of claims 1 to 13, wherein the method further comprises:

sending, by the first communication apparatus, the $i^{th}$ sidelink information on an $i^{th}$ time resource in P time resources, wherein the $i^{th}$ sidelink information is used for beam failure detection; and

the P time resources are configured or pre-configured, or the $i^{th}$ sidelink information comprises sixth indication information, and the sixth indication information indicates that the $i^{th}$ sidelink information carried on the $i^{th}$ time resource is used for beam failure detection.

15. The method according to any one of claims 11 to 14, wherein

the $i^{th}$ sidelink information is the S-SSB, and the third indication information, the fourth indication information, the fifth indication information, or the sixth indication information is carried in one or more of a PSBCH, a PSBCH DMRS, an S-SSS, or a P-SSS; or
the $i^{th}$ sidelink information is the SL-CSI-RS, and the third indication information, the fourth indication information, the fifth indication information, or the sixth indication information is determined based on a time domain resource and/or a frequency domain resource carrying the SL-CSI-RS.

16. The method according to any one of claims 1 to 15, wherein a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

17. A communication method, comprising:

receiving, by a second communication apparatus, $i^{th}$ sidelink information in an $i^{th}$ time unit in N time units, wherein the sidelink information comprises an S-SSB and/or an SL-CSI-RS, a value of i is 0 to N-1, and N is an integer greater than 1; and
sending, by the second communication apparatus, first indication information on a $j^{th}$ group of symbols, wherein the first indication information indicates $j^{th}$ sidelink information, a value of j is 0 to N-1, the N time units are in one-to-one correspondence with N groups of symbols, and the N groups of symbols are located in a PSFCH.

18. The method according to claim 17, wherein
in time domain, the N groups of symbols are located after the last time unit in the N time units.

19. The method according to claim 17 or 18, wherein
at least two of the N groups of symbols are located in a same slot.

20. The method according to any one of claims 17 to 19, wherein the method further comprises:
sending or receiving, by the second communication apparatus, direct communication request DCR information on a $j^{th}$ time domain resource in N time domain resources, wherein the N time domain resources are in one-to-one correspondence with the N time units, or the N time domain resources are in one-to-one correspondence with the N groups of symbols.

21. The method according to claim 20, wherein the method further comprises:
sending or receiving, by the second communication apparatus, resource indication information associated with the DCR information, wherein the resource indication information indicates a resource that carries response information of the DCR information.

22. The method according to any one of claims 17 to 21, wherein the method further comprises:
sending, by the second communication apparatus, second indication information on a $k^{th}$ group of symbols in the N groups of symbols, wherein the second indication information indicates $k^{th}$ sidelink information, a value of k is 0 to N-1, and k is different from j.

23. The method according to claim 22, wherein

the first indication information comprises a first field, and the first field indicates that signal quality of the $j^{th}$ sidelink information is superior to signal quality of other sidelink information; or
the second indication information comprises a second field, and the second field indicates that signal quality of the $k^{th}$ sidelink information is superior to signal quality of other sidelink information.

24. The method according to any one of claims 17 to 23, wherein the $i^{th}$ sidelink information is from a first communication apparatus, and the first indication information comprises at least one of the following:

an identifier of the first communication apparatus, an identifier of the second communication apparatus, or an index of the $j^{th}$ sidelink information.

25. The method according to any one of claims 17 to 24, wherein the $i^{th}$ sidelink information is the S-SSB, and the $i^{th}$ sidelink information indicates the identifier of the first communication apparatus; and
a value of the identifier of the first communication apparatus meets any one of the following:

the value of the identifier of the first communication apparatus is the same as a value of a sidelink synchronization signal identifier SL-SSID corresponding to the S-SSB; or
the value of the identifier of the first communication apparatus is determined based on a frequency-domain position and/or a time-domain position occupied by the S-SSB; or
the value of the identifier of the first communication apparatus is the same as a source identifier of the first communication apparatus; or
the value of the identifier of the first communication apparatus is the same as a destination identifier of the first communication apparatus; or
the value of the identifier of the first communication apparatus is the same as a combination of the source identifier and the destination identifier of the first communication apparatus.

26. The method according to any one of claims 17 to 25, wherein the $i^{th}$ sidelink information is the S-SSB, and the $i^{th}$ sidelink information indicates the identifier of the first communication apparatus; and
the identifier of the first communication apparatus is carried in any one or more of the following:

a physical sidelink broadcast channel PSBCH comprised in the S-SSB; or
a physical sidelink broadcast channel PSBCH DMRS comprised in the S-SSB; or
a sidelink secondary synchronization signal S-SSS sequence comprised in the S-SSB; or
a sidelink primary synchronization signal P-SSS sequence comprised in the S-SSB.

27. The method according to any one of claims 17 to 26, wherein the $i^{th}$ sidelink information is used for beam failure recovery or candidate beam identification; and
the N time units are configured or pre-configured, or the $i^{th}$ sidelink information comprises third indication information, and the third indication information indicates that the $i^{th}$ sidelink information is used for beam failure recovery or candidate beam identification.

28. The method according to claim 27, wherein the $j^{th}$ group of symbols is used for a beam failure recovery request; and
the N groups of symbols are configured or pre-configured, or the $j^{th}$ group of symbols carries fourth indication information, and the fourth indication information indicates that the $j^{th}$ group of symbols is used for the beam failure recovery request.

29. The method according to claim 28, wherein the method further comprises:

receiving, by the second communication apparatus, a beam failure recovery response on the $j^{th}$ time domain resource in the N time domain resources, wherein the N time domain resources are in one-to-one correspondence with the N time units, or the N time domain resources are in one-to-one correspondence with the N groups of symbols; and
the N time domain resources are configured or pre-configured, or the $j^{th}$ time domain resource carries fifth indication information, and the fifth indication information indicates that the $j^{th}$ time domain resource is used for the beam failure recovery response.

30. The method according to any one of claims 17 to 29, wherein the method further comprises:

receiving, by the second communication apparatus, the $i^{th}$ sidelink information on an $i^{th}$ time resource in P time resources, wherein the $i^{th}$ sidelink information is used for beam failure detection; and
the P time resources are configured or pre-configured, or the $i^{th}$ sidelink information comprises sixth indication information, and the sixth indication information indicates that the $i^{th}$ sidelink information carried on the $i^{th}$ time resource is used for beam failure detection.

31. The method according to any one of claims 17 to 30, wherein

the i<sup>th</sup> sidelink information is the S-SSB, and the third indication information, the fourth indication information, the fifth indication information, or the sixth indication information is carried in one or more of a PSBCH, a PSBCH DMRS, an S-SSS, or a P-SSS; or

the i<sup>th</sup> sidelink information is the SL-CSI-RS, and the third indication information, the fourth indication information, the fifth indication information, or the sixth indication information is determined based on a time domain resource and/or a frequency domain resource carrying the SL-CSI-RS.

32. The method according to any one of claims 17 to 31, wherein a frequency-domain position occupied by the first indication information on the j<sup>th</sup> group of symbols is determined based on the identifier of the first communication apparatus; and/or a code-domain position occupied by the first indication information on the j<sup>th</sup> group of symbols is determined based on the identifier of the first communication apparatus.

33. A communication apparatus, comprising a transceiver unit and a processing unit, wherein

the processing unit is configured to determine i<sup>th</sup> sidelink information;
the transceiver unit is configured to send the i<sup>th</sup> sidelink information in an i<sup>th</sup> time unit in N time units, wherein the sidelink information comprises a sidelink synchronization signal block S-SSB and/or a sidelink channel state information reference signal SL-CSI-RS, a value of i is 0 to N-1, and N is an integer greater than 1; and
the transceiver unit is further configured to receive first indication information on a j<sup>th</sup> group of symbols in N groups of symbols, wherein the first indication information indicates j<sup>th</sup> sidelink information, a value of j is 0 to N-1, the N time units are in one-to-one correspondence with the N groups of symbols, and the N groups of symbols are located in a physical sidelink feedback channel PSFCH.

34. The apparatus according to claim 33, wherein
in time domain, the N groups of symbols are located after the last time unit in the N time units.

35. The apparatus according to claim 33 or 34, wherein
at least two of the N groups of symbols are located in a same slot.

36. The apparatus according to any one of claims 33 to 35, wherein the transceiver unit is further configured to send or receive direct communication request DCR information on a j<sup>th</sup> time domain resource in N time domain resources, wherein the N time domain resources are in one-to-one correspondence with the N time units, or the N time domain resources are in one-to-one correspondence with the N groups of symbols.

37. The apparatus according to claim 36, wherein the transceiver unit is further configured to send or receive resource indication information associated with the DCR information, wherein the resource indication information indicates a resource that carries response information of the DCR information.

38. The apparatus according to any one of claims 33 to 37, wherein the transceiver unit is further configured to receive second indication information on a k<sup>th</sup> group of symbols in the N groups of symbols, wherein the second indication information indicates k<sup>th</sup> sidelink information, a value of k is 0 to N-1, and k is different from j.

39. The apparatus according to claim 38, wherein

the first indication information comprises a first field, and the first field indicates that signal quality of the j<sup>th</sup> sidelink information is superior to signal quality of other sidelink information; or
the second indication information comprises a second field, and the second field indicates that signal quality of the k<sup>th</sup> sidelink information is superior to signal quality of other sidelink information.

40. The apparatus according to any one of claims 33 to 39, wherein the first indication information is from a second communication apparatus, and the first indication information comprises at least one of the following:
an identifier of the first communication apparatus, an identifier of the second communication apparatus, or an index of the j<sup>th</sup> sidelink information.

41. The apparatus according to any one of claims 33 to 40, wherein the i<sup>th</sup> sidelink information is the S-SSB, and the i<sup>th</sup> sidelink information indicates the identifier of the first communication apparatus; and
a value of the identifier of the first communication apparatus meets any one of the following:

the value of the identifier of the first communication apparatus is the same as a value of a sidelink synchronization signal identifier SL-SSID corresponding to the S-SSB; or

the value of the identifier of the first communication apparatus is determined based on a frequency-domain position and/or a time-domain position occupied by the S-SSB; or

the value of the identifier of the first communication apparatus is the same as a source identifier of the first communication apparatus; or

the value of the identifier of the first communication apparatus is the same as a destination identifier of the first communication apparatus; or

the value of the identifier of the first communication apparatus is the same as a combination of the source identifier and the destination identifier of the first communication apparatus.

42. The apparatus according to any one of claims 33 to 41, wherein the $i^{th}$ sidelink information is the S-SSB, and the $i^{th}$ sidelink information indicates the identifier of the first communication apparatus; and
the identifier of the first communication apparatus is carried in any one or more of the following:

a physical sidelink broadcast channel PSBCH comprised in the S-SSB; or
a physical sidelink broadcast channel PSBCH DMRS comprised in the S-SSB; or
a sidelink secondary synchronization signal S-SSS sequence comprised in the S-SSB; or
a sidelink primary synchronization signal P-SSS sequence comprised in the S-SSB.

43. The apparatus according to any one of claims 33 to 42, wherein the $i^{th}$ sidelink information is used for beam failure recovery or candidate beam identification; and
the N time units are configured or pre-configured, or the $i^{th}$ sidelink information comprises third indication information, and the third indication information indicates that the $i^{th}$ sidelink information is used for beam failure recovery or candidate beam identification.

44. The apparatus according to claim 43, wherein the $j^{th}$ group of symbols is used for a beam failure recovery request; and
the N groups of symbols are configured or pre-configured, or the $j^{th}$ group of symbols carries fourth indication information, and the fourth indication information indicates that the $j^{th}$ group of symbols is used for the beam failure recovery request.

45. The apparatus according to claim 44, wherein

the transceiver unit is further configured to send a beam failure recovery response on the $j^{th}$ time domain resource in the N time domain resources, wherein the N time domain resources are in one-to-one correspondence with the N time units, or the N time domain resources are in one-to-one correspondence with the N groups of symbols; and
the N time domain resources are configured or pre-configured, or the $j^{th}$ time domain resource carries fifth indication information, and the fifth indication information indicates that the $j^{th}$ time domain resource is used for the beam failure recovery response.

46. The apparatus according to any one of claims 33 to 45, wherein

the transceiver unit is further configured to send the $i^{th}$ sidelink information on an $i^{th}$ time resource in P time resources, wherein the $i^{th}$ sidelink information is used for beam failure detection; and
the P time resources are configured or pre-configured, or the $i^{th}$ sidelink information comprises sixth indication information, and the sixth indication information indicates that the $i^{th}$ sidelink information carried on the $i^{th}$ time resource is used for beam failure detection.

47. The apparatus according to any one of claims 33 to 46, wherein

the $i^{th}$ sidelink information is the S-SSB, and the third indication information, the fourth indication information, the fifth indication information, or the sixth indication information is carried in one or more of a PSBCH, a PSBCH DMRS, an S-SSS, or a P-SSS; or
the $i^{th}$ sidelink information is the SL-CSI-RS, and the third indication information, the fourth indication information, the fifth indication information, or the sixth indication information is determined based on a time domain resource and/or a frequency domain resource carrying the SL-CSI-RS.

48. The apparatus according to any one of claims 33 to 47, wherein a frequency-domain position occupied by the first indication information on the j$^{th}$ group of symbols is determined based on the identifier of the first communication apparatus; and/or a code-domain position occupied by the first indication information on the j$^{th}$ group of symbols is determined based on the identifier of the first communication apparatus.

49. A communication apparatus, comprising a transceiver unit and a processing unit, wherein

the transceiver unit is configured to receive i$^{th}$ sidelink information in an i$^{th}$ time unit in N time units, wherein the sidelink information comprises an S-SSB and/or an SL-CSI-RS, a value of i is 0 to N-1, and N is an integer greater than 1;
the processing unit is configured to determine first indication information; and
the transceiver unit is further configured to send the first indication information on a j$^{th}$ group of symbols, wherein the first indication information indicates j$^{th}$ sidelink information, a value of j is 0 to N-1, the N time units are in one-to-one correspondence with N groups of symbols, and the N groups of symbols are located in a PSFCH.

50. The apparatus according to claim 49, wherein
in time domain, the N groups of symbols are located after the last time unit in the N time units.

51. The apparatus according to claim 49 or 50, wherein
at least two of the N groups of symbols are located in a same slot.

52. The apparatus according to any one of claims 49 to 51, wherein the transceiver unit is further configured to send or receive direct communication request DCR information on a j$^{th}$ time domain resource in N time domain resources, wherein the N time domain resources are in one-to-one correspondence with the N time units, or the N time domain resources are in one-to-one correspondence with the N groups of symbols.

53. The apparatus according to claim 52, wherein the transceiver unit is further configured to send or receive resource indication information associated with the DCR information, wherein the resource indication information indicates a resource that carries response information of the DCR information.

54. The apparatus according to any one of claims 49 to 53, wherein the transceiver unit is further configured to send second indication information on a k$^{th}$ group of symbols in the N groups of symbols, wherein the second indication information indicates k$^{th}$ sidelink information, a value of k is 0 to N-1, and k is different from j.

55. The apparatus according to claim 54, wherein

the first indication information comprises a first field, and the first field indicates that signal quality of the j$^{th}$ sidelink information is superior to signal quality of other sidelink information; or
the second indication information comprises a second field, and the second field indicates that signal quality of the k$^{th}$ sidelink information is superior to signal quality of other sidelink information.

56. The apparatus according to any one of claims 49 to 55, wherein the i$^{th}$ sidelink information is from a first communication apparatus, and the first indication information comprises at least one of the following:

an identifier of the first communication apparatus, an identifier of the second communication apparatus, or an index of the j$^{th}$ sidelink information.

57. The apparatus according to any one of claims 49 to 56, wherein the i$^{th}$ sidelink information is the S-SSB, and the i$^{th}$ sidelink information indicates the identifier of the first communication apparatus; and
a value of the identifier of the first communication apparatus meets any one of the following:

the value of the identifier of the first communication apparatus is the same as a value of a sidelink synchronization signal identifier SL-SSID corresponding to the S-SSB; or
the value of the identifier of the first communication apparatus is determined based on a frequency-domain position and/or a time-domain position occupied by the S-SSB; or
the value of the identifier of the first communication apparatus is the same as a source identifier of the first communication apparatus; or
the value of the identifier of the first communication apparatus is the same as a destination identifier of the first communication apparatus; or

the value of the identifier of the first communication apparatus is the same as a combination of the source identifier and the destination identifier of the first communication apparatus.

58. The apparatus according to any one of claims 49 to 57, wherein the $i^{th}$ sidelink information is the S-SSB, and the $i^{th}$ sidelink information indicates the identifier of the first communication apparatus; and
the identifier of the first communication apparatus is carried in any one or more of the following:

a physical sidelink broadcast channel PSBCH comprised in the S-SSB; or
a physical sidelink broadcast channel PSBCH DMRS comprised in the S-SSB; or
a sidelink secondary synchronization signal S-SSS sequence comprised in the S-SSB; or
a sidelink primary synchronization signal P-SSS sequence comprised in the S-SSB.

59. The apparatus according to any one of claims 49 to 58, wherein the $i^{th}$ sidelink information is used for beam failure recovery or candidate beam identification; and
the N time units are configured or pre-configured, or the $i^{th}$ sidelink information comprises third indication information, and the third indication information indicates that the $i^{th}$ sidelink information is used for beam failure recovery or candidate beam identification.

60. The apparatus according to claim 59, wherein the $j^{th}$ group of symbols is used for a beam failure recovery request; and
the N groups of symbols are configured or pre-configured, or the $j^{th}$ group of symbols carries fourth indication information, and the fourth indication information indicates that the $j^{th}$ group of symbols is used for the beam failure recovery request.

61. The apparatus according to claim 60, wherein

the transceiver unit is further configured to receive a beam failure recovery response on the $j^{th}$ time domain resource in the N time domain resources, wherein the N time domain resources are in one-to-one correspondence with the N time units, or the N time domain resources are in one-to-one correspondence with the N groups of symbols; and
the N time domain resources are configured or pre-configured, or the $j^{th}$ time domain resource carries fifth indication information, and the fifth indication information indicates that the $j^{th}$ time domain resource is used for the beam failure recovery response.

62. The apparatus according to any one of claims 49 to 61, wherein

the transceiver unit is further configured to receive the $i^{th}$ sidelink information on an $i^{th}$ time resource in P time resources, wherein the $i^{th}$ sidelink information is used for beam failure detection; and
the P time resources are configured or pre-configured, or the $i^{th}$ sidelink information comprises sixth indication information, and the sixth indication information indicates that the $i^{th}$ sidelink information carried on the $i^{th}$ time resource is used for beam failure detection.

63. The apparatus according to any one of claims 49 to 62, wherein

the $i^{th}$ sidelink information is the S-SSB, and the third indication information, the fourth indication information, the fifth indication information, or the sixth indication information is carried in one or more of a PSBCH, a PSBCH DMRS, an S-SSS, or a P-SSS; or
the $i^{th}$ sidelink information is the SL-CSI-RS, and the third indication information, the fourth indication information, the fifth indication information, or the sixth indication information is determined based on a time domain resource and/or a frequency domain resource carrying the SL-CSI-RS.

64. The apparatus according to any one of claims 49 to 63, wherein a frequency-domain position occupied by the first indication information on the $j^{th}$ group of symbols is determined based on the identifier of the first communication apparatus; and/or a code-domain position occupied by the first indication information on the $j^{th}$ group of symbols is determined based on the identifier of the first communication apparatus.

65. A communication apparatus, comprising at least one processor, wherein the at least one processor is coupled to a memory;

the memory is configured to store a program or instructions; and

the at least one processor is configured to execute the program or the instructions, to enable the apparatus to implement the method according to any one of claims 1 to 16, or enable the apparatus to implement the method according to any one of claims 17 to 32.

66. A computer-readable storage medium, wherein the medium stores instructions, and when the instructions are executed by a computer, the method according to any one of claims 1 to 32 is implemented.

67. A computer program product, comprising instructions, wherein when the instructions are run on a computer, the computer is enabled to perform the method according to any one of claims 1 to 32.

68. A chip, wherein the chip comprises a processor and a communication interface; and

the communication interface is coupled to the processor, and the processor is configured to run a computer program or instructions, to implement the method according to any one of claims 1 to 32.

69. A communication system, wherein the communication system comprises a first communication apparatus and a second communication apparatus; and

the first communication apparatus is configured to perform the method according to any one of claims 1 to 16, and the second communication apparatus is configured to perform the method according to any one of claims 17 to 32.

Base station

Uplink-downlink between the device 1 and the base station

Sidelink between the devices

Device 1

Device 2

FIG. 1a

Sidelink

PC5 interface

UE 1

UE 2

FIG. 1b

V2V

V2P

V2I/V2N

FIG. 1c

FIG. 2a

FIG. 2b

FIG. 3a

FIG. 3b

FIG. 4a

FIG. 4b

FIG. 5a

| PSBCH (AGC) | S-PSS | S-PSS | S-SSS | S-SSS | PSBCH | PSBCH | PSBCH | PSBCH | PSBCH | PSBCH | PSBCH | PSBCH | GAP |

FIG. 5b

UE-1                                            UE-2

```
┌─────────────────────┐         ┌─────────────────────────┐
│ 2. A V2X application│         │ 1. Destination layer-2  │
│   layer provides    │         │ (Layer-2) ID for receiving│
│ application information│      │ information by the UE-2 │
│   for PC5 unicast   │         │                         │
│   communication     │         │                         │
└─────────────────────┘         └─────────────────────────┘
```

3. Direct communication
request (broadcast or unicast)

4. Security establishment

5. Direct communication accept

6. V2X service data over a unicast link

FIG. 5c

| 0 | 1 | 2 | 3 | 4 | 5 | 6 | 7 | 8 | 9 | 10 | 11 | 12 | 13 |

PSFCH period
being 1

PSFCH
period being 2

Resource
pool

PSFCH period
being 4

One SL
transmission slot

PSFCH

PSSCH

GAP

FIG. 6a

58

PRB | 0 | 1 | 2 | ... | 11 | 12 | 13 | Bitmap

| PRB | Bitmap |
|---|---|
| 0 | 1 |
| 1 | 1 |
| 2 | 1 |
| 3 | 1 |
| 4 | 0 |
| 5 | 0 |
| 6 | 0 |
| 7 | 0 |
| 8 | 0 |
| 9 | 0 |
| 10 | 1 |
| 11 | 1 |
| 12 | 0 |
| 13 | 0 |
| 14 | 0 |
| 15 | 0 |
| 16 | 0 |
| 17 | 0 |
| 18 | 0 |
| 19 | 0 |
| 20 | 0 |
| 21 | 0 |
| 22 | 0 |
| 23 | 1 |
| 24 | 1 |
| 25 | 0 |
| 26 | 0 |
| 27 | 0 |
| 28 | 0 |
| 29 | 0 |

☒ PSFCH resource

FIG. 6b

First communication apparatus

Second communication apparatus

S701. Send $i^{th}$ sidelink information in an $i^{th}$ time unit in N time units

S702. Send first indication information on a $j^{th}$ group of symbols in N groups of symbols

FIG. 7

FIG. 8a

FIG. 8b

FIG. 8c

FIG. 8d

FIG. 9

The SSB corresponds to feedback and a transmission window

SSB 0  SSB 1  SSB 2  SSB 3

PSFCH 0  PSFCH 1

Window 0  Window 1  Window 2  Window 3

FIG. 10

FIG. 11

FIG. 12

FIG. 13

FIG. 14

## INTERNATIONAL SEARCH REPORT

| | International application No. |
|---|---|
| | **PCT/CN2024/074599** |

**A. CLASSIFICATION OF SUBJECT MATTER**

H04W 92/18(2009.01)i; H04W 72/12(2023.01)i

According to International Patent Classification (IPC) or to both national classification and IPC

**B. FIELDS SEARCHED**

Minimum documentation searched (classification system followed by classification symbols)

IPC: H04W92/-, H04W72/-

Documentation searched other than minimum documentation to the extent that such documents are included in the fields searched

Electronic data base consulted during the international search (name of data base and, where practicable, search terms used)

CNTXT, CNABS, CNKI: S-SSB, SL-CSI-RS, 时间, 符号, PSFCH, SSB, CSI-RS, 反馈, 侧行; VEN, USTXT, WOTXT, EPTXT, 3GPP: S-SSB, SL-CSI-RS, time, symbol, PSFCH, SSB, CSI-RS, feedback, side link

**C. DOCUMENTS CONSIDERED TO BE RELEVANT**

| Category* | Citation of document, with indication, where appropriate, of the relevant passages | Relevant to claim No. |
|---|---|---|
| Y | CN 112866949 A (HUAWEI TECHNOLOGIES CO., LTD.) 28 May 2021 (2021-05-28) description, paragraphs [0078]-[0081], [0093] and [0117]-[0118] | 1-69 |
| Y | CN 114982179 A (LG ELECTRONICS INC.) 30 August 2022 (2022-08-30) description, paragraphs [0117] and [0270] | 1-69 |
| Y | CN 111867032 A (SHANGHAI LANGBO COMMUNICATION TECHNOLOGY CO., LTD.) 30 October 2020 (2020-10-30) description, paragraphs [0156] and [0165] | 1-69 |
| A | US 2022399917 A1 (SAMSUNG ELECTRONICS CO., LTD.) 15 December 2022 (2022-12-15) entire document | 1-69 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2024** | **26 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 654 746 A1

## INTERNATIONAL SEARCH REPORT
### Information on patent family members

International application No.

**PCT/CN2024/074599**

| Patent document cited in search report | | | Publication date (day/month/year) | Patent family member(s) | | | Publication date (day/month/year) |
|---|---|---|---|---|---|---|---|
| CN | 112866949 | A | 28 May 2021 | CN | 112866949 | B | 12 April 2022 |
| CN | 114982179 | A | 30 August 2022 | WO | 2021101308 | A1 | 27 May 2021 |
| | | | | JP | 2023503911 | A | 01 February 2023 |
| | | | | KR | 20220104761 | A | 26 July 2022 |
| | | | | EP | 4064598 | A1 | 28 September 2022 |
| | | | | EP | 4064598 | A4 | 04 January 2023 |
| | | | | US | 2022407652 | A1 | 22 December 2022 |
| | | | | CN | 114982179 | B | 10 November 2023 |
| CN | 111867032 | A | 30 October 2020 | CN | 111867032 | B | 21 March 2023 |
| US | 2022399917 | A1 | 15 December 2022 | KR | 20210063170 | A | 01 June 2021 |
| | | | | EP | 4050810 | A1 | 31 August 2022 |
| | | | | EP | 4050810 | A4 | 30 November 2022 |
| | | | | WO | 2021101196 | A1 | 27 May 2021 |

Form PCT/ISA/210 (patent family annex) (July 2022)

**EP 4 654 746 A1**

**REFERENCES CITED IN THE DESCRIPTION**

**Patent documents cited in the description**

- CN 202310153386

- CN 202310412871